(19) **Europäisches Patentamt**
**European Patent Office**
**Office européen des brevets**

(11) **EP 1 916 783 A1**

(12) **EUROPEAN PATENT APPLICATION**
published in accordance with Art. 153(4) EPC

(43) Date of publication:
30.04.2008 Bulletin 2008/18

(51) Int Cl.:
*H04B 7/26* (2006.01)   *H04B 1/707* (2006.01)
*H04J 11/00* (2006.01)   *H04Q 7/22* (2006.01)
*H04Q 7/28* (2006.01)   *H04Q 7/38* (2006.01)

(21) Application number: 06782047.2

(22) Date of filing: 31.07.2006

(86) International application number:
PCT/JP2006/315169

(87) International publication number:
WO 2007/015466 (08.02.2007 Gazette 2007/06)

(84) Designated Contracting States:
DE GB

(30) Priority: 01.08.2005 JP 2005223373
01.08.2005 JP 2005223374
01.08.2005 JP 2005223375

(71) Applicant: Sharp Kabushiki Kaisha
Osaka-shi, Osaka 545-8522 (JP)

(72) Inventors:
• **ISHIKURA, Katsutoshi**
**Chiba-chi,**
**Chiba 261-0004 (JP)**
• **FUKUMASA, Hidenobu**
**Narashino-shi,**
**Chiba 275-0015 (JP)**

(74) Representative: **Müller - Hoffmann & Partner**
**Patentanwälte,**
**Innere Wiener Strasse 17**
**81667 München (DE)**

(54) **CELLULAR MOBILE COMMUNICATION SYSTEM, BASE STATION TRANSMISSION DEVICE AND MOBILE STATION RECEPTION DEVICE IN CELLULAR MOBILE COMMUNICATION SYSTEM, AND BASE STATION SELECTION CONTROL METHOD IN CELLULAR MOBILE COMMUNICATION SYSTEM**

(57)    A cellular mobile communication system has a problem that communication quality is lowered by increase of an attenuation amount of a desired signal and increase of an interfering signal amount at a position apart from a base station and high-speed data communication becomes difficult. To solve this problem, when a mobile station M is at a location D where the radio attenuation is small, the mobile station M uses an OFDM signal to transmit data x, y and z via a traffic channel all at once so that data communication is performed at the maximum communication speed. On the other hand, when the mobile station M moves from the location D to a location E which is far from any of the base stations A, B and C, the mobile station M divides, the data x, y and z into three and, by using a diffusion OFDM signal having a high interference resistance, increases the interference resistance, and transmits data, x, y and z almost simultaneously from the three base stations A, B and C, thereby realizing equivalence of high-speed data transmission.

FIG. 1

**Description**

TECHNICAL FIELD

The present invention relates to a cellular mobile communication system by a cellular system for repeating a single frequency, and more particularly, to a cellular mobile communication system for increasing a communication speed even when communication state is not good such as when interference is large and the like.

Further, the present invention relates to a base station transmission device and a mobile station reception device in a cellular mobile communication system, and more particularly, to a base station transmission device and a mobile station reception device in a cellular mobile communication system for increasing a communication speed even when a communication state is not good such as when interference is large and the like.

Further, the present invention relates to a base station selection control method of a cellular mobile communication system, and more particularly, to a base station selection control method applied to a cellular mobile communication system for increasing a communication speed even when a communication state is not good such as when interference is large and the like.

BACKGROUND ART

Conventionally, a cellular system, in which a service area is divided into cells each having a limited area, a base station is disposed in each cell, and a communication is carried out to mobile stations in the cells, is used as a communication system for mobile phones. In a second generation mobile communication system based on FDMA/TDMA (Frequency Division Multiple Access/Time Division Multiple Access) technology, a method of changing a frequency to be applied depending on cells to prevent the signals of adjacent cells from interfering with each other. In contrast, a third generation mobile communication system based on CDMA (Code Division Multiple Access) technology can use the same frequency even in adjacent cells due to the interference resistance obtained by spectrum diffusion.

In a fourth generation mobile communication system, since a demand for a higher speed data communication is expected, a hopeful view is taken on the use of OFDM (Orthogonal Frequency Division Multiplexing) technology which can carry out a high speed data transmission using wideband signals in a mobile communication environment. However, since OFDM is disadvantageous in a low interference resistance in a system when it is used in a system in which the same frequency is used in adjacent cells, there is proposed a communication system which is provided with a higher interference resistance by combining the OFDM technology and the CDMA technology.

As the above system, there are a diffusion OFDM (Orthogonal Frequency Division Multiplexing) system and an MC-CDMA (Multi-Carrier Code Division Multiple Access) system. These systems employ the ideas of spectrum diffusion and code multiplication based on the OFDM technology.

Here, a system, in which the spectrum diffusion and code multiplication technologies are combined with the OFDM technology as described above and allocated to a plurality of subcarriers and OFDM symbols, is called diffusion OFDM.

Operations of transceivers of the OFDM system and the diffusion OFDM system will be briefly explained below.

First, operations of a transmitter and a receiver of the OFDM system will be explained.

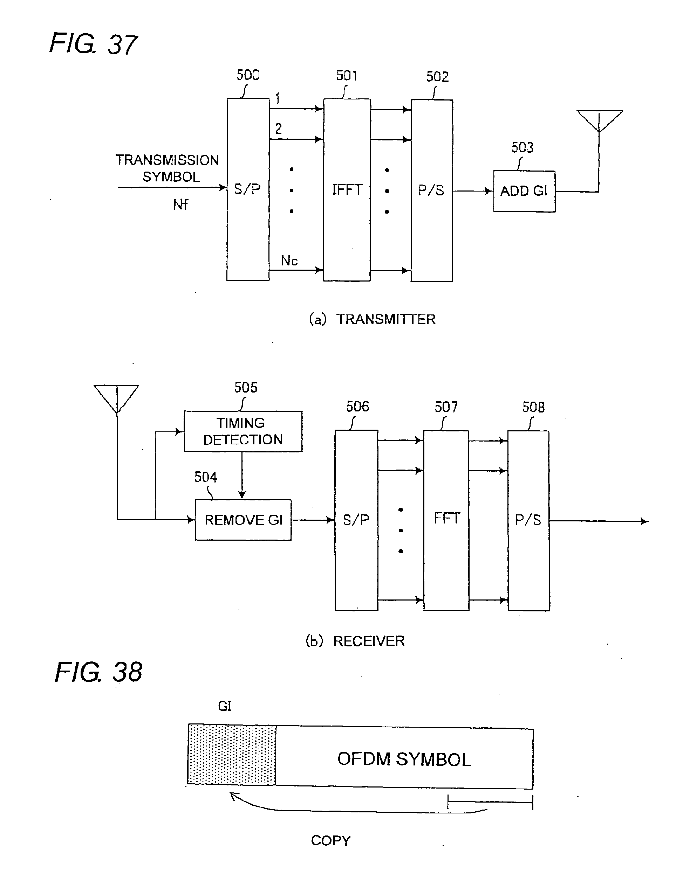

Fig. 37 is a block diagram of the transceiver using the OFDM system, wherein Fig. 37(a) is a block diagram of the transmitter, and Fig. 37 (b) is a block diagram of the receiver.

It is assumed that the number of transmission data symbols per one frame is shown by Nf=NsxNc.

Nc shows the number of subcarriers, and Ns shows the number of OFD symbols. Although pilot symbols for estimating channels are ordinarily included in addition to the above-mentioned, they are omitted here.

The transmission symbols are made parallel for each Nc symbol by a serial/parallel conversion unit (hereinafter, called as "S/P" (Serial/Parallel) 500, the transmission symbols made parallel are made to the subcarrier components thereof, respectively, subjected to inverse FFT by an inverse high speed Fourier Transform unit (hereinafter, called as "IFFT" (Inverse Fast Fourier Transform)) 501, and converted into a time signal train by a parallel/serial conversion unit (hereinafter, called as "P/S"(Parallel/Serial)) 502.

Note that a processing unit of the IFFT processing is set as one symbol of OFDM (this is the same also in FFT processing described below).

In an "AddGI" block 503, a guard interval (hereinafter, called as GI) is added to each one symbol of OFDM.

Fig. 38 explains a disposing relation between the OFDM symbol and GI.

As shown in Fig. 38, GI is data in which the signal in the rear portion of the OFDM symbol is inserted in front of the OFDM symbol. Interference caused by the delay wave of a radio communication path can be prevented by GI.

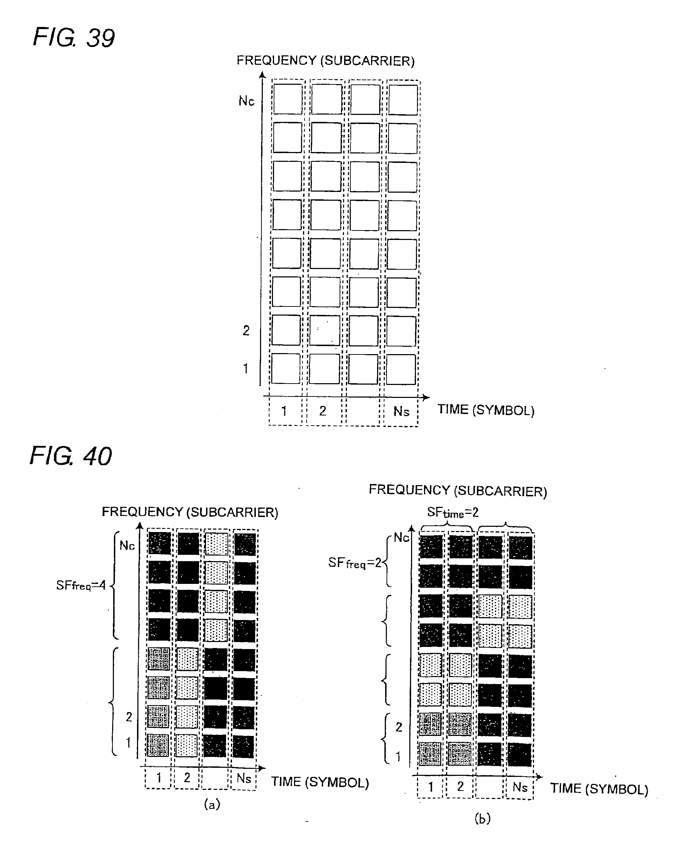

Fig. 39 is a view showing the layout of transmission symbols for transmission signal in one frame in OFDM.

In an example shown in Fig. 39, one frame is composed of Ns pieces of OFDM symbols, and transmission symbols are sequentially disposed in a frequency direction in the OFDM symbols.

In a receiver for receiving the transmission signal, an OFDM symbol is cut out in an FFT processing unit by a "RemoveGI" block 504 under the control of a timing detector 505, the cut-out OFDM symbol is subjected to an FFT processing by a high speed Fouriertransformunit (hereinafter, calledas "FFT (Fast Fourier Transform) ") 507 after it is converted by an S/P converter 506, thereby respective subcarrier components are extracted. Thereafter, the OFDM symbol is subjected to P/S transformation by a P/S 508, thereby a symbol train having the same order as the symbol disposition of a transmission frame can be obtained.

Next, the concept of the diffusion OFDM system will be briefly explained.

In the diffusion OFDM system, the same transmission symbols are disposed throughout a plurality of subcarriers or a plurality of OFDM symbols to carry out diffusion of a frequency region or a time region as shown in Fig. 40. In Fig. 40 (a), the frequency region has a diffusion ratio of 4, and the same data symbol is transmitted in four subcarriers. In Fig. 40(b), both the frequency region and the time region have a diffusion ratio of 2, and the same data symbol is transmitted in two subcarriers and in two OFDM symbols. In these examples, since diffusion is carried out at by the diffusion ratio 4, the transmission speed of the transmission symbol is lowered to 1/4.

As described above, the diffusion OFDM system is a system having a resistance against interference at the sacrifice of the transmission speed of the transmission symbol.

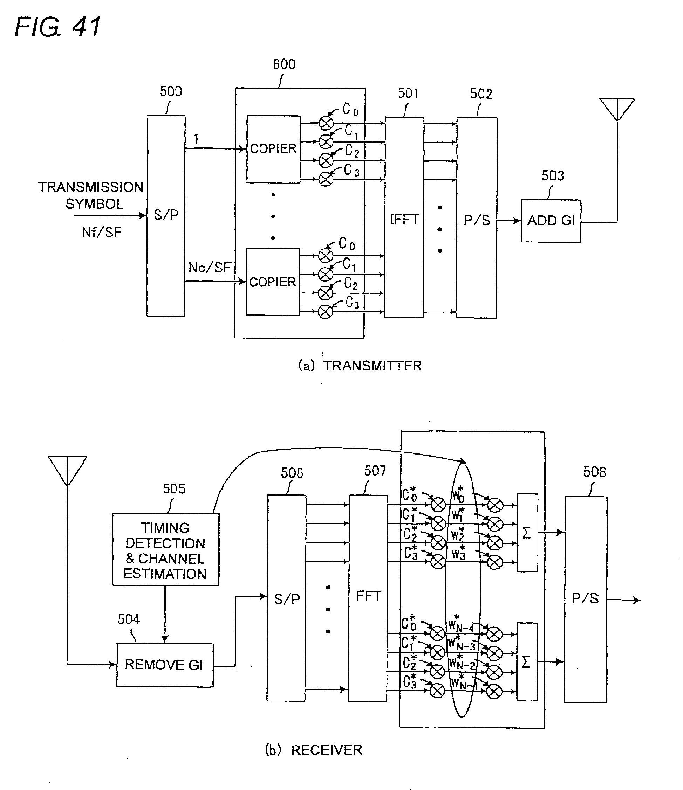

Fig. 41 is a block diagram of the transceiver of the diffusion OFDM system for carrying out frequency region diffusion, wherein Fig. 41 (a) is a block diagram of a transmitter, and Fig. 41(b) is a block diagram of a receiver.

In Fig. 41, the diffusion ratio of the frequency region diffusion is shown by SF. The number of transmission symbols of one frame is made to 1/SF as compared with OFDM.

In the transmitter shown in Fig. 41 (a), the symbols, which are made parallel for each Nc/SF symbol by a S/P block 500, is subj ected to the frequency region diffusion by a frequency region diffusion processing unit 600 and made to the subcarrier components thereof. The frequency region diffusion is carried out by copying one symbol to SF pieces of subcarrier components and multiplying them by a diffusion code. Further, the symbol is subjected to an IFFT 501, P/S conversion 502 and made to a time signal train. In an "AddGI" block 503, a guard interval (hereinafter, called as "GI") is added to each OFDM symbol.

The transmitter has the same arrangement as that of the OFDM system shown in Fig. 37(a) except that the diffusion processing unit 600 for carrying out the frequency region diffusion is inserted in front of the IFFT 501.

On the other hand, the receiver shown in Fig. 41(b) also has the same arrangement except that a frequency region inverse diffusion processing unit 601 for subjecting detected carrier components to inverse diffusion processing is inserted behind an FFT 507. As a result, a symbol train having the same order as the symbol disposition of the transmission frame can be obtained through a P/S converter 508 at a final processing stage.

A cellular mobile communication system of a conventional example or a cellular mobile communication system proposed at present, which makes use of the OFDM and diffusion OFDM systems capable of carrying out a high speed data transmission using a wideband signal in the mobile communication environment described above, will be explained below.

A SCS-MC-CDMA system (refer to "Non-Patent Document 1") using OFDM as a base and a VSF-OFCDM (Variable Spreading Factor-Orthogonal Frequency and Code Division Multiplexing) system (refer to "Non-Patent Document 2") using OFDM as a base likewise are proposed as a fourth generation cellular mobile communication system. The SCS-MC-CDMA system disposes a control channel and a communication channel to different subcarriers on a frequency axis. On the other hand, the VSF-OFCDM system is a method of multiplexing a communication channel diffusion in a time region and a control channel diffusion to both time and frequency regions using an orthogonal code.

Further, in the fourth generation cellular mobile communication system, an adaptive modulation coding system is proposed as a means for obtaining a resistance against noise and other interference signals and securing communication quality in place of a transmission power control for carrying out a data communication to a user in a location having a large amount of attenuation using a larger amount of power.

In the adaptive modulation coding system, the maximum communication speed is increased to a user in a location near to a base station, that is, to a user in a location having a small amount of attenuation by using a multivalue modulation and an error correction code having a high coding ratio, and communication quality is secured to a user in a location such as a boundary of cells and the like having a large amount of attenuation and a large amount of interference by lowering a communication speed by reducing a modulation multivalue number and a coding ratio.

Further, a technology for solving the defects of the respective communication systems using the OFDM system and MC-CDMA system mutually is disclosed in Patent Document 1 ("Japanese Patent Application Laid-Open Publication (JP-A) No. 2004-158901"). The technology is arranged such that whether the OFDM system is used or the MC-CDMA system is used is switched in a transmission slot unit depending on a communication path state between a mobile terminal and a base station in the cellular mobile communication system.

Further, Non-Patent Document 3 discloses a technology of an SC (Synchronous Coherent) -OFDM system as a means for securing communication quality in the cellular mobile communication system making use of the OFDM system. According to the technology, the layout of a base station or a time $T_{GI}$ is set so that the distance I obtained by multiplying the time $T_{GI}$ of GI described above, which is a difference of transmission delay up to a mobile station, by the transmission speed C of a radio wave does not exceed the distance D between base stations and a plurality of base stations carry out a transmission in synchronism. As a result, it is possible to carry out interference relaxation demodulation such as MMSE (Minimum Mean Square Error) diversity and the like to relax interference between channels and enhance communication quality.

Patent Document 1: Japanese Patent Application Laid-Open No. 2004-158901
Non-Patent Document 1: Nagate and et al, "An Examination of Common Control Channel Synchronization in SCS-MC-CDMA System", General Assembly of The Institute of Electronics, Information and Communication Engineers, B-5-81, 2004
Non-Patent Document 2: Kisiyama et al, "Result of Outdoor Experiment of Adaptive Modulation/ Demodulation/ Channel Coding in Downlink VSF-OFCDM Broadband Wireless Access", General Assembly of The Institute of Electronics, Information and Communication Engineers, B-5-94, 2004
Non-Patent Document 3: Kevin L. Baum, "Synchronous Coherent Othogonal Frequency Division Multiplexing System, Method, Software and Device" VTC'99, pp 2222-2226, 1998

DISCLOSURE OF THE INVENTION

PROBLEMS TO BE SOLVED BY THE INVENTION

However, any of the conventional examples, which uses the OFDM and diffusion OFDM systems capable of carrying out a high speed data transmission using the wideband signal in the mobile communication environment described above, employs a system for giving priority to securement of communication quality at the sacrifice of a data communication speed to a user in a location having a large amount of attenuation and a large amount of interference, from which a problem arises in that the maximum communication speed cannot be increased.

Accordingly, an object of the present invention, which is proposed to solve the above problem, is to provide a cellular mobile communication system, a transmission device of a base station and a mobile station reception device used in the cellular mobile communication system, and a base station selection control method applied for the cellular mobile communication system to solve the problem in that communication quality is lowered in a location far from a base station due to an increase of an amount of attenuation of a desired signal and an increase an interference signal and thus a high speed data communication becomes difficult in the cellular mobile communication system.

MEANS FOR SOLVING THE PROBLEMS

To achieve the above object, the present invention employs the arrangements described below as well as has the following characteristics.

A cellular mobile communication system according to the present invention in which a mobile station can approximately simultaneously receive radio signals from a plurality of base stations in the vicinity of the mobile station is characterized such that the cellular mobile communication system includes a base station transmitter having a first communication mode for transmitting predetermined communication data amount at an approximately maximum communication speed and a second communication mode for transmitting communication data obtained by dividing the predetermined communication data amount at a predetermined ratio while enhancing communication quality in place of lowering a communication speed, a mobile station receiver capable of receiving transmission data transmitted by the first communication mode and the second communication mode, and a base station controller for carrying out the radio resource control of the overall system including how much data amount is to be distributed to any base stations of the plurality of the base stations when the transmission data from a network including the Internet is transmitted to the mobile station, wherein the first communication mode is a mode for carrying out a communication between a transmitter of one base station of the plurality of base stations and the mobile station receiver, whereas the second communication mode is a mode used when a communication environment condition is not good as compared with the communication environment condition in which the first communication mode is used and is a mode used when the communication data, which are transmitted from a plurality of base stations in the vicinity of the mobile station selected by the base station controller and divided by the base station controller, are approximately simultaneously received by the mobile station receiver and a communication is carried out while securing a predetermined communication speed as compared with the above approximately maximum communication speed.

Further, the cellular mobile communication system according to the present invention is characterized in that the base station transmitter further has a third communication mode as a mode for carrying out a communication between the transmitter of one base station of the plurality of base stations and the mobile station receiver likewise the first communication mode while enhancing communication quality in place of lowering a communication speed likewise the second communication mode without dividing the predetermined communication data amount and transmits transmission data to the mobile station receiver by the third communication mode, and the mobile station receiver receives the transmission data transmitted by the third communication mode.

The cellular mobile communication system according to the present invention is characterized in that the mobile station includes a base station selection means for automatically selecting a plurality of base stations in the vicinity of the mobile station, wherein the base station selection means measures the receiving levels of radio signals from a plurality of base stations, respectively, selects a predetermined number of base stations based on the measured receiving levels, and transmits the receiving levels or the parameters showing communication path quality corresponding to the receiving levels to the base station controller through one or a plurality of base stations of the selected base stations.

The cellular mobile communication system according to the present invention is characterized in that the base station controller includes a base station selection means capable of automatically selecting a plurality of base stations in the vicinity of the mobile station, wherein the base station selection means receives selection information including the receiving levels or the parameters showing the communication path quality corresponding to the receiving levels from the mobile station through a base station and selects a base station based on the selection information.

The cellular mobile communication system according to the present invention is characterized in that after the base station controller selects the base station, the base station controller determines whether or not the communication condition between the base station transmitter and the mobile station receiver is good, and when the base station controller determines that the communication condition is good, the base station controller selects the first communication mode so that a communication is carried out between the base station and the mobile station in the first communication mode, whereas when the base station controller determines that the communication condition is not good, the base station controller selects the third communication mode according to the communication traffic amount in a cell and communication service quality provided with respective mobile station so that a communication is carried out between the selected base station and the mobile station.

The cellular mobile communication system according to the present invention is characterized in that the first communication mode is a communication mode for carrying out a high speed data communication using a wideband signal including an OFDM signal, and the second or third communication mode is a communication mode for carrying out a communication by a signal which is a wideband signal including a diffusion OFDM signal and has a high interference resistance.

The cellular mobile communication system according to the present invention is characterized in that that the first communication mode is a communication mode for carrying out a high speed data communication using a wideband signal including an OFDM signal having a high modulation multivalue number or a high coding ratio, and the second or third communication mode is a communication mode for carrying out a communication by a signal which is a wideband signal including an OFDM signal having a low modulation multivalue number or a low coding ratio and is a signal having a high interference resistance.

The cellular mobile communication system according to the present invention is characterized in that when the diffusion OFDM signal is used in the second or the third communication mode, an interference resistance property is more increased by allocating orthogonal subcarriers having frequencies spaced apart from each other a predetermined interval to a plurality of the same data, respectively and carrying out a frequency diversity reception by transmitting the diffusion OFDM signal and receiving signals passing through communication paths having different characteristics.

The cellular mobile communication system according to the present invention is characterized in that the plurality of base stations have identification numbers for permitting the signals of respective base stations to be received at the same time while being distinguished, respectively, base stations located in the vicinity of respective base stations are grouped so that they do not have the same base station identification number, and the mobile station receiver approximately simultaneously receives a plurality of base stations having the different base station identification numbers.

In the cellular mobile communication system according to the present invention, which includes a plurality of base stations, a mobile station reception device capable of approximately simultaneously receiving radio signals from a plurality of adjacent base station, and a base station controller, the cellular mobile communication system is characterized in that each of the plurality of base stations includes a transmission means for receiving an access request transmitted from the mobile station and transmitting the access request to the base station controller, and the base station controller includes a communication resource determination means for determining how much data amount is to be distributed to any base stations of the plurality of base stations which receive the access request.

The cellular mobile communication system according to the present invention is characterized in that the plurality of base stations, which are grouped so that they do not belong to the same group to which adjacent base stations belong, have base station identification numbers corresponding to the group thereof.

In the base station transmission device in the cellular mobile communication system according to the present invention which is a base station transmission device in a cellular mobile communication system for approximately simultaneously receiving radio signals from a plurality of base stations in the vicinity of a mobile station, the base station transmission device is characterized by including a pilot channel signal creation unit for creating a pilot channel signal for carrying out a channel estimation including the measurement of the receiving levels of the respective base stations, a traffic channel signal creation unit for creating a traffic channel signal for transmitting traffic data, a control channel signal creation unit for creating a control information signal including the destination information of the traffic data, and a synthesization means for creating a synthesized signal by synthesizing the control channel signal created by the control channel signal creation unit and the traffic channel signal created by the traffic channel creation unit, wherein a transmission efficiency is enhanced by creating a transmission signal by multiplexing the pilot channel signal created by the pilot channel signal creation unit and the synthesized signal created by the synthesization means, and the transmission signal is transmitted by switching a first communication mode for transmitting a predetermined communication data amount at an approximately maximum communication speed from one base station of the plurality of base stations, a second communication mode for transmitting communication data obtained by dividing the predetermined communication data amount at a predetermined ratio from the plurality of base stations while enhancing communication quality in place of lowering a communication speed, or a third communication mode for transmitting the predetermined communication data amount from one base station of the plurality of base stations without dividing the predetermined communication data amount likewise the first communication mode while enhancing communication quality in place of lowering a communication speed likewise the second communication mode according to a communication environment state.

The base station transmission device in the cellularmobile communication system according to the present invention is characterized in that the plurality of base stations have identification numbers for permitting the signals of respective base stations to be received at the same time while being distinguished, respectively, base stations located in the vicinity of respective base stations are grouped so that they do not have the same base station identification number, and the mobile station receiver approximately simultaneously receives a plurality of base stations having the different base station identification numbers.

The base station transmission device in the cellular mobile communication system according to the present invention is characterized in that the pilot channel signal creation unit includes a means for multiplying a pilot channel scramble code which is different to each of the plurality of base stations and a pilot pattern for distinguishing a base station having the different base station identification number.

The base station transmission device in the cellular mobile communication system according to the present invention is characterized in that the control channel signal creation unit includes a means for multiplying the control channel scramble code created using an orthogonal code, which corresponds to the scramble code common to the plurality of base stations and to the base station identification number by the control channel symbol in which continuous symbols larger than an orthogonal code length corresponding to the base station identification number have the same value, wherein the control channel signal of a different base station identification number is created such that it is made to a signal having an orthogonal relation.

The base station transmission device in the cellular mobile communication system according to the present invention is characterized in that the traffic channel signal creation unit includes a means for multiplying a traffic channel scramble code different to each of the plurality of the base stations by the traffic channel symbol which have the value of the traffic channel symbol which changes corresponding to traffic data in the first communication mode or in which a plurality of symbols are disposed continuously or at predetermined intervals according to a communication environment state to secure communication quality in the second or third communication mode.

The base station transmission device in the cellularmobile communication system according to the present invention is characterized in that when a pilot channel signal as an OFDM signal is created, a time axis component in the frame of the OFDM signal is shown by i, and a subcarrier component is shown by j, the pilot channel signal creation unit creates a predetermined number of pilot signals so that estimation of an accurate channel gain and measurement of accurate receiving power can be carried out by multiplying a scramble code $x_j^{(1)}$ inherent to the base station having a base station number (1) by a pilot pattern $w_i^{(n(1))}$ corresponding to the base station identification number n (1), to which the base stations are added for each group, while shifting the times of them.

The base station transmission device in the cellular mobile communication system according to the present invention is characterized in that when a time axis component in the frame of the diffusion OFDM signal is shown by i, and a subcarrier component is shown by j, the control channel signal creation unit, which creates a control channel signal as an diffusion OFDM signal, creates a control channel signal as a diffusion OFDM signal obtained by subjecting a control channel symbol $c^{(1)}$ to diffusion processing using a scramble code $y_j$ as a control channel common code, an orthogonal code $w_i^{(n(1))}$ according to a base station identification number n(1) for permitting the signals of respective base stations to be distinguished and simultaneously received, and a scramble code $x_j^{(1)}$ inherent to the base station, and the mobile station receiver obtains the control information by separating the control channel signal from the plurality of the base stations having a different base station identification number.

The base station transmission device in the cellularmobile communication system according to the present invention is characterized in that when a traffic channel signal as an OFDM signal or a diffusion OFDM signal is received, a time axis component in the frame of the OFDM signal or the diffusion OFDM signal is shown by i, and a subcarrier component is shown by j, the traffic channel creation unit carries out creation of a traffic channel signal $(x_j^{(1)} \times d^{(1)})$ as the OFDM signal which is obtained by multiplying traffic channel data $d^{(1)}$ by the scramble code $x_j^{(1)}$ inherent to the base station in the first communication mode and creation of a traffic channel signal as the diffusion OFDM signal which is obtained by subjecting the traffic channel data, in which the traffic channel data $d^{(1)}$ is separated to a plurality of groups, to a frequency diffusion processing using the scramble code $x_j^{(1)}$ inherent to the base station in the second or the third communication mode.

The base station transmission device in the cellular mobile communication system according to the present invention is characterized in that the scramble code $y_j$ as the control channel common code is a scramble code different from the scramble code $x_j^{(1)}$ inherent to the base station.

The base station transmission device in the cellularmobile communication system according to the present invention is characterized by further including a control unit for creating control channel data, wherein the control unit is input with communication mode information from a base station controller for carrying out a selection processing for selecting a base station and a communication mode, creates a communication mode switch signal, and controls the traffic channel signal creation unit.

A mobile station reception device in a cellular mobile communication system according to the present invention for approximately simultaneously receiving radio signals from a plurality of base stations in the vicinity of a mobile station is characterized by including a pilot channel signal processing unit for extracting pilot information including the receiving level measurement and the channel estimation of the base station from a pilot channel signal created using a scramble code which is different depending on abase station and a pilot symbol pattern which is different depending on the identification number of the base station, a traffic channel signal processing unit for creating traffic channel data by processing a traffic channel signal, a control channel signal processing unit for processing control information for receiving control information signal including the destination information of the traffic data and determining whether or not destination information addressed to the mobile station is included, and an integration control unit having base station selection means for creating a communication mode switch control signal input to the traffic channel signal processing unit and selecting a predetermined number of base stations, wherein the transmission signal is transmitted by switching a first communication mode for transmitting a predetermined communication data amount at an approximately maximum communication speed from one base station of the plurality of base stations, a second communication mode for transmitting communication data obtained by dividing the predetermined communication data amount at a predetermined ratio from the plurality of base stations while enhancing communication quality in place of lowering a communication speed, or a third communication mode for transmitting the predetermined communication data amount from one base station of the plurality of base stations without dividing the predetermined communication data amount likewise the first communication mode while enhancing communication quality in place of lowering a communication speed likewise the second communication mode according to a communication environment state.

A mobile station reception device in a cellular mobile communication system according to the present invention is characterized in that the pilot channel signal processing unit estimates a channel gain between a plurality of base stations having a different base station identification number by receiving the pilot created by the pilot channel signal creation unit according to claim 3 or claim 6 and carrying out a communication path estimation using a pilot pattern corresponding to the base station identification number.

A mobile station reception device in a cellular mobile communication system according to the present invention is characterized in that the control channel signal processing unit obtains the control data from the plurality of base stations by receiving the control channel signal created by the control channel signal creation unit according to claim 4 or claim 7, carrying out a signal processing using an orthogonal code corresponding to the scramble code common to the plurality of base stations and the orthogonal code corresponding to a plurality of base station identification numbers to thereby separate the control channel signals from the plurality of base stations having the different base station identification number.

A mobile station reception device in a cellular mobile communication system according to the present invention is characterized in that the traffic channel signal processing unit reproduces the traffic channel data transmitted from the plurality of base stations by receiving the signals approximately simultaneously transmitted from a plurality of base stations in the second communication mode, carrying out weighing using a weight for reducing interference between the signals of the other base stations transmitted approximately simultaneously, and demodulating the signals.

A mobile station reception device in a cellular mobile communication system according to the present invention is characterized in that the traffic channel signal processing unit receives the signals approximately simultaneously transmitted from a plurality of base stations in the second communication mode and outputs the certainty of respective traffic channel data symbols or bits by comparing the combinations of the traffic channel data transmitted from respective base stations with respect to the signal points at which the signals of a plurality of base stations are synthesized.

A mobile station reception device in a cellular mobile communication system according to the present invention is characterized by further including a control channel interference removing unit for creating a control channel signal replica from the control data obtained by the control channel signal processing unit and removing the replica from a received signal, wherein the traffic channel signal processing unit is input with the output from the control channel interference removing unit.

A mobile station reception device in a cellular mobile communication system according to the present invention is characterized in that when a pilot channel signal as an OFDM signal is received, a time axis component in the frame of a diffusion OFDM signal is shown by i, and a subcarrier component is shown by j, the pilot channel signal processing unit calculates the estimated value $h(l', j)$ of a channel gain of a base station 1' to be estimated by multiplying the complex conjugate of a pilot symbol of a base station, which is obtained by multiplying a scramble code $x_j^{(1)}$ inherent to the base station having a base station number (1) by a pilot pattern $w_i^{(n(1))}$ corresponding to the base station identification number n (1), to which the base stations are added for each group, and averaging the product in time.

A mobile station reception device in a cellular mobile communication system according to the present invention is characterized in that when a control channel signal as a diffusion OFDM signal is received, a time axis component in the frame of the diffusion OFDM signal is shown by i, and a subcarrier component is shown by j, the control channel signal processing unit obtains the control channel symbol $c^{(1)}$ by multiplying the respective complex conjugates of a scramble code $y_j$, an orthogonal code $w_i^{(n(1))}$, and a scramble code $x_j^{(1)}$ inherent to the base station by a control channel signal as a diffusion OFDM signal which is obtained by subjecting a control channel symbol $c^{(1)}$ to diffusion processing using a scramble code $y_j$ as a control channel common code, an orthogonal code $w_i^{(n(1))}$ according to a base station identification number n(1) for permitting the signals of respective base stations to be distinguished and simultaneously received, and a scramble code $x_j^{(1)}$ inherent to the base station, and by separating the control channel signal from the plurality of the base stations having a different base station identification number.

A mobile station reception device in a cellular mobile communication system according to the present invention is characterized in that when a traffic channel signal as an OFDM signal or a diffusion OFDM signal is received, a time axis component in the frame of the OFDM signal or the diffusion OFDM signal is shown by i, and a subcarrier component is shown by j, the traffic channel signal processing unit reproduces the traffic channel symbol $d^{(1)}$ by multiplying the complex conjugate of a scramble code $x_j^{(1)}$ inherent to the base station a traffic channel signal $(x_j^{(1)} \times d^{(1)})$ as the OFDM signal which is obtained by multiplying a traffic channel symbol $d^{(1)}$ by the scramble code $x_j^{(1)}$ inherent to the base station in the first communication mode or to a traffic channel signal as the diffusion OFDM signal which is obtained by subjecting the traffic channel symbol, in which the traffic channel symbol $d^{(1)}$ is separated to a plurality of groups, to a frequency diffusion processing using the scramble code $x_j^{(1)}$ inherent to base station in the second or the third communication mode, and further, carrying out an inverse diffusion processing in the second or third communication mode.

In a base station selection control method of a cellular mobile communication system according to the present invention including a plurality of base stations, a mobile station reception device capable of approximately simultaneously receiving radio signals from a plurality of adjacent base stations, and a base station controller, the base station selection control method includes a reception control process of the mobile station reception device when appropriate base stations are selected from the plurality of base stations and further transmission data is received from the base stations which are determined under the control of the base station controller, and a base station selection process of the base station controller having a step of selecting a final base station to be connected corresponding to the traffic amounts and the communication path quality of respective base stations when the mobile station requests an access to the base station controller through one base station or a plurality of base stations according to the reception control process.

A base station selection control method of a cellular mobile communication system according to the present invention is characterized in that the base station selection process of the base station controller includes a step of selecting a base station to be connected corresponding to a real time property, a degree of priority, and communication path quality when the mobile station requests an access to the base station controller through one base station or a plurality of base stations according to the reception control process.

A base station selection control method of a cellular mobile communication system according to the present invention is characterized in that the reception control process of the receiving device of the mobile station includes a step of measuring a communication path state between the plurality of base stations and the mobile station from received signals in which the transmission signals of a plurality of base stations are mixed, a step of selecting one base station or a plurality of base stations based on a result of the step of measuring the communication path state, a step of transmitting an access request to all of or a part of the base stations of the selected base stations, a step of demodulating the control channel signals of all of or a part of the base stations of the selected base stations and determining whether or not the traffic information addressed to a self station is included, and a step of demodulating, when the traffic information addressed to the self station is included, the traffic channel signal of the self station and extracting the traffic information.

A base station selection control method of a cellular mobile communication system according to the present invention is characterized in that, in the plurality of base stations, which are grouped so that they do not belong to the same group to which adjacent base stations belong and which have the base station identification number corresponding to the group, the step of measuring the communication path state is a step of measuring the received signal levels of the base stations having the maximum received signal level of the base stations having the same identification number.

A base station selection control method of a cellular mobile communication system according to the present invention is characterized in that, in the plurality of base stations, which are grouped so that they do not belong to the same group to which adjacent base stations belong and which have the base station identification number corresponding to the group, the step of measuring the communication path state is a step of measuring the timings of the received signals of the base stations having a fastest reception timing of the base stations having the same identification number.

A base station selection control method of a cellular mobile communication system according to the present invention is characterized in that the step of selecting one base station or a plurality of base stations is a step of selecting a predetermined number of the base stations having a received signal level larger than X-Y when the maximum value of the plurality of received signal levels is shown by X and a predetermined threshold value Y is set to X.

A base station selection control method of a cellular mobile communication system according to the present invention is characterized in that the step of selecting one base station or a plurality of base stations is such that a plurality of base stations having the maximum received signal level of the plurality of received signal levels are selected and a predetermined number of base stations are selected from the plurality of selected base stations in the order of the selected base stations having a larger received signal level.

A base station selection control method of a cellular mobile communication system according to the present invention is characterized in that the step of selecting one base station or a plurality of base stations is such that the transmission losses of the plurality of received signal levels are calculated therefrom, respectively and a predetermined number of base stations having a transmission loss smaller than X+Y are selected when a threshold value Y is set to the minimum value X of the calculated transmission losses.

A base station selection control method of a cellular mobile communication system according to the present invention is characterized in that the step of selecting one base station or a plurality of base stations is such that the transmission losses of the plurality of received signal levels are calculated therefrom, respectively and a predetermined number of base stations are selected from the plurality of selected base stations in the order of the selected base stations having a smaller transmission loss of the received signals.

A base station selection control method of a cellular mobile communication system according to the present invention is characterized in that the step of selecting one base station or a plurality of base stations is such that a threshold value Y is set to a time X having a fastest timing of the plurality of reception timings and a predetermined number of base stations having a time of reception timing faster than X+Y is selected.

A base station selection control method of a cellular mobile communication system according to the present invention is characterized in that the step of selecting one base station or a plurality of base stations is such that a predetermined number of base stations are selected from a faster reception timing of the plurality of reception timings.

A base station selection control method of a cellular mobile communication system according to the present invention is characterized in that the step of selecting one base station or a plurality of base stations is such that the transmission delay times of the plurality of reception timings are calculated from the plurality of reception timings, respectively, a threshold value Y is set to the minimum transmission delay time X, and a predetermined number of base stations having a transmission delay time smaller than X+Y are selected.

A base station selection control method of a cellular mobile communication system according to the present invention is characterized in that the step of selecting one base station or a plurality of base stations is such that the transmission delay times of the plurality of reception timings are calculated from the plurality of reception timings and a predetermined number of base stations are selected in the order of the base stations having a smaller transmission delay.

A base station selection control method of a cellular mobile communication system according to the present invention is characterized in that the step of transmitting the access request is a step of transmitting access requests to the respective base stations selected at the step of selecting the one base station or the plurality of base stations, and the step of determining whether or not the traffic information addressed to the self destination is included determines whether or not the traffic information addressed to the self destination is included by extracting control information by demodulating the control channel signals of all the base stations selected at the step of selecting the one base station or the plurality of base stations.

A base station selection control method of a cellular mobile communication system according to the present invention is characterized in that the step of transmitting the access request is a step of transmitting an access request to the base station having the best communication path state of the base stations selected by the step of selecting the one base station or the plurality of base stations, and the step of determining whether or not the traffic information addressed to the self destination is included determines that the traffic information addressed to the self destination is included to the traffic channel of which base station by extracting control information by demodulating the control channel signal of the base station transmitted at the step of transmitting the access request.

A base station selection control method of a cellular mobile communication system according to the present invention is characterized in that the step of transmitting the access request is a step of transmitting an access request to the base station having the best communication path state of the base stations selected by the step of selecting the one base station or the plurality of base stations, and the step of determining whether or not the traffic information addressed to the self destination is included determines whether or not the traffic information addressed to the self destination is included by extracting control information by demodulating the control channel signals of all the base stations selected at the step of selecting the one base station or the plurality of base stations, respectively.

A base station selection control method of a cellular mobile communication system according to the present invention is characterized by further including step of receiving a call signal from one or a plurality of base stations in the vicinity of a mobile station.

EFFECT OF THE INVENTION

As described above, the cellular mobile communication system according to the present invention is composed of the base station transmitter having the first communication mode in which a predetermined communication data amount is transmitted at the maximum communication speed and the second communication mode in which a transmission is carried out by enhancing communication quality in place of lowering a communication speed by a divided communication data amount by dividing the predetermined communication data amount and the mobile station receiver arranged to receive data in the first communication mode and the second communication mode. As a result, it is possible to increase the operating rate of the base station and to increase a communication speed.

According to the cellular mobile communication system of the present invention, the third communication mode, in which a transmission is carried out by enhancing communication quality by lowering a communication speed without dividing a communication data amount, is provided likewise the second communication mode. As a result, since a communication is carried out to one base station even if a communication environment condition is not good, the resource of the base station can be effectively used according to a transmission state.

Since a multicarrier transmission is carried out by allocating an orthogonal subcarrier having frequencies separated from each other a predetermined interval to a plurality of the same data, it is possible to enhance communication quality such as an increase of an interference resistance and the like.

The base station transmission device and the mobile station receiving device in the cellular mobile communication system of the present invention are provided with the first communication mode in which a predetermined communication data amount is transmitted at the maximum communication speed, the second communication mode, in which a transmission is carried out by enhancing communication quality in place of lowering a communication speed by dividing the predetermined communication data amount, and the third communication mode, in which a transmission is carried out to one base station by enhancing communication quality by lowering a communication speed without dividing the communication data amount. As a result, it is possible to increase the operating rate of the base station as well as to increase a data communication speed from the base station transmission device to the mobile station receiving device.

According to the base station transmission device and the mobile station receiving device in the cellular mobile communication system of the present invention, control channel signals are created by being multiplied by an orthogonal code according to a base station discrimination number so that the control channel signal creation unit can approximately simultaneously receive the signals of respective base stations by distinguishing them. As a result, the mobile station receiver can obtain the control information by separating the control channel signals from the plurality of base stations having the different base station identification number without being subjected to interference too much.

According to the base station transmission device in the cellular mobile communication system of the present invention, since the control channel signal and the traffic channel signal are transmitted after they are synthesized, a transmission efficiency can be enhanced and the data communication speed from the base station transmission device to the mobile station receiving device can be increased accordingly.

According to the base station transmission device and the mobile station receiving device in the cellular mobile communication system of the present invention, since a multicarrier transmission is carried out by allocating an orthogonal subcarrier having frequencies separated from each other a predetermined interval to a plurality of the same data, it is possible to enhance communication quality such as an increase of an interference resistance and the like.

According to a base station selection control method of the cellularmobile communication systemofthe present invention, control channel signals are created by being multiplied by an orthogonal code according to abase station discrimination number so that the control channel signal creation unit can approximately simultaneously receive the signals of respective base stations by distinguishing them. As a result, the mobile station receiver can obtain the control information by separating the control channel signals from the plurality of base stations having the different base station identification number without being subjected to interference too much.

According to a base station selection control method of the cellularmobile communication systemof the present invention, since the control channel signal and the traffic channel signal are transmitted after they are synthesized, a transmission efficiency can be enhanced and the data communication speed from the base station transmission device to the mobile station receiving device accordingly.

According to a base station selection control method of the cellularmobile communication systemof the present invention, since a multicarrier transmission is carried out by allocating an orthogonal subcarrier having frequencies separated from each other a predetermined interval to a plurality of the same data, it is possible to enhance communication quality such as an increase of an interference resistance and the like.

BRIEF DESCRIPTION OF THE INVENTION

[Fig. 1] Fig. 1 is a system conceptual view explaining the basic concept of a cellular mobile communication system according to the present invention,

[Fig. 2] Fig. 2 is a network configuration view showing a connection of traffic data and control information between a base station controller 14 and respective base stations,

[Fig. 3] Fig. 3 is a view showing a layout of base stations in a plurality of cells,

[Fig. 4] Fig. 4 is a view explaining GI of OFDM,

[Fig. 5] Fig. 5 is a view showing configuration in a time axis and a frequency axis of respective channel signals used to the cellular mobile communication system according to the present invention,

[Fig. 6] Fig. 6 is a block diagram showing a base station transmitter,

[Fig. 7] Fig. 7 is a block diagram showing a pilot channel signal creation unit 23 in the base station transmitter,

[Fig. 8] Fig. 8 is a block diagram showing a control channel signal creation unit 24 in the base station transmitter,

[Fig. 9] Fig. 9 is a block diagram showing a traffic channel signal creation unit 25 in the base station transmitter,

[Fig. 10] Fig. 10 is a block diagram showing a mobile station receiver,

[Fig. 11] Fig. 11 is a block diagram showing a pilot channel signal processing unit corresponding to one base station in a pilot channel signal processing unit 41 in the mobile station receiver,

[Fig. 12] Fig. 12 is a block diagram showing a control channel signal processing unit corresponding to one base station in a control channel signal processing unit 42 in the mobile station receiver,

[Fig. 13] Fig. 13 is a block diagram showing a traffic channel signal processing unit corresponding to one base station in a traffic channel signal processing unit 43 in the mobile station receiver,

[Fig. 14] Fig. 14 is a view showing a pilot signal component of a base station 0 in a table format,

[Fig. 15] Fig. 15 is a view showing a pilot signal component of a base station 1 in a table format,

[Fig. 16] Fig. 16 is a view showing a pilot signal component of a base station 2 in a table format,

[Fig. 17] Fig. 17 is a view showing a control channel signal component of the base station O in a table format,

[Fig. 18] Fig. 18 is a view showing a control channel signal component of the base station 1 in a table format,

[Fig. 19] Fig. 19 is a view showing a control channel signal component of the base station 2 in a table format,

[Fig. 20] Fig. 20 is a showing a traffic channel signal component of the base station 0 corresponding to a first communication mode in a table format,

[Fig. 21] Fig. 21 is a view showing a traffic channel signal component of the base station 1 corresponding to the first communication mode in a table format,

[Fig. 22] Fig. 22 is a view showing a traffic channel signal component of the base station 2 corresponding to the first communication mode in a table format,

[Fig. 23] Fig. 23 is a view showing a traffic channel signal component of the base station 0 corresponding to a second communication mode in a table format,

[Fig. 24] Fig. 24 is a view showing a traffic channel signal component of the base station 1 corresponding to the second communication mode in a table format,

[Fig. 25] Fig 25 is a view showing a traffic channel signal component of the base station 2 corresponding to the second communication mode in a table format,

[Fig. 26] Fig. 26 is a flowchart showing a procedure when one base station is selected by a base station selection means of a receiver in a mobile station M and the first communication mode is selected by the base station controller,

[Fig. 27] Fig. 27 is a flowchart showing a procedure when a plurality of base stations are selected by the base station selection means of the receiver in the mobile station M and the second communication mode is selected by the base station controller,

[Fig. 28] Fig. 28 is a flowchart showing a procedure when a plurality of base stations are selected by the base station selection means of the receiver in the mobile station M and the third communication mode is selected by the base station controller,

[Fig. 29] Fig. 29 is a flowchart showing a procedure when base station candidates having the maximum receiving level are selected by the base station selection means of the mobile station receiver and selection of a final base station and selection of the first communication mode are carried out by a base station selection means of the base station controller,

[Fig. 30] Fig. 30 is a flowchart showing a procedure when base station candidates having the maximum receiving level are selected by the base station selection means of the mobile station receiver, and selection of a final base station and selection of the second communication mode are carried out by the base station selection means of the base station controller,

[Fig. 31] Fig. 31 is a flowchart showing a procedure when base station candidates are selected by the base station selection means of the mobile station receiver, and the second communication mode is selected by the base station selection means of the base station controller after a final base station is determined,

[Fig. 32] Fig. 32 is a flowchart showing a procedure when the third communication mode is selected by the base station selection means of the base station controller,

[Fig. 33] Fig. 33 is a flowchart showing a procedure when base station candidates having the maximum receiving level are selected by the base station selection means of the mobile station receiver and selection of a final base station and selection of the first communicationmode are carried out by the base station selection means of the base station controller,

[Fig. 34] Fig. 34 is a flowchart showing a procedure when base station candidates having the maximum receiving level are selected by the base station selection means of the mobile station receiver and selection of a final base station and selection of the second communication mode are carried out by the base station selection means of the base station controller,

[Fig. 35] Fig. 35 is a flowchart showing a procedure when base station candidates having the maximum receiving level are selected by the base station selection means of the mobile station receiver and selection of a final base station and selection of the first communication mode are carried out by the base station selection means of the base station controller,

[Fig. 36] Fig. 36 is a flowchart showing a procedure when base station candidates having the maximum receiving level are selected by the base station selection means of the mobile station receiver and selection of a final base station and selection of the second communication mode are carried out by the base station selection means of the base station controller,

[Fig. 37] Fig. 37 is a block diagram showing a transceiver using an OFDM system, wherein (a) is a block diagram of a transmitter and (b) is a block diagram of a receiver,

[Fig. 38] Fig. 38 is a view explaining a relationship between the layouts of an OFDM symbol and GI,

[Fig. 39] Fig. 39 is a view showing the layout of transmission symbols in a transmission signal in one frame of the OFDM system,

[Fig. 40] Fig. 40 is a view showing the layout of transmission symbols in a transmission signal in one frame of a diffusion OFDM system, wherein (a) is a view showing that a frequency region has a diffusion ratio of 4 and the same data symbol is transmitted by four subcarriers, and (b) is a view showing that both a frequency region and a time region have a diffusion ratio of 2 and the same data symbol is transmitted by two subcarriers and two OFDM symbols, and

[Fig. 41] Fig. 41 is a block diagram showing a transceiver of the diffusion OFDM system for carrying out frequency region diffusion, wherein (a) is a block diagram of a transmitter and (b) is a block diagram of a receiver.

DESCRIPTION OF REFERENCE NUMERALS

| | |
|---|---|
| 10, 11, 12 | cell |
| 13 | boundary region |
| 14 | base station controller |
| 15 | core network |
| 16 | The Internet |
| 17 | base station transmitter |
| 18 | control channel data buffer unit |
| 19 | traffic channel data buffer unit |
| 20 | control unit |
| 21 | control channel symbol creation unit |
| 22 | traffic channel symbol creation unit |
| 23 | pilot channel signal creation unit |
| 24 | control channel signal creation unit |
| 25 | traffic channel signal creation unit |
| 26 | synthesizing unit |
| 27 | switching unit |
| 28 | antenna |
| 30 | copy unit (copier) |

| 31 | pilot scramble code multiplication unit |
| --- | --- |
| 32 | control signal frequency diffusion unit |
| 33 | traffic signal frequency diffusion unit |
| 34 | traffic scramble code multiplication unit |
| 39 | mobile station receiver |
| 40 | antenna |
| 41 | pilot channel signal processing unit |
| 42 | control channel signal processing unit |
| 43 | traffic channel signal processing unit |
| 44 | control channel data reproduction unit |
| 45 | traffic channel data reproduction unit |
| 46 | integral control unit |
| 50 | channel estimation signal creation unit |
| 51 | control channel symbol reverse diffusion unit |
| 52a | traffic channel symbol inverse diffusion unit |
| 52b | traffic channel symbol reproduction unit |
| 500, 500a, 500b | S/P converter |
| 501, 501a, 501b | IFFT |
| 502, 502a, 502b | P/S converter |
| 503, 503a, 503b | AddGI |
| 504 | RemoveGI |
| 505 | timing detector |
| 506, 506a, 506b | S/P converter |
| 507, 507a, 507b | FFT |
| 508, 508a, 508b | P/S converter |
| 600 | frequency region diffusion unit |
| 601 | frequency region inverse diffusion unit |

BEST MODE FOR CARRYING OUT THE INVENTION

An embodiment of a cellular mobile communication system, a base station transmission device and a mobile station reception device in the cellular mobile communication system, and a base station selection control method of the cellular mobile communication system will be explained below in detail referring to the drawings.

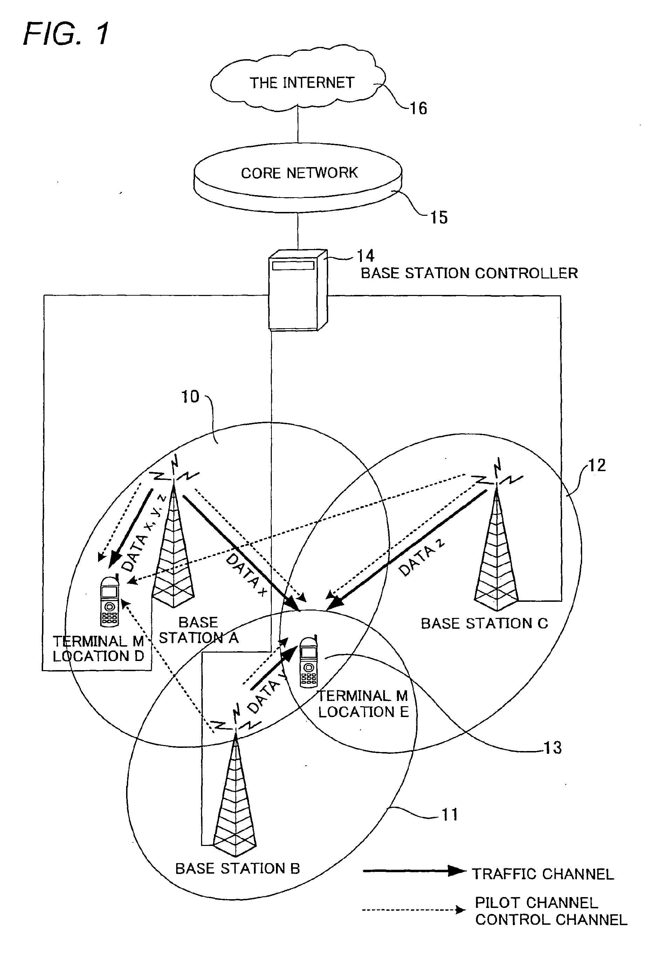

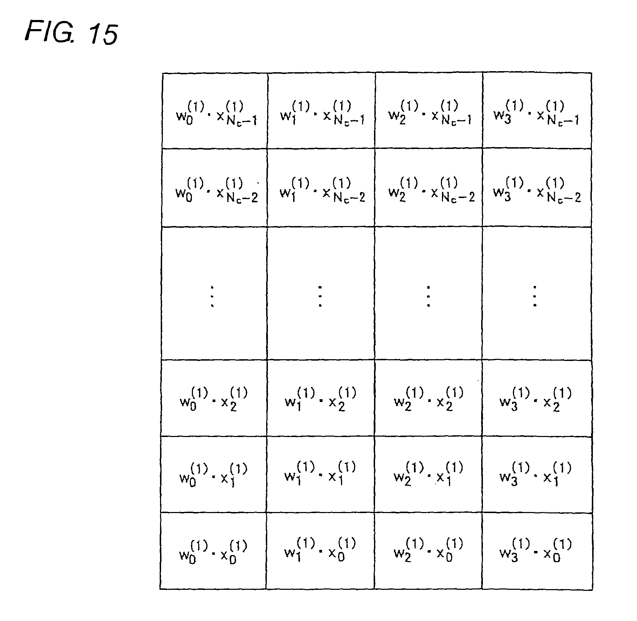

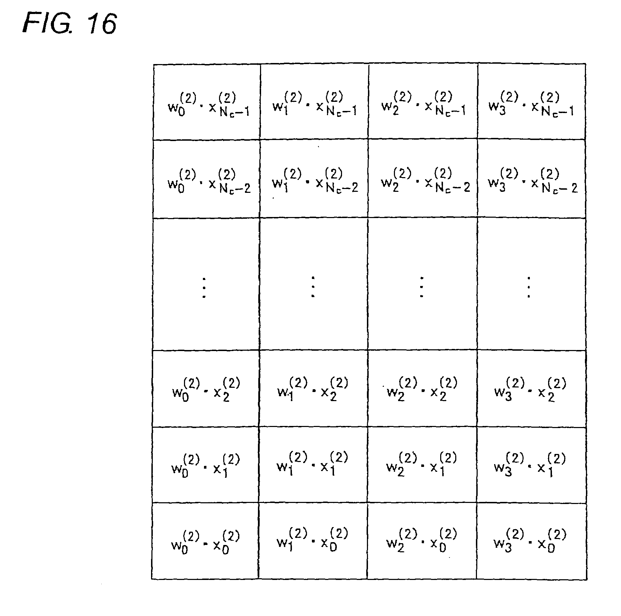

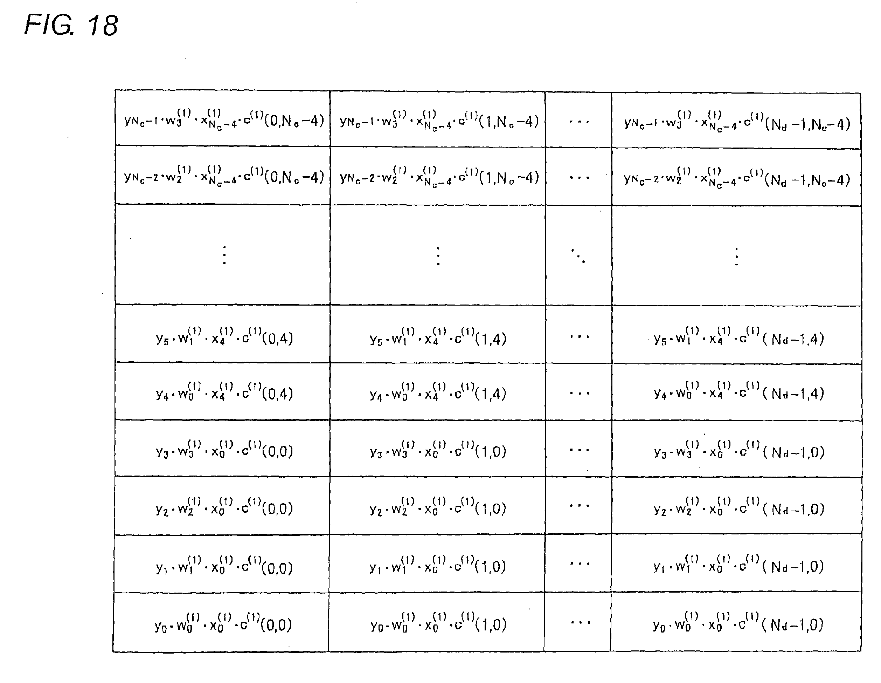

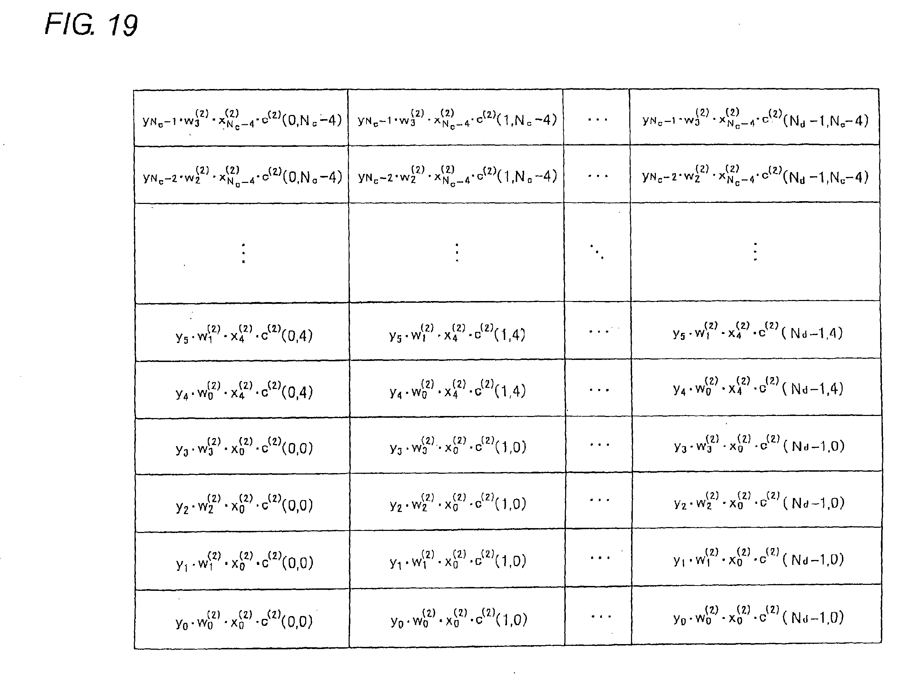

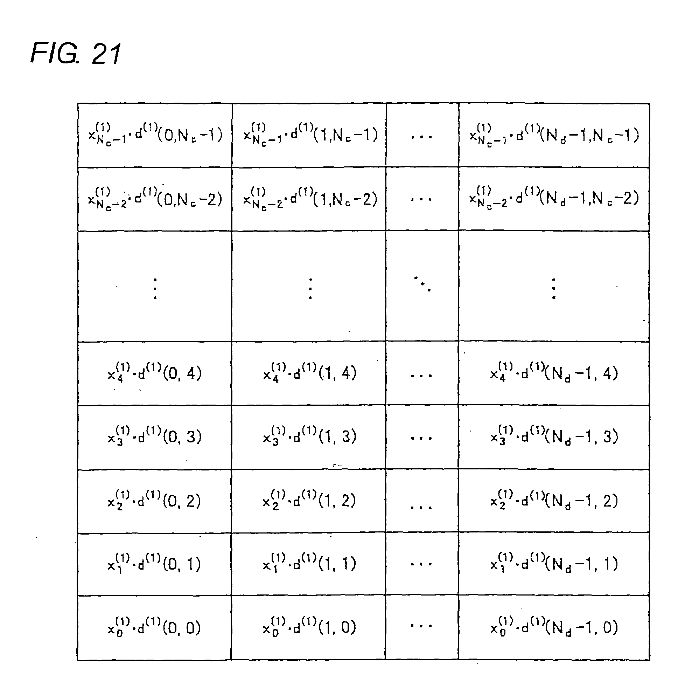

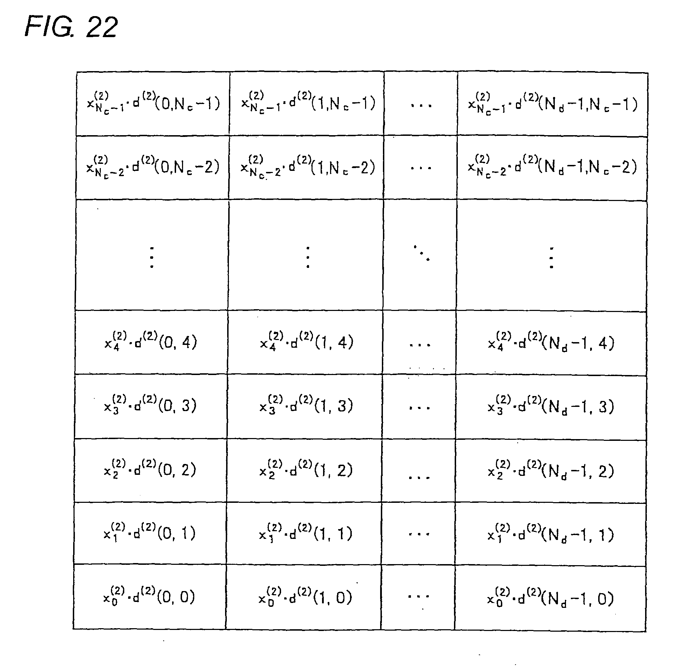

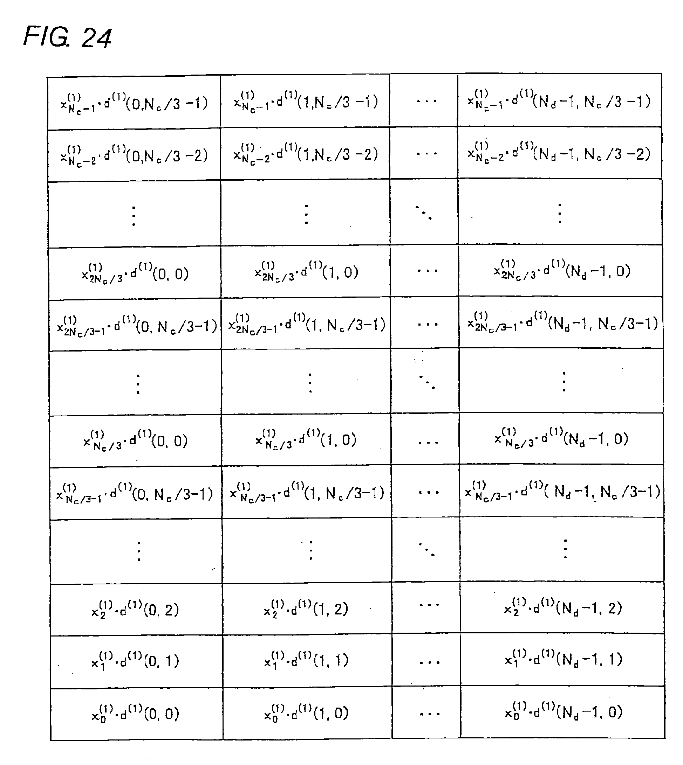

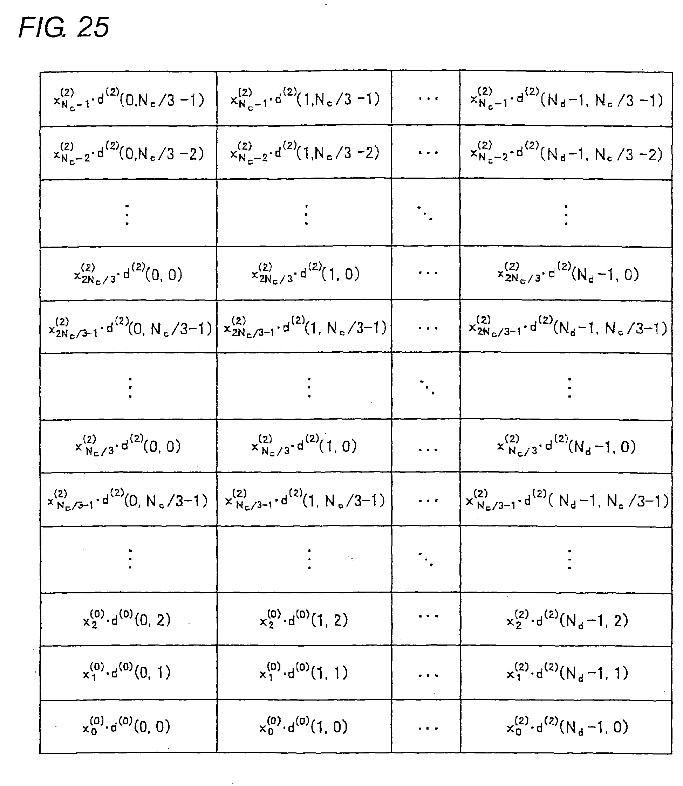

Fig. 1 to Fig. 36 show an example of the embodiment of the base station transmission device and the mobile station reception device in the cellular mobile communication system and the base station selection control method of the cellular mobile communication system. In the drawings, it is assumed that the components denoted by the same reference numerals show the same components.

First, the basic concept of the cellular mobile communication system according to the present invention will be explained below using Fig. 1 to Fig. 5.

Fig. 1 is a system conceptual view explaining the basic concept of the cellular mobile communication system according to the present invention.

Fig. 1 shows how base stations A, B and C are disposed in three representative cells 10, 11 and 12 in a cellular mobile communication system in which base stations are disposed in regions (cells) each having a limited range of service and a communication is carried out between the base stations and a mobile station.

Further, Fig. 1 shows an example of a data communication when a mobile station M is positioned in a location D near to a cell 10 (base station A), and when the mobile station M moves and positioned in a location E in a boundary region 13 where the three cells 10, 11, 12 overlap.

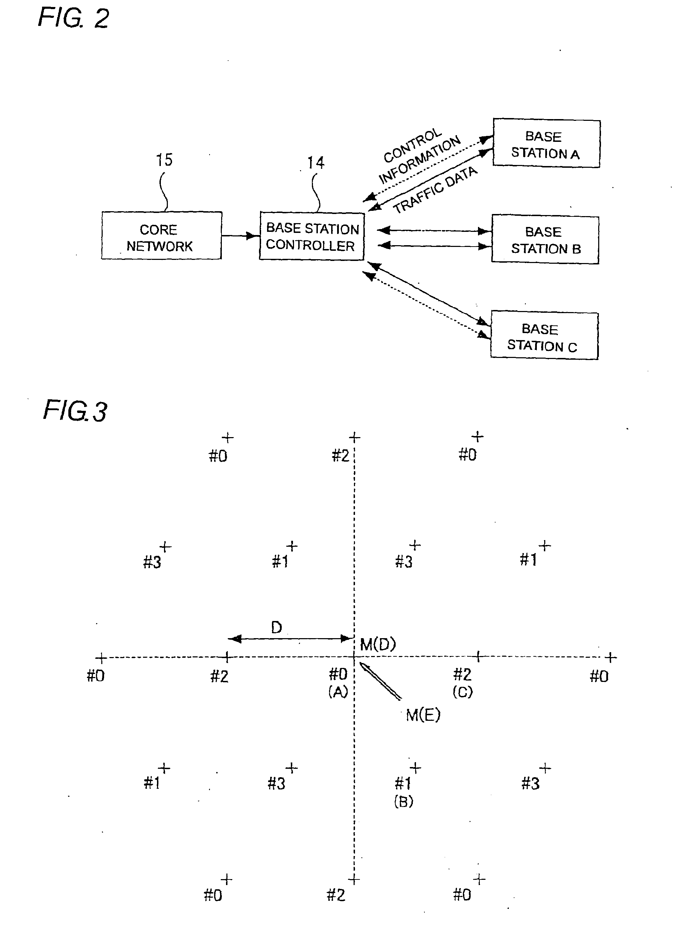

Fig. 2 is a network configuration view showing a connection of traffic data and control information between a base station controller 14 and the respective base stations.

As shown in Fig. 2, the base station controller 14 is a device for controlling a wireless resource. That is, when, for example, the base station controller 14 is connected to a core network 15 connected to The Internet 16 and to the respective base stations and transmission data is transmitted to the mobile station M from The Internet 16 through the core network 15, the base station controller 14 controls the wireless resource of the system in its entirety such as a wireless channel is to be allocated to any base station (here, base stations A, B and C) of the plurality of base stations, any of the above transmission data is to be distributed to the respective base stations, how the above transmission data is to be distributed, and the like.

A communication line connected the base station controller 14 is not limited to The Internet 16 and may be a dedicated communication line such as a LAN network and the like.

Further, although the embodiment shows a case in which one base station controller 14 is disposed to the system as shown in Fig. 1, a plurality of base stations controllers are connected to a plurality of base stations, respectively in a larger system. Further, a system arrangement, in which the functions of the base station controller relating to the present invention are disposed to the respective base stations, is also possible . That is, it is also considered to determine base stations and a communication mode for carrying out a transmission to the mobile station M in such a manner that a plurality of base stations directly exchange information.

Ordinarily, in a location such as the location D in which a radio wave is less attenuated and thus a high interference resistance is not requested, a data communication is carried out between a base station A and the mobile station M using for example, an OFDM signal (in the following explanation, an OFDM or diffusion OFDM signal is used) at the maximum communication speed of the communication system. In this case, the base station controller 14 transmits all the data x, y and z to the base station A. The base station A, which receives the data, transfers the data x, y and z to the mobile station M all at once through a traffic channel to be described later. This communication mode is called a first communication mode.

On the other hand, when the mobile station M moves from the location D to a location E, since the location E in the boundary region 13 is a location far from any of the base stations A, B and C, a large amount of radio attenuation and interference occurs in the location E. Accordingly, a high interference resistance and the like are required to the mobile station M to increase a data communication speed.

To satisfy the requirement, the data x, y, z are divided into three parts and allocated to the respective base stations A, B and C, so that the data transmission amount of one base station is reduced to one third. The base station controller 14 transmits data x to the base station A, data y to the base station B, and data z to the base station C so that the amount of data allocated to one base station is reduced. When the data transmission amount is reduced, the interference resistance can be increased making use of, for example, the diffusion OFDM signal which is resistive against interference. In this circumstance, the data x, y, z are transmitted from the three base stations A, B and C approximately simultaneously and received by the mobile station M approximately simultaneously. In this operation, when a communication parameter and the like are selected so that a communication speed, which as fast as the communication speed of the first communication mode as far as possible can be obtained, a data transmission of a predetermined speed can be realized. This communication mode is called a second communication mode.

Further, when the mobile station M is positioned in a location where a communication environment is bad such as the location E and further many other mobile stations carry out a communication at the same time, or when a mobile station having a higher priority exists, many wireless resources may not be allocated to the mobile station M. In this case, for example, the mobile station M carries out a communication only with the base station A. As a result, the mobile station M increases the interference resistance making use of the diffusion OFDM signal resistive against interference likewise the second communication mode to thereby increase communication reliability and secure communication quality. This communication mode is called a third communication mode.

A method of selecting a base station and a method of shifting from an arbitrary communication mode to other communication mode when the first, second and third communication modes are carried out will be briefly explained here.

The necessity of the respective communication modes is as described above. However, a communication mode must be shifted to an appropriate communication mode, that is, a mode selection must be carried out according to a change of positional relation between a peripheral base station and the mobile station M, a change of a communication environment state, and a change of communication quality required to a communication to the traffics of the respective cells, the mobile station M, and other mobile stations as shown in Fig. 1. For example, a mode shift from the first communication mode to the second communication mode or the third communication mode may be carried out when the received signal level of a pilot (to be described later) of the base station A selected at the time (only the base station A is selected in the first communication mode), which is detected at all times, becomes less than a predetermined receiving power level due to a change of a communication environment condition. Otherwise, a communication mode may be shifted when SIR (Signal to Interference Power Ratio), which is calculated by measuring an interference level, becomes less than a predetermined level together with the received signal level of the base station A.

When a communication mode is shifted to the second communication mode, it is necessary to review the base station A selected at the time and to select base stations A', B' and C' by a base station selection means of the mobile station M, a base station selection means of the base station controller 14, or a combination of them. Further, when a communication mode is shifted to the third communication mode, it is necessary to review the base station A selected at the time and to select the base station A'.

When, for example, the base station selection means of the mobile station M selects the base station A', B' and C' as a method of selecting them, the base stations A', B' and C', which have a pilot signal more than a predetermined receiving power level, are selected by receiving pilot signals from a plurality of peripheral base stations at all times as described later. Note that the base station A' , B' and C' may be selected in consideration of the information when the base station A is selected.

Although the control channel data to be described later has a small data amount as compared with the traffic channel, high reliability is required to the control channel data at the same time. Accordingly, the control channel data is transmitted from the respective base stations A, B and C after it is provided with a high interference resistance making use of the diffusion OFDM subjected to a frequency region diffusion or a time region diffusion (or the diffusions in both the regions) and further it is subjected to a processing for suppressing interference between the base stations.

Further, in the second and third communication modes, a frequency diversity can be carried out by obtaining a plurality of channels making use of orthogonal subcarriers apart from each other a predetermined distance, thereby the interference resistance can be more increased as described later.

Next, the basic concept of the cellular mobile communication system according to the present invention described above will be explained in more detail.

Although the basic concept for carrying out a parallel transmission as the second communication mode using the three base stations A, B and C is briefly explained, the basic concept makes use of a MIMO (Multiple Input Multiple output) technology, which make it possible to carrying out a high speed transmission by the parallel transmission and the OFDM technology which is strong to a multi-path.

Ordinarily, although the parallel transmission carried out by MIMO is performed using a multi-antenna, the present embodiment realizes a multi-input by a parallel transmission from a plurality of base stations.

In OFDM, interference between codes due to the multi-path can be suppressed when a delay wave is within the range of GI.

When the parallel transmission is carried out by MIMO using an ordinary multi-antenna, since an antenna of a transmission base station is located at approximately the same position, it is not necessary to particularly take a transmission delay difference into consideration as compared with a delay due to the multi-path. However, in the present embodiment, since transmissions are carried out from a plurality of base stations approximately at the same time, it is preferable that the transmission delay difference from a base station to the mobile station does not exceed GI.

Further, it is difficult for a mobile station to be provided with a plurality of antennas to enhance the portability thereof.

To solve this problem, the embodiment employs the diffusion OFDM signal, which carries out the frequency region diffusion in place of the OFDM signal. That is, a plurality of channels having different transmission path characteristics can be obtained by allocating a signal to subcarriers whose frequency regions are apart from each other after the subcarriers are diffused in a frequency region. With this operation, the multi-output is realized.

Fig. 3 is a view showing a layout of base stations in a plurality of cells.

Base station identification numbers from #0 to #3 are allocated to the respective base stations (the positions of the base stations are shown by a mark "+"). The base stations having the same base station identification number are disposed so that they are not located side by side, and a mobile station receives the signals of the base stations having a different base station identification number at the same time by distinguishing the signals.

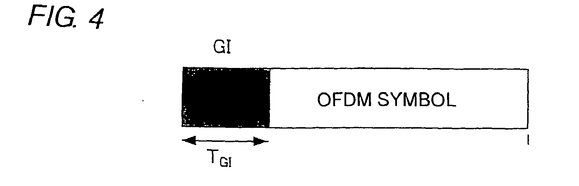

Fig. 4 is a view explaining the GI of the OFDM.

It is preferable to satisfy $D > T_{GI} \times C$ so that the signals of the base stations which may be received at the same time or the signals of the base stations which may apply a large amount of interference are not received in excess of GI. Here, a GI length is shown by $T_{GI}$ seconds, and the distance between adjacent base stations is shown by D meters. Further, C shows a radio wave transmission speed.

Next, the signal arrangements of a pilot channel, a control channel, and a traffic channel for exhibiting a high speed/parallel transmission based on the basic concept of the cellular mobile communication system according to the present invention described above will be explained.

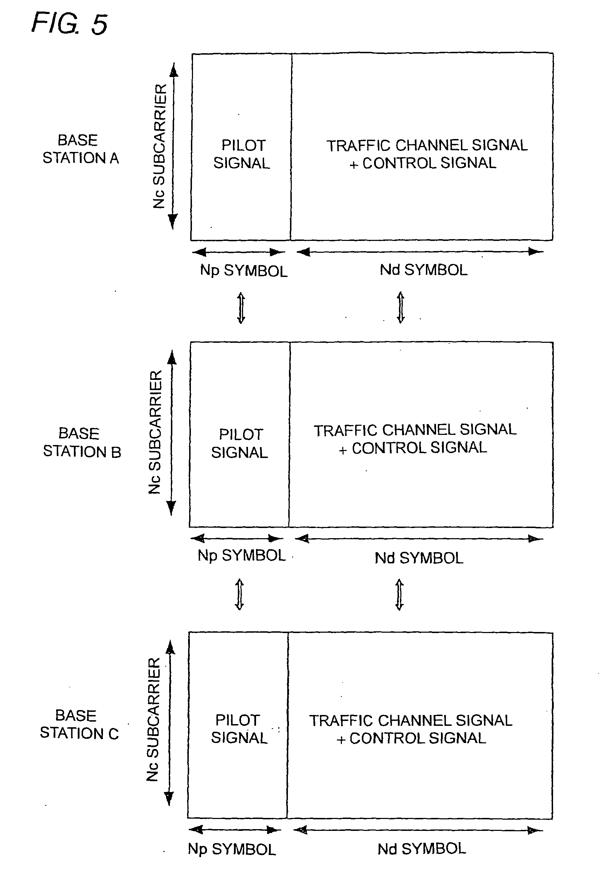

Fig. 5 is an arrangement view of the respective channel signals in a time axis and a frequency axis used in the cellular mobile communication system according to the present invention.

The respective base stations (in Fig. 5, the representative base stations A, B and C) approximately simultaneously transmits the respective channel signals to the mobile station M using the traffic channel for transmitting data such as audio, image and the like, the control channel for transmitting control information and the like including the destination information of traffic channel data, and the pilot channel for carrying out a channel estimation (including measurement of a receiving power level of the respective base stations and the like).

As shown in Fig. 5, since, for example, pilot signals are approximately simultaneously transmitted from the base stations A, B, C, the mobile station M must receive them after it separates them from each other without causing interference. For this purpose, the pilot signals from the respective base stations are transmitted using an orthogonal code corresponding to a base station identification number to be described later (shown in equation 1). Further, the control channel signals and the traffic signals are also designed so that they can be easily separated from each other by the mobile station M as described below.

The pilot channel is time multiplexed. That is, as shown in Fig. 5, the pilot signals are transmitted using a different OFDM symbol in terms of time during a time Np from the time 0 of the leading end of a frame. On the other hand, the control channel signals and the traffic channel signals are transmitted after the time Np passes.

In the present embodiment, the control channel signal is created as a diffusion OFDM signal which is subjected to the frequency region diffusion. After the control channel signal is subjected to the frequency diffusion, it is scrambled by a scramble code. The scramble code is a common code for the control channel.

The traffic channel is scrambled using a random sequence different each station and non-orthogonal signal multiplexed with the control channel signals.

Further, although the pilot symbol is also scrambled by the same random sequence as that of the traffic channel, interference between base stations is suppressed using a pilot pattern which is made orthogonal in a time direction to the pilot signal of a different base station number.

Although the pilot signal is disposed to the leading edge of a frame, it may be also separately disposed to the front and end portions or to the intermediate portion of the frame. Otherwise, some subcarriers of Nc subcarriers may be used. Further, as to the traffic channel signal and the control channel signal, when there are no traffic signals, only the control signal may be transmitted, and the traffic signal and the control signal may be prevented from interfering with each other by being allocated to different OFDM symbols and different subcarriers.

As shown above, since the signal arrangements of the pilot channel, the control channel, and the traffic channel are multiplexed while suppressing the interference between base stations as much as possible, when a plurality of base stations are selected, the base stations can be easily identified as well as the transmission efficiency of signals can be enhanced. As a result, a basic data arrangement, which is an object of the present system, can be achieved to transmit data between a base station and a mobile station at a high speed according to communication environment conditions.

Next, the arrangements and the operations of the base station transmitter and the mobile station receiver will be explained below in detail using the block diagrams based on the arrangements of the respective channels described above.

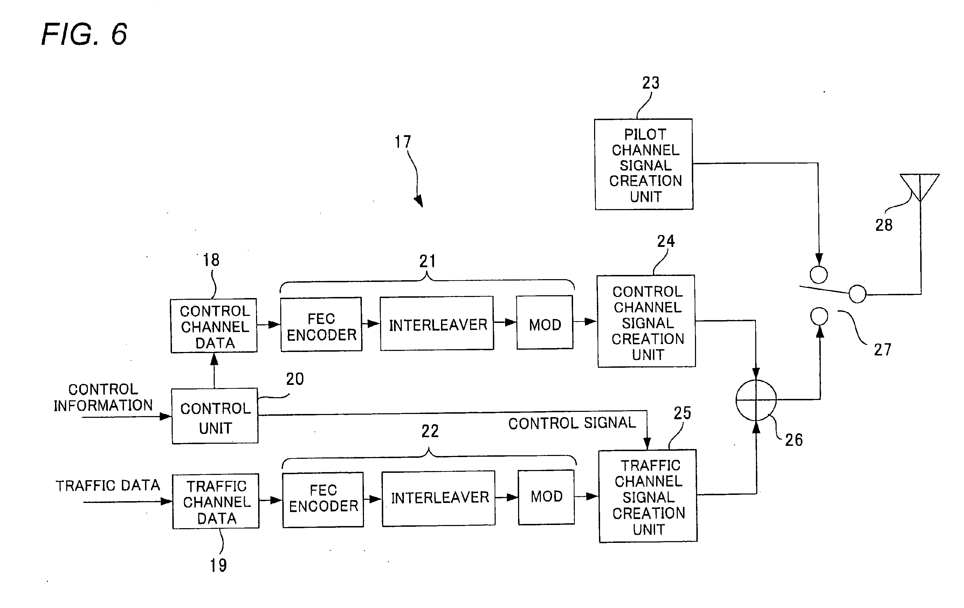

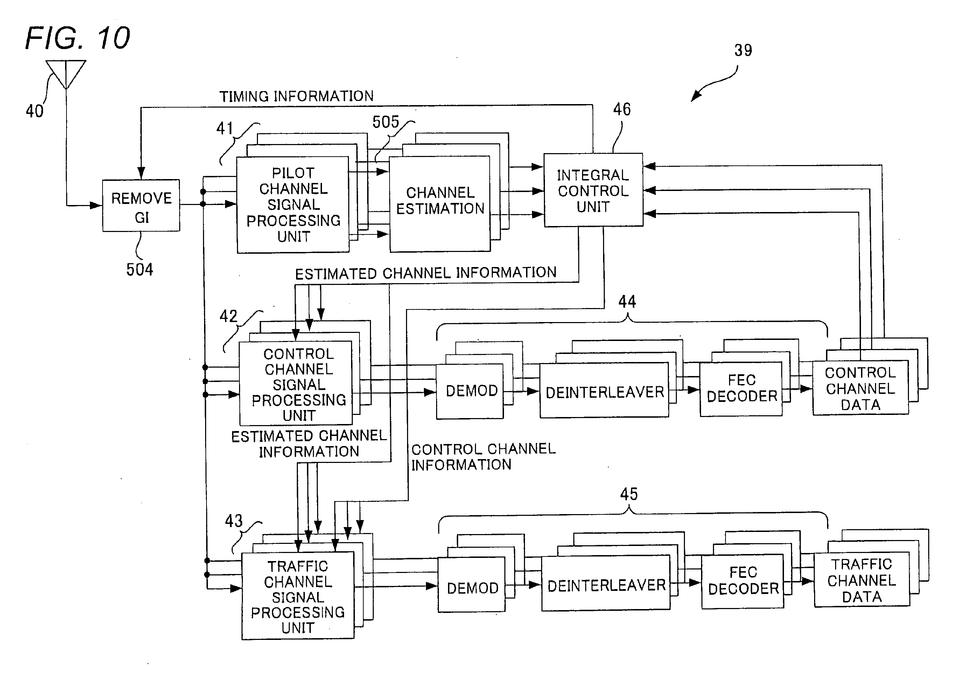

Fig. 6 is a block diagram of the base station transmitter, and Fig. 10 is a block diagram of the receiver of the mobile terminal (mobile station).

As shown in Fig. 6, the base station transmitter 17 is composed of a controller 20 for receiving control information including information for selecting a communication mode and the like from the base station controller 14 (shown in Fig. 1), creating a control channel data, creating a control signal for switching a communication mode and the like, a control channel buffer unit 18 for buffering the created control channel data once, a control channel symbol creation unit 21 for creating a control channel symbol, a traffic channel buffer unit 19 for buffering traffic channel data temporarily, a traffic channel symbol creation unit 22 for creating a traffic channel symbol by being input with the traffic channel data, a pilot channel signal creation unit 23 for creating a pilot signal, a control channel signal creation unit 24 for creating a control signal, a traffic channel signal creation unit 25 for creating a traffic signal, a synthesizing unit 26 for synthesizing the control signal created by the control channel signal creation unit 24 and the traffic signal created by the traffic channel signal creation unit 25 and creating the synthesized signal thereof, a switching unit 27 for switching the synthesized signal after the pilot signal generated from the start of the frame is finished, and an antenna 28 for transmitting the synthesized signal or the pilot signal.

On the other hand, as shown in Fig. 10, the receiver 39 of the mobile station is composed of an antenna 40 for receiving the control channel signal or the synthesized signal of the control channel signal and the traffic channel signal or the pilot signal transmitted from the transmission unit of the base station, a pilot channel signal processing unit 41 for creating a pilot symbol from the received pilot signal, a control channel signal processing unit 42 for extracting a control channel symbol from the received control channel signal, a control channel data reproduction unit 44 for extracting control channel data from the extracted control channel symbol, a traffic channel signal processing unit 43 for extracting a traffic channel symbol from the received traffic channel signal, a traffic channel data reproduction unit 45 for extracting traffic channel data from the extracted traffic channel symbol, and further an integral control unit 46 for creating a communication mode switch control signal (control channel information) to be input to the traffic channel signal processing unit. The integral control unit 46 is further composed of a base station selection means for selecting base station for measuring the received signal levels from a plurality of base stations from the received signal and issuing an access request.

Further, the control channel information is created from control information including communication mode selection information and the like transmitted from the base station controller.

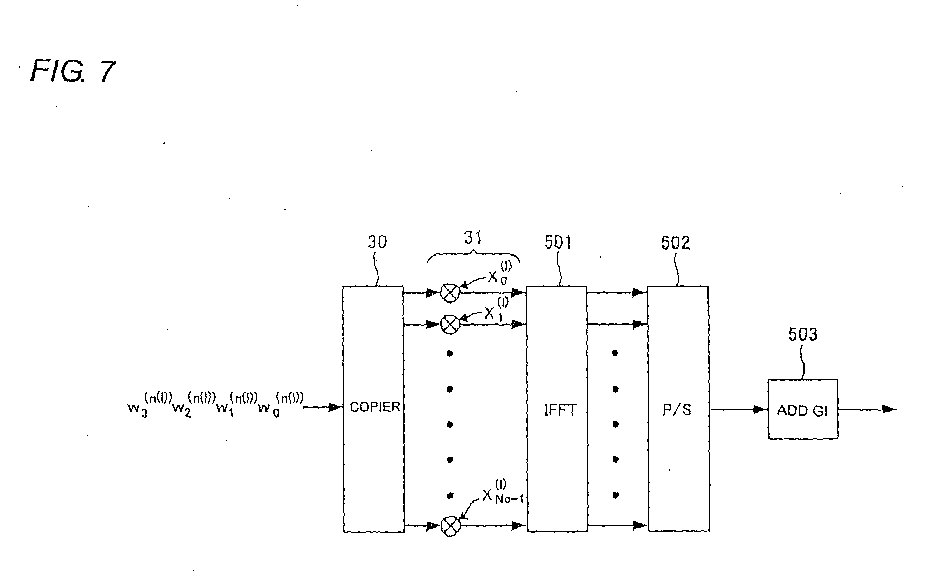

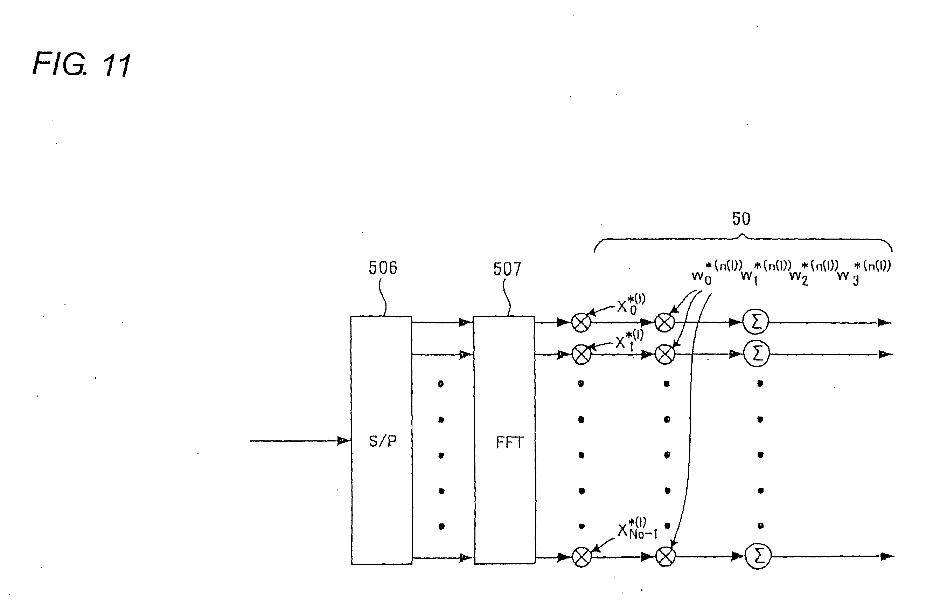

First, how a pilot channel signal is created and how a channel is estimated in the base station transmitter and the mobile station receiver arranged as described above will be explained with reference to Fig. 7 which is a block diagram of the pilot channel signal creation unit 23 of the transmitter and Fig. 11 which is a block diagram of a pilot channel signal processing unit corresponding to one base station in the pilot channel signal processing unit 41 of the receiver.

Fig. 7 is the block diagram of the pilot channel signal creation unit 23 in the base station transmitter.

Fig. 11 is the block diagram showing the pilot channel signal processing unit corresponding to one base station in the pilot channel signal processing unit 41 in the mobile station receiver.

The respective subcarrier components of the pilot symbol are shown by p(i, j).

Here, i is an index in a time direction and has a value of from 0 to Np-1, and j is an index in a frequency direction and has a value of from 0 to Nc-1.

As shown in Fig. 7, the pilot signal is created in such a manner that orthogonal codes, which are orthogonal between base stations having a different base station number, are copied by a copier 30, and each of the orthogonal codes is multiplied by a scramble code inherent to a base station and subjected to frequency diffusion by a pilot scramble code multiplication unit 31. Here, base station identification numbers from #0 to #3 are used corresponding Fig. 3, and the pilot symbol number Np is set to 4.

In the following description, the embodiment will be explained assuming that four base station identification numbers are used. However, more base station identification numbers may be used, and the scope of the present invention should not be limited to the case in which the four base station identification numbers are used. When more base station identification numbers are used, although the equations and the like shown below must be corrected, those skilled in the art can easily correct them based on the principle of the present invention.

A scramble code inherent to a base station 1 is shown by $x_0^{(1)}$, $x_1^{(1)}$, ... , $X_{NC-1}^{(1)}$.

Further, a base station identification number corresponding to the base station 1 is shown by n(1). An orthogonal code with a length of 4 corresponding to the base station identification number n (1) is shown by $w_0^{(n(1))}$, $w_1^{(n(1))}$, $w_2^{(n(1))}$, $w_3^{(n(1))}$. At the time, the component $p^{(1)}(i, j)$ of the pilot symbol is shown by the following equation.

[Equation 1]

$$p^{(l)}(i, j) = w_i^{(n(l))} \cdot x_j^{(l)}$$

At the time, $x^{(1)}$ may allocate a part of Maximal Length Sequence (m sequence) having a cycle longer than Nc to respective different base stations. Further, $w^{(n(1))}$ may allocate the respective orthogonal rows of an Hadamard sequence to the respective base station identification numbers.

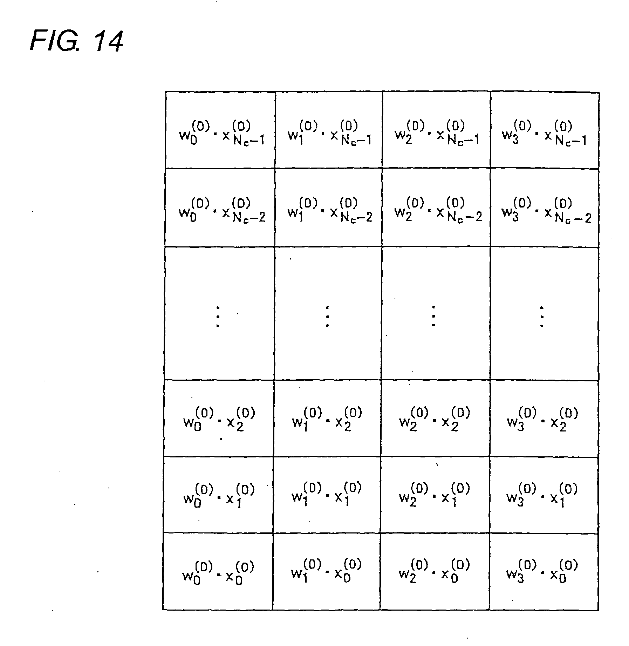

The pilot signal components of the base stations 0, 1 and 2 obtained by the arrangement are as shown in Fig. 14, 15 and 16, respectively.

Further, $p^{(1)}(i, j)$ are not necessarily arranged by the equation 1, and a different signal may be used as long as the relation of the following equation is satisfied to base stations 1 and 1'having a different base station identification number.

[Equation 2]

$$\sum_{i=0}^{N_p-1} p^{(l)}(i, j) \cdot p^{(l')*}(i, j) = 0$$

When signals are received from a plurality of base stations (1=0, 1, ... , M-1), the mobile station receiver receives received signal shown by the following equation.

[Equation 3]

$$r(i, j) = \sum_{l=0}^{M-1} h(l, j) \cdot p^{(l)}(i, j)$$

The above h (l, j) is a channel gain in a subcarrier j between the base station 1 and the mobile station.

Further, the index in the time direction is omitted assuming that the channel gain is less varied in the time direction.

A channel estimation signal creation unit 50 of the pilot channel signal processing unit 41 of the receiver 39 can calculate an estimated value of the channel gain by multiplying the complex conjugate of the pilot symbol of the base station to the received signal r (i, j) as shown by the following equation and averaging the time of the multiplied value. The estimated channel gain is shown by the equation shown below.

[Equation 4]

$$\hat{h}(l',j) = \frac{1}{N_p} \sum_{i=0}^{N_p-1} r(i,j) \cdot p^{(l')*}(i,j)$$

$$= \sum_{l|n(l)=n(l')} h(l,j) \cdot x_j^{(l)} \cdot x_j^{(l')*}$$

$$= h(l',j) + \sum_{l|n(l)=n(l'),l \neq l'} h(l,j) \cdot x_j^{(l)} \cdot x_j^{(l')*}$$

In the equation shown in a second row of the above equation, $\Sigma$ means that the components of the base stations whose base station identification numbers are the same as those of the base station 1' whose channel gain estimation values are desired to be calculated are summed up.

The expansion as described above can be carried out because the pilot symbols of the base stations having a different base station identification number can be excluded by the orthogonal property of the pilot symbols.

Further, the equation of a third row separately shows the signal components of the base station desired to be calculated and the components of the base stations having a different base station number although they have the same base station identification number.

Since the different base stations having the same base station identification number are separated from each other in distance, an amount of attenuation is increased, thereby a second term is reduced. Further, to accurately obtain the information of a high channel gain, it is possible to average a plurality of adjacent subcarrier components.

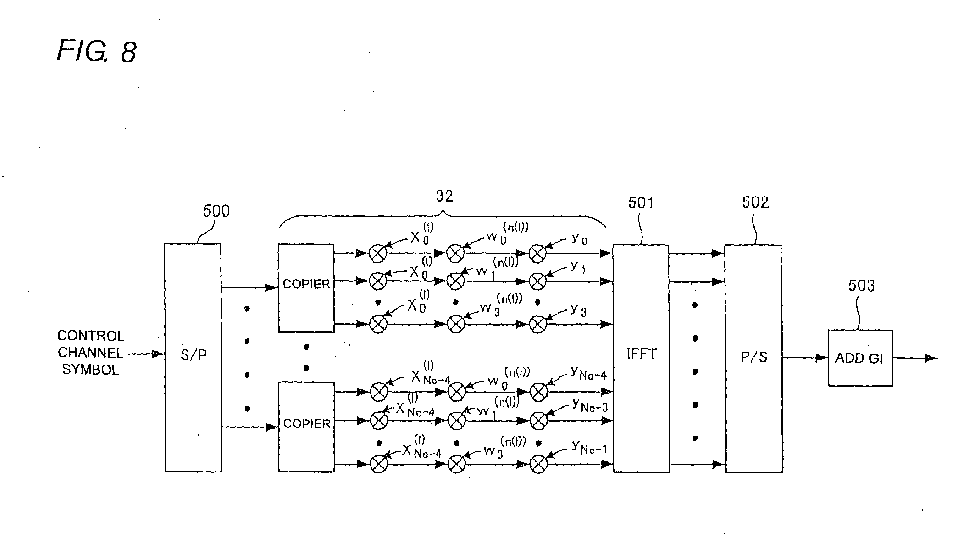

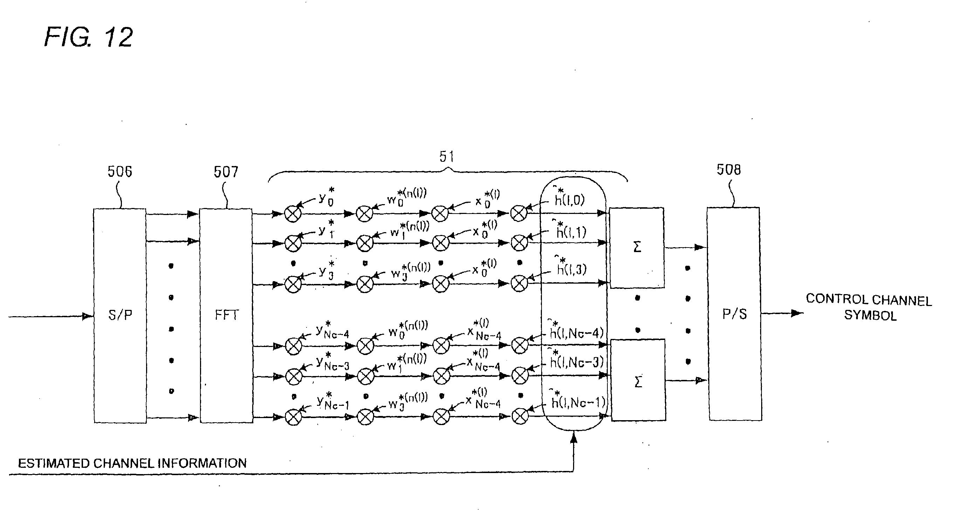

Next, the control channel signals and the control channel symbol created in the base station transmitter and the mobile station receiver will be explained with reference to Fig. 8 which is a block diagram of the control channel signal creation unit 24 of the transmitter and Fig. 12 which is a block diagram showing a control channel signal processing unit corresponding to one base station of the control channel signal processing unit 42 of the receiver.

Fig. 8 is a block diagram of the control channel signal creation unit 24 in the base station transmitter.

Fig. 12 is a block diagram showing the control channel signal processing unit corresponding to one base station of the control channel signal processing unit 42 in the mobile station receiver.

As shown in Fig. 8, a control signal frequency diffusion unit 32 scrambles the control channel symbol using a control channel scramble code shown below.

The control channel scramble code $z^{(1)}$ is shown by the equation shown below using control channel common code $y_0, y_1, \ldots, y_{Nc}-1$, and $x^{(1)}$, $w^{(n(1))}$ described above.

[Equation 5]

$$z^{(l)}(j) = y_j \cdot w_{j \bmod 4}^{(n(l))} \cdot x_{4\lfloor j/4 \rfloor}^{(l)}$$

Here, jmod4 means a surplus when j is divided by 4 and means the maximum integer which does not exceed x. The control channel symbol transmits one symbol by sequential four subcarriers. That is, when the control channel symbol before the scramble is shown by $c^{(1)}$ (i, j), the equation shown below is obtained.

[Equation 6]

$$c^{(l)}(i,0) = c^{(l)}(i,1) = c^{(l)}(i,2) = c^{(l)}(i,3)$$
$$c^{(l)}(i,4) = c^{(l)}(i,5) = c^{(l)}(i,6) = c^{(l)}(i,7)$$
$$c^{(l)}(i,8) = c^{(l)}(i,9) = c^{(l)}(i,10) = c^{(l)}(i,11)$$
$$\bullet$$
$$\bullet$$
$$\bullet$$

Here, $j=0, 1, ... N_c-1$; $i=0, 1, ... N_d-1$, and $i=0$ is defined to an initial OFDM symbol including the control channel symbol.

The control channel signal created from the control channel scramble code shown in the equation 5 and the control channel symbol in the equation 6 is shown by the following equation.

[Equation 7]

$$y_j \cdot w_{j \bmod 4}^{(n(l))} \cdot x_{4 \cdot \lfloor j/4 \rfloor}^{(l)} \cdot c^{(l)}(i,j)$$

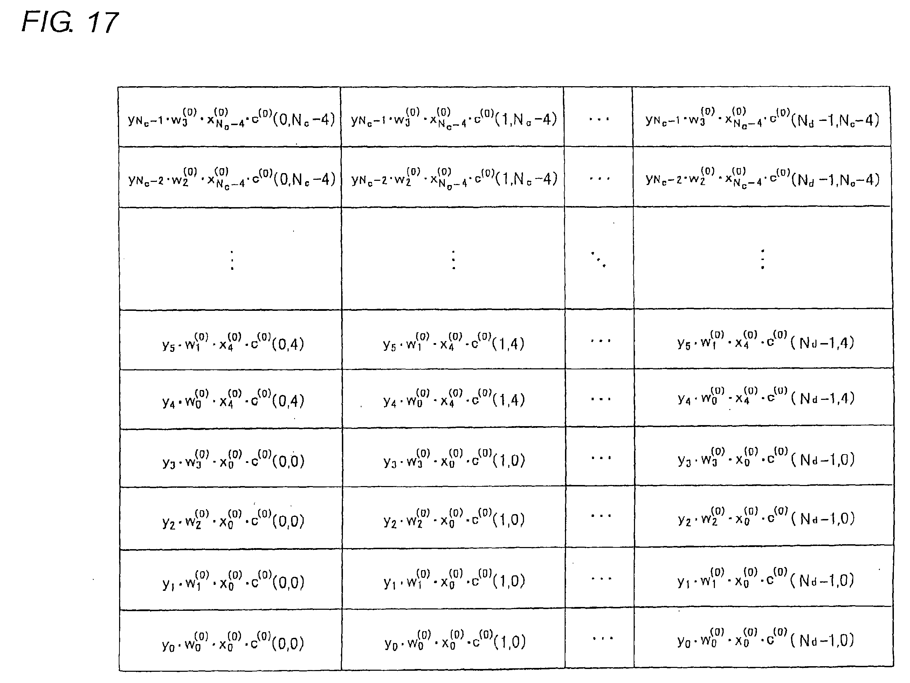

The control channel signals component of the base stations 0, 1 and 2 obtained by the above arrangement are as shown in Figs. 17, 18 and 19, respectively.

Further, the control channel scramble code $z^{(1)}$ is not necessarily arranged by the equation shown in the equation 4, and a different code may be used as long as the relation of the following equation is satisfied to the base station 1 and 1' having a different base station identification number. It is not necessary to use a fixed pattern in the time direction.

[Equation 8]

$$\sum_{j=0}^{3} z^{(l)}(i, j+k) \cdot z^{(l')*}(i, j+k) = 0$$

(where, k=0, 4, 8 ...)

The control signal shown above transmitted from the transmitter 19 of the base station is received by the receiver 39 of the mobile station, and further the symbol of the control channel is extracted by the control channel signal processing unit corresponding to one base station of the control channel signal processing unit 42 as shown in Fig. 12.

A procedure for extracting the control channel symbol will be explained below.

The reception signals received from a plurality of base stations (1=0, 1, ..., M-1) by the receiver 39 of the mobile station is shown by the following equation.

[Equation 9]

$$r(i,j) = \sum_{l=0}^{M-1} h(l,j) \cdot y_j \cdot w_{j \bmod 4}^{(n(l))} \cdot x_{4 \cdot \lfloor j/4 \rfloor}^{(l)} \cdot c^{(l)}(i,j)$$

First, a control channel symbol inverse diffusion unit 51 of the receiver 39 outputs a signal shown by the following equations by multiplying the complex conjugate of a common code Y.

[Equation 10]

$$r'(i,j) = r(i,j) \cdot y_j^* = \sum_{l=0}^{M-1} h(l,j) \cdot w_{j \bmod 4}^{(n(l))} \cdot x_{4 \cdot \lfloor j/4 \rfloor}^{(l)} \cdot c^{(l)}(i,j)$$

and further,

[Equation 11]

$$\sum_{j=0}^{3} w_j^{(n)} \cdot w_j^{(n')*} = \begin{cases} 4, & n = n' \\ 0, & n \neq n' \end{cases}$$

Accordingly, when it is assumed that the channel gains of the adjacent subcarriers are approximately the same as shown in the following equation 12, the received signals, in which the signals of a plurality of base stations, can be converted to four signal having a different base station identification number as shown in the following equation 13.

[Equation 12]

$$h(l,j) \approx h(l,j+1) \approx h(l,j+2) \approx h(l,j+3)$$

(where, I=0, 4, 8 ...)

[Equation 13]

$$u^{(n(l'))}(i,j) = \frac{1}{4} \sum_{j'=j}^{j+3} r'(i,j') \cdot w_{j' \bmod 4}^{(n(l'))*}$$

$$= \sum_{l|n(l)=n(l')} h(l,j) \cdot x_j^{(l)} \cdot c^{(l)}(i,j)$$

$$= h(l',j) \cdot x_j^{(l')} \cdot c^{(l')}(i,j) + \sum_{l|n(l)=n(l'),l \neq l'} h(l,j) \cdot x_j^{(l)} \cdot c^{(l)}(i,j)$$

(where, j=0, 4, 8, ...)
Here, j is a multiple of 4. That is, this means that when the control channel signals of adjacent base stations are separated by multiplying the above equation 8 by the orthogonal code $w_j^{n(1)}$, which as a length of 4 and corresponds to the base station identification number n (1), it is possible to receive and extract separately the control channel signals of base stations having a different base station identification number.
Further, when the inherent scramble code is multiplied by the channel gain obtained from the pilot signal and subjected to inverse diffusion, the control channel symbols $c^{(1)}(i, j)$ of the respective base stations can be extracted.
An equation showing a process for extracting the control channel symbol is shown below.

[Equation 14]

$$v^{(n(l'))}(i,j) = u^{(n(l'))}(i,j) \cdot \hat{h}(l',j)^* \cdot x_j^{(l')*}$$

$$= \frac{1}{4}\sum_{j'=j}^{j+3} r'(i,j) \cdot \hat{h}(l',j)^* \cdot x_j^{(l')*} \cdot w_{j'\bmod 4}^{(n(l'))*}$$

$$= G(i,j,l') \cdot c^{(l')}(i,j) + I(i.j,l')$$

(where, y=0, 4, 8, ...)

Here, G is a channel gain after synthesization, and I is an interference signal component. In the above equation, since an estimated channel gain is used as a weight, although $G \doteqdot |h(l, j)|^2$, it is also possible to determine a different weight from the estimated channel gain. For example, since the assumption of the equation 9 is not established in the environment, in which a communication path has a large amount of delay dispersion and a strong frequency selection property exists, the interference signal component I may be increased. In this case, interference and noise can be suppressed using a weight based on the MMSE (Minimum Mean Square Error) standard.

The receiver 39 of the mobile station can determine whether or not the data included in the traffic channel signals received simultaneously with the control channel signals is data addressed to itself and further from which base station the data is transmitted by receiving the control information of the plurality of base stations having a different base station identification number.

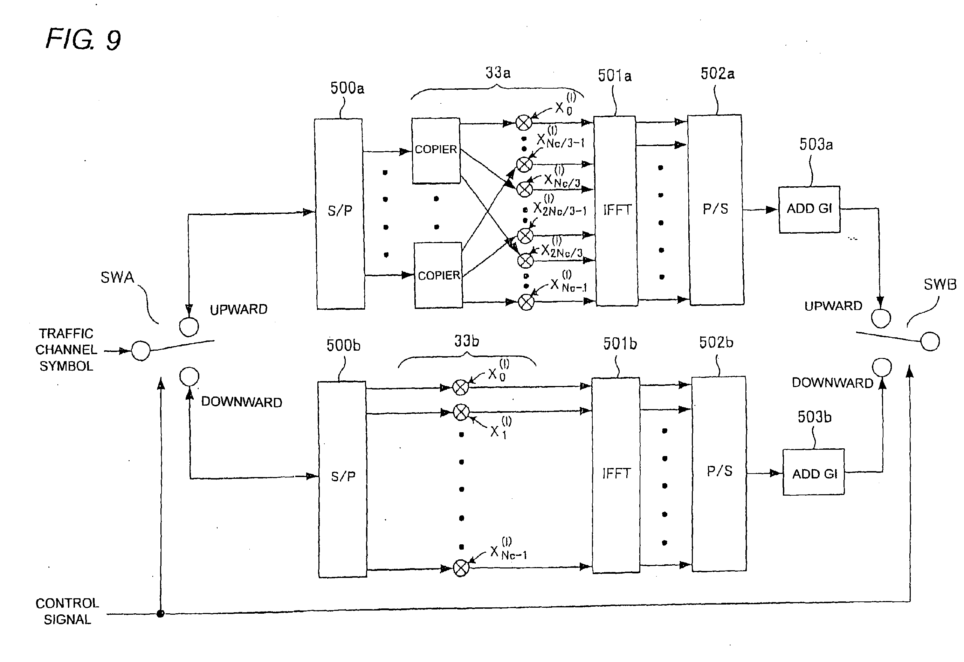

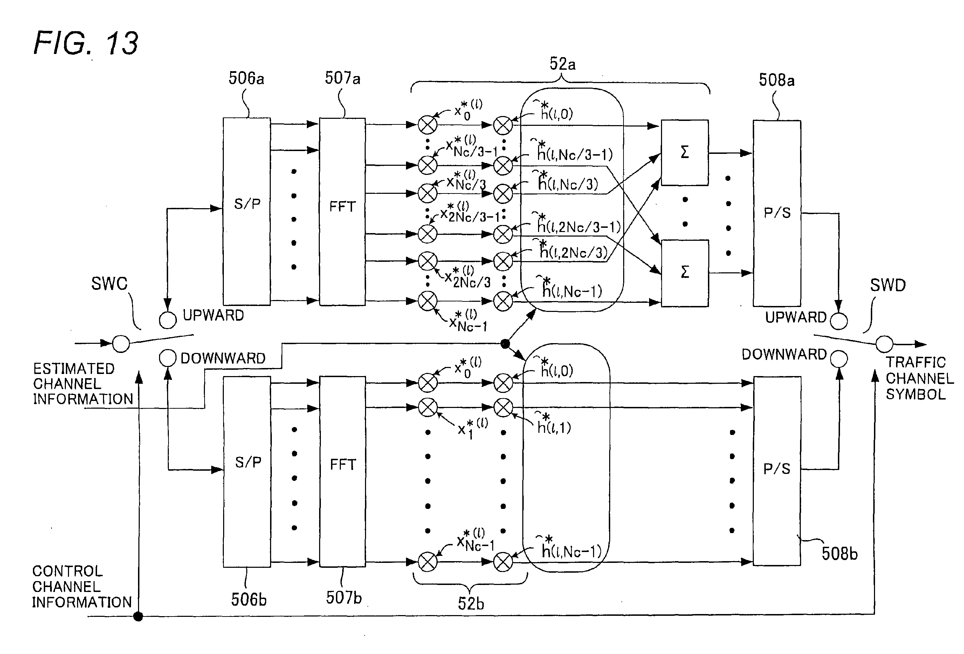

Next, the traffic channel signal and the traffic symbol created in the base station transmitter and the mobile station receiver will be explained with reference to Fig. 9, which is a block diagram of the traffic channel signal creation unit 25 of the transmitter and Fig. 13, which is a block diagram showing the traffic channel signal processing unit corresponding to one base station of the traffic channel signal processing unit 43 of the receiver.

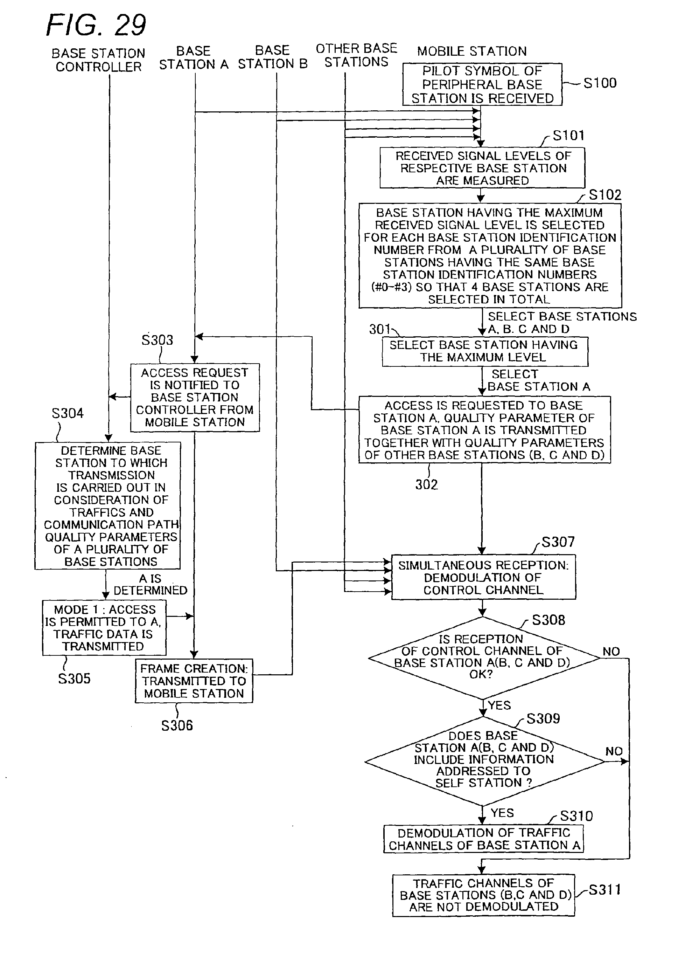

When the mobile station M is positioned in the location D in the vicinity of the base station A, the communication mode is set to the first communication mode as described above, and only the base station A is selected. That is, switches (SW A, SW B) shown in Fig. 9 are turned downward in response to the control signal from the control unit 20, and the traffic channel symbol is input to the traffic channel signal creation unit on a lower side. Then, a matched communication is carried out between the base station A and the mobile station M, the data of the traffic channel is transmitted at the maximum speed. Accordingly, as shown in the conventional example of Fig. 29 (a), the OFDM signal is used as it is. Although, in Fig. 9, SW shows that the communication mode is switched, this is absolutely shown theoretically and does not necessarily mean actual hardware.

The traffic channel signals at the time are as shown in the following equation 15.

[Equation 15]

$$x_j^{(l)} \cdot d^{(l)}(i,j)$$

That is, the traffic channel signals is scrambled by a traffic scramble code multiplication unit 34 using scrambling codes $x_0^{(1)}, x_1^{(1)}, ..., x_{NC-1}^{(1)}$ inherent to the base station 1.

Further, the respective subcarrier component $d^{(1)}(i, j)$ of the OFDM symbol is shown by the following equation to a transmission symbol s(k).

[Equation 16]

$$d^{(l)}(i,j) = s(i \cdot N_c + j)$$

j=0,1, ..., $N_c$-1; i=0,1, ..., $N_d$-1, wherein 1 shows a specific base station number.

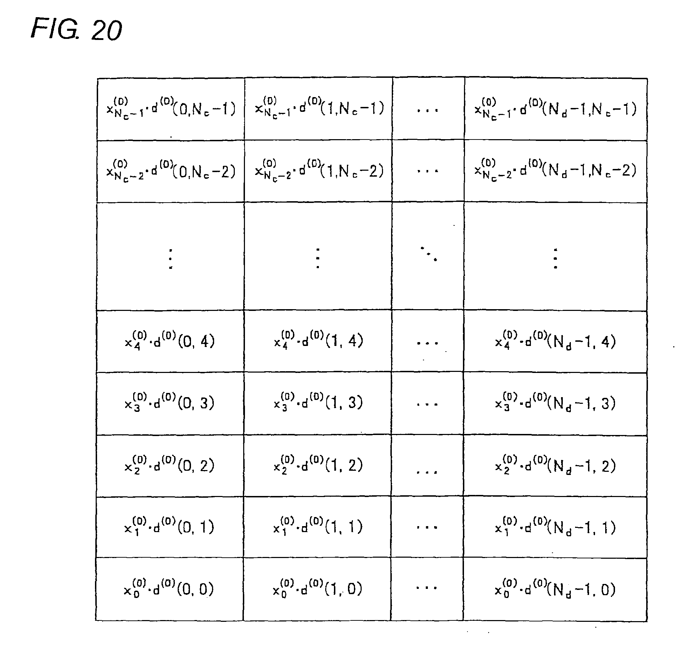

The traffic channel signal components of the base stations 0, 1 and 2 thus obtained by the above arrangement are as shown in Figs. 20, 21 and 22, respectively.

Further, although $x^{(1)}$ is used as the scramble code of the traffic channel, it is not necessarily to use the same scramble code as that of the pilot channel, and a different arbitrary pattern may be used depending on a base station.

Here, to make scramble code used to the traffic channel signal different from that used to the control channel, the signals of both the channels are made to signals independent of each other. Accordingly, as shown in the channel arrangement view of Fig. 5, the signal of the traffic channel is synthesized with the signal of the control channel by the synthesizing unit 26 and transmitted. The synthesized signal is shown by the following equation.

[Equation 17]

$$\sqrt{P_{TCH}} \cdot x_j^{(l)} \cdot d^{(l)}(i,j) + \sqrt{P_{CCH}} \cdot y_j \cdot w_{j \bmod 4}^{(n(l))} \cdot x_{4\lfloor j/4 \rfloor}^{(l)} \cdot c^{(l)}(i,j)$$

The synthesized signal, which is obtained by synthesizing the received traffic channel signal with the received control channel signal, is independently separated by the control channel signal processing unit 42 and the traffic channel signal processing unit 43, respectively, thereby the control channel symbol and the traffic channel symbol of each selected base station are reproduced. A procedure, by which the control channel symbol is reproduced from the separated control channel signal is as described above.

Meanwhile, a procedure for reproducing the traffic symbol in the first communication mode will be explained below.

Switches (SW C, SW D) shown in Fig. 13 are turned downward, respectively in response to the control channel information from the integral controller 46, the traffic channel symbol is input to the traffic channel signal processing unit on the lower side. Then, after the traffic signal is simply multiplied by complex conjugate of the scramble codes $x_0^{(1)}$, $x_1^{(1)}, \cdots x_{Nc-1}^{(1)}$ inherent to the base station 1 and the complex conjugate of the estimated channel gain, it is transmitted to a P/S converter 508b as it is. With this operation, the traffic channel symbol is reproduced.

Next, creation and reproduction of the traffic channel signal and creation and reproduction of the traffic channel symbol when the mobile station M moves from the position D to the location E (location E shown in Fig. 3), in which a communication environment condition is not good and a communication is started in the second communication mode described above will be explained.

When the mobile station M is located in an environment such as that in the location E, since the mobile station M in the location E is far fromthe base station, a signal is attenuated in a large amount and an interference signal power is also large, when a signal similar to that in the location D is transmitted by the same intensity, it cannot be transmitted well in the location E.

Thus, the base stations A, B and C transmit different traffic data to the mobile station, respectively. That is, Nc pieces of symbols are separated to each one third of the symbols in the overall frequency direction and transmitted by respective base stations. One base station can transmit one symbol by diffusing it to the same three symbols.

With this operation, the diffusion OFDM signal which is resistive to interference can be used, thereby communication quality can be enhanced. Here, the switches (SW A, SW B) shown in Fig. 9 are turned upward, respectively, in response to the control signal from the control unit 20, the traffic channel symbol is input to a traffic signal frequency diffusion unit 33 of the traffic channel signal creation unit 25 on the upper side, and the same three data symbols are transmitted using the same three subcarriers, respectively. However, the data symbol is transmitted using subcarriers whose frequencies are separated from each other Nc/3 times the interval between the subcarriers without using adjacent subcarriers. This is shown by the following equation.

[Equation 18]

$$d^{(l)}(i,j) = d^{(l)}(i, N_c/3 + j) = d^{(l)}(i, 2N_c/3 + j) = s((i \cdot N_c/3 + j) + l \cdot N_c \cdot N_d/3)$$

Here, j=0, 1, ..., $N_c$/3-1; i=0, 1, ..., $N_d$-1; 1=0,1, 2.

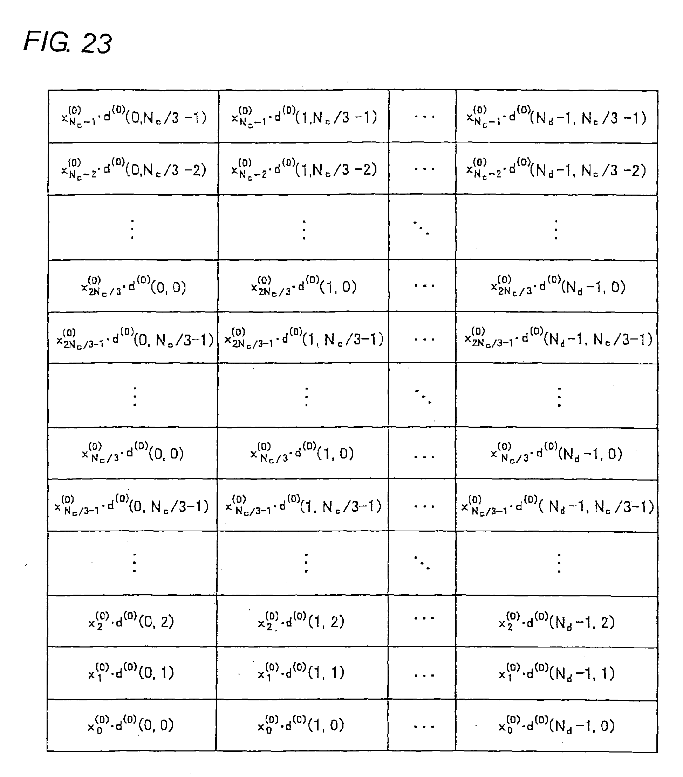

The traffic channel signal components of the base stations 0, 1 and 2 obtained by the above arrangement are as shown in Figs. 23, 24 and 25.

Then, in the receiver of the mobile terminal, the switches (SW C, SW D) shown in Fig. 13 are turned upward in response to control channel information from the integral control unit 46, respectively, the traffic channel signal is input to the traffic channel signal processing unit on the upper side, the signal components of three subcarriers whose frequencies are separated from each other $N_c$/3 times the interval of the subcarriers are synthesized and demodulated, thereby a traffic channel symbol is reproduced as shown by a traffic channel symbol inverse diffusion unit 52a of Fig. 13. As described above, since a frequency diversity effect can be obtained, communication quality can be enhanced by averaging the variation of the levels of the subcarriers.

Further, although a data transmission speed per station is reduced to 1/3 as described above, since signals are received from the three base stations approximately simultaneously, the same transmission speed as that in the location D can be realized even if the mobile station M is positioned in the location E.

Since the control channel signal and the traffic channel signal are transmitted approximately simultaneously by the synthesized signal, the two channel signals may interference with each other. In this case, the control channel is demodulated first, and then the traffic signal may be demodulated after the control channel signal component is cancelled from the synthesized signal. With this operation, the communication quality of the traffic channel signal can be enhanced.

Here, in the traffic channel signal creation unit 25 shown in Fig. 9 and the traffic signal processing unit 43 shown in Fig. 13, the third communication mode, in which a communication is carried out between the transmitter of the one base station described above and the mobile terminal, is carried out using an upper block for carrying out the second communication mode. Since only one third the overall symbols are processed in the block, three times as long as a usual time is required to process the overall symbols. Accordingly, a data transmission speed is reduced to one third.

Although the complex conjugate of the estimated channel gain is used as a weight in the traffic channel processing shown in Fig. 13, it is also possible to obtain a different weight likewise the case of the control channel. That is, interference and noise can be suppressed by obtaining a weight by which the influence of other base station signal approximately simultaneously transmitted can be reduced based on the MMSE (Minimum Mean Square Error) standard.

Furthermore, traffic channel data having a smaller amount of errors can be obtained by a demodulation method of finding a most reliable combination of transmission symbols by simultaneously processing the signals from a plurality of base stations based on MLD (Maximum Likelihood Detection) and a method of outputting the likelihood information of the respective bits of the traffic channel symbols transmitted from respective base stations and carrying out soft determination decoding by a decoder.

Next, respective embodiments of a base station selection control method of the overall system in the data communication among the base station controller, the plurality of base stations, and the mobile station described above will be explained below using flowchart, wherein the method includes a base station selection step of selecting a base station and a communication mode by the base station controller and a step of controlling selection of base station candidates to be communicated with the mobile station receiver and reception of data from a final base station.

<Explanation of First Embodiment>

The present embodiment is an example of the base station selection control method when the mobile station receiver measures the receiving levels of the respective base stations, selects base station candidates according to the quality of a communication path, and thereafter also selects a final base station (which results in selection of a communication mode).

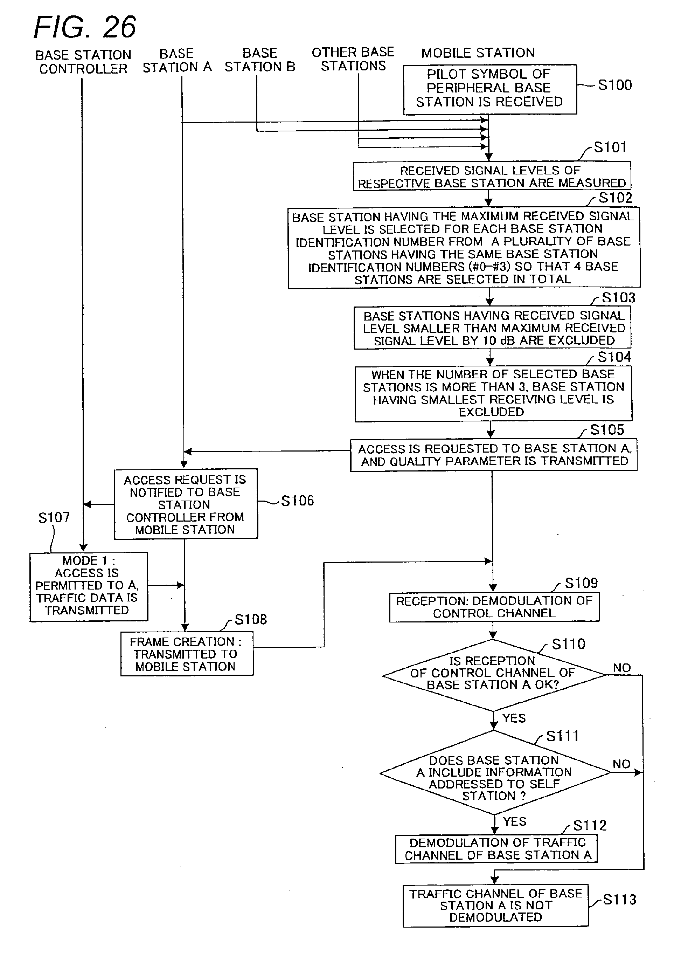

Fig. 26 is a flowchart showing a procedure when one base station is selected by a base station selection means of the receiver in the mobile station M and the first communication mode is selected by the base station controller.

Operations of the base station controller, the base station, and the mobile station will be explained below based on the flowchart shown in Fig. 26.

First, the pilot channel signal processing unit 41 receives the pilot signal of a peripheral base station (step S100). Then, the pilot channel signal processing unit 41 measures the received signal levels of respective peripheral base stations (step S101).

Next, a base station selection means of the integral control unit 4 6 selects a base station having the maximum received signal level in the received signal levels of the measured base stations for each base station identification number from a plurality of base stations having the same base station identification numbers (#0 - #3) at step S101 to thereby select, for example, four base stations (step S102).

Next, the base stations whose received signal level is lower than a predetermined dB are eliminated fromthe base station having the maximum received signal level (step S103). Further, when the number of the selected base stations is more than three, a minimum receiving level is eliminated (step S104). Thepresent embodiment (Fig. 26) shows an example in which the mobile station M is positioned in a location near to the base station A, and since only the base station A has a very high receiving level, only the base station A is selected.

Next, at step S105, an access request is transmitted to the selected base station A. Then, the information and the data such as a communication quality parameter and the like of the selected base station A are transmitted to the base station A.

On receiving the access request, the base station A transmits the access request from the mobile station M to the base station controller 14 as well as transmits the information and the communication quality parameter of the base station A whose information is selected (step S106).

When the base station controller 14 accepts the access request from the base station A, it transmits an access permission to the base station A as well as determines a communication mode to the first communication mode, and transmits control information and traffic data (step S107).

Next, on receiving the access permission from the base station controller, the base station A creates a frame including the synthesized signal of the control channel signal and the traffic channel signal and transmits the frame to the mobile station A (step S108). Then, the receiver of the mobile station receiver M demodulates the control channel signal from the selected base station (step S109).

Further, whether or not the decoded control channel data includes an error using a CRC (Cyclic-Redundancy-Check) code and the like is determined (step,110), and when the decoded control channel data without error can be received (step S 110; Yes), it determines whether or not the traffic channel signal includes information addressed to itself based on the received control information (step S111), and when the information addressed to itself is included (step S111; Yes), a processing for demodulating, decoding the traffic channel of the base station A is carried out (step S112).

When the received control channel data includes an error (step S110; No) at step S110 or when it is found at step S111 that no information addressed to itself is included (step S111; No), no subsequent processing is carried out to the traffic channel signal of the base station A thereafter (step S113).

Here, it is also possible to employ a method of receiving the control channel of a reception candidate base station and detecting an error by a CRC code and the like, and when it is found that no error is included (step S110; Yes), creating a replica of the control channel signal, demodulating the traffic channel of the base station signal by canceling the replica from the received signal.

Further, as a basis for selecting a base station, a method of setting a sequence by the transmission loss of a radio communication path may be employed in addition to the above method of using the received signal level. Further, there is also a method of setting a sequence using a received signal timing and an amount of transmission delay to use a distance to a base station as the basis.

<Explanation of Second Embodiment>

The present embodiment is an example of the base station selection control method when the mobile station receiver measures the receiving levels of the respective base stations, selects candidates of a base station according to the quality of a communication path, and thereafter selects a plurality of final base stations. The second embodiment is different from the first embodiment in that it is an example of a base station selection control method by which the base station controller determines a final communication mode according to the allowance of a traffic amount.

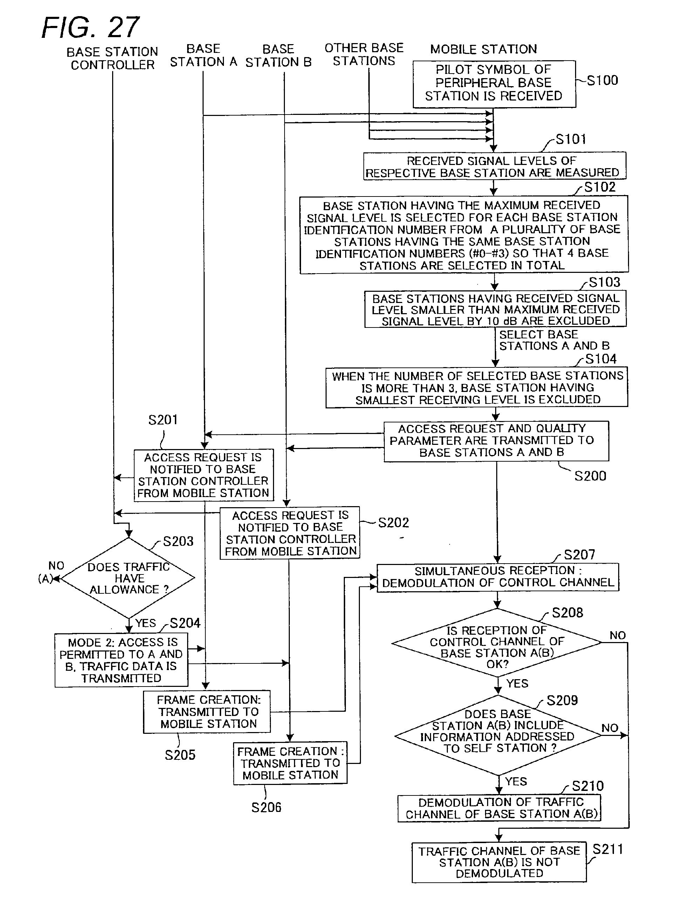

Further, Fig. 27 is a flowchart showing a procedure when a base station selection means of the receiver in the mobile station M selects a plurality of base station candidates and determines final base stations, and thereafter the base station controller selects the second communication mode.

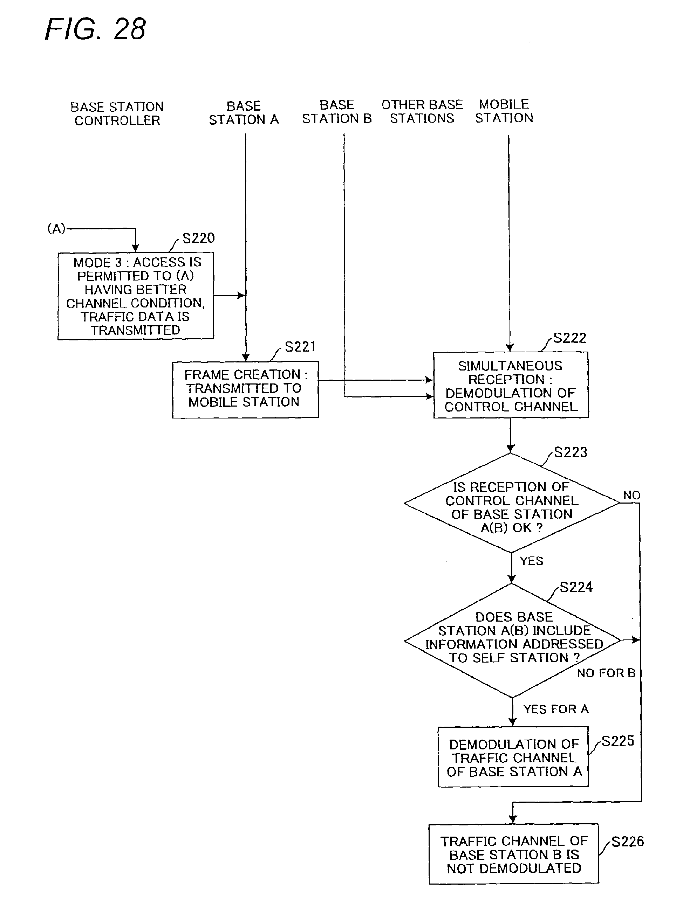

Further, Fig. 28 is a flowchart showing a procedure when a base station selection means of the receiver in the mobile station M selects a plurality of base station, and the base station controller selects the third communication mode.

Operations of the base station controller, the base station, and the mobile station will be explained below based on the flowchart shown in Figs. 27 and 28.

Since the processings from step S100 to step S104 are the same as those shown in the flow shown in Fig. 26, the explanation thereof is omitted. However, the present embodiment (Figs. 27 and 28) shows an example in which the mobile station M is positioned in the vicinity of the boundary between the base stations A and B, and the base stations A and B have approximately the same receiving level. As a result, the base stations A and B are selected. At step S104, when the base stations A, B, which have a difference of the receiving level within a predetermined range, are selected, the mobile station M transmits an access request to the base stations A and B as well as transmits the information by which they are selected and the communication quality parameters thereof (step S200).

On accepting the access request, the base station A transmits the access request from the mobile station M to the base station controller and also transmits the communication quality parameter of the base station A (step S201). Likewise, on accepting the access request, the base station B also transmits the access request from the mobile station M to the base station controller and also transmits the communication quality parameter of the base station B (step S202).

On accepting the access requests from the base stations A and B, the base station controller determines whether or not the traffic amounts of the respective cells of the base stations A, B have an allowance, and the like (step S203). When the traffic amounts have the allowance (step S203; Yes), the base station controller transmits an access permission to the base stations A and B as well as set a communication mode to the second communicationmode and transmits control information and traffic data corresponding to the communication mode (step S204).

On accepting the access permission, the base stations A and B create frames to the mobile station M, respectively and transmit them approximately simultaneously (steps S205 and S206).

Next, the receiver of the mobile station receiver M receives the control channel signals from the base stations A and B approximately simultaneously and demodulates them (step S207). The receiver of the mobile station M determines whether or not it receives the control channel data from the base stations A and B without error, (step S208), and when it can receive the control channel data without error (S208; Yes), it determines whether or not information addressed to itself is included in the control channel data (step S209), and when the information addressed to itself is included (step S209; Yes), a demodulation and decode processing to the traffic channel are carried out (step S210).

When a receiving error occurs at step S208 (step S208; No), or when no information addressed to the self station is included at step S209 (step S209; No), it does not demodulate the traffic channel signal (step S211) and processes only the signal of the base station, in which it is found that the information addressed to itself is included.

Next, when a determination condition is not satisfied at step S203 (step S203; No), the flow goes to a processing (A) shown in Fig. 28. Any one of the base stations A and B having a better communication condition is selected in the state that the two base stations A and B are selected. It is assumed here that the base station A is selected. The base station controller sets a communication mode the third communication mode, issues an access permission to the base station A, and transmits control information and traffic data (step S220).

On accepting the access permission, the base station A creates a frame and transmits it to the mobile station M (step S221).

At the time, the mobile station M does not have information indicating that the mode 3 is selected, and data is transmitted from the base station A. Accordingly, the mobile station M operates to receive the signals of both the base stations A and B from which the access requests are transmitted. The receiver of the mobile station M approximately simultaneously receive the control channel signals of the base stations A and B and demodulate them (step S222). Then, whether or not the demodulated control channel data of the base station A or B can be received without error is determined (step S223), and when it can be received without error (step S223; Yes), whether or not information addressed to itself is included in the control channel data is determined (step S224), and when the information addressed to self station is included, (step S224; Yes), a processing for demodulating and decoding the traffic channel of the base station is carried out (step S210).

When the data is received with error at step S223 (step S223; No) or when no information addressed to itself is included at step S224 (step S224; No), no subsequent processing is carried out to the traffic channel signal (step S226).

<Explanation of Third Embodiment>

The present embodiment is an example of the base station selection control method in which after the mobile station receiver measures the receiving levels of the respective base stations and selects base station candidates having the maximum receiving level, the base station controller selects a final base station.

Further, Fig. 29 is a flowchart showing a procedure when the base station selection means of the mobile station receiver selects base station candidates having the maximum receiving level, and the base station selection means of the base station controller selects a final the base station and the first communication mode.

Operations of the base station controller, the base station, and the mobile station will be explained below based on the flowchart shown in Fig. 29.

Since the processings from step S100 to step S102 are the same as those shown in the flow shown in Fig. 26, the explanation thereof is omitted. The present embodiment (Fig. 29) shows an example in which the mobile station M is positioned in the vicinity of the base station A, and since the receiving level of the base station A has the maximum level, the base station A is selected (step S301). The mobile station M transmits an access request only to the base station A as well as transmits the receiving level information and the communication quality parameters of the base station candidate A, B, C and D selected at step S102 (step S302).

On accepting the access request, the base station A transmits the access request from the mobile station M to the base station controller and transmits the communication quality parameters of the base stations A, B, C and D (step S303).

On accepting the access request from the base station A, the base station selection means of the base station controller finally selects the base station A in consideration of the allowances of the traffic amounts of respective cells of the selected the base stations A, B, C and D and the communication quality parameters thereof (step S304). Then, the base station selection means sets a communication mode to the first communication mode, gives an access permission to the base station A, and transmits traffic data (step S305).

On accepting the access permission, the base station A creates a frame to the mobile station M and transmits it (step S306).

Next, the receiver of the mobile station M receives the control channel signal from the selected base station A and demodulates it (step S307). The receiver of the mobile station M determines whether or not the control channel data of the base station A can be received without error (step S308), and when it can be received without error (step S308; Yes), the receiver determines whether or not information addressed to itself is included in the control channel data (step S309), and when the information addressed to itself is included (step S309; Yes), the demodulation/decode processing to the traffic channel is carried out (step S310).

When the data is received with error at step S308 (step S308; No) and further when no information addressed to itself is included at step S209 (step S209; No), the traffic channel signal is not demodulated (step S311), and only the signal of the base station, in which it is found that the information addressed to itself is included, is processed.

<Explanation of Fourth Embodiment>

The present embodiment is an example of the base station selection control method in which after the mobile station receiver measures the receiving levels of the respective base stations and selects base station candidates having the maximum receiving level, the base station controller selects a final base station.

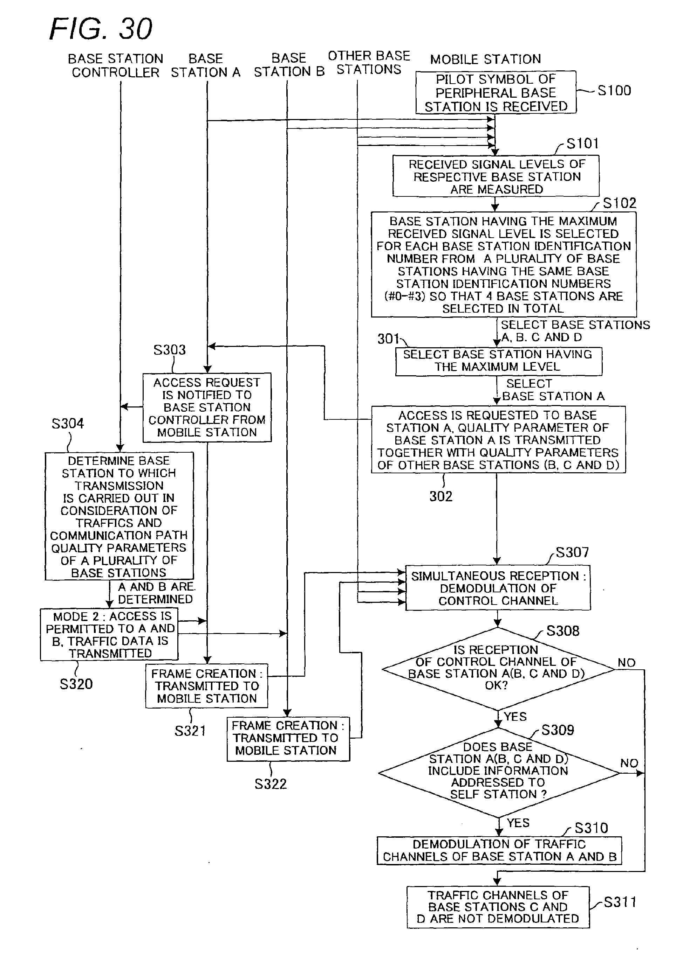

Further, Fig. 30 is a flowchart showing a procedure when the base station selection means of the mobile station receiver selects base station candidates having the maximum receiving level, and the base station selection means of the base station controller selects a final base station and the second communication mode.

The difference from the third embodiment resides in the case which the mobile station is positioned in the vicinity of the boundary of the base stations A and B. In this case, at step 304, the base station selection means of the base station controller finally selects the base stations A and B from the traffic amounts and the communication quality parameters of the selected base stations. Then, the base station selection means sets a communication mode to the second communication mode, permits an access to the base stations A and B, and transmits traffic data thereto. Subsequent processings are the same as those of the second embodiment.

<Explanation of Fifth Embodiment>

The present embodiment is an example of the base station selection control method when the mobile station receiver measures the receiving levels of the respective base stations, selects base station candidates according to the quality of a communication path, and thereafter selects a plurality of final base stations. The processing contents of the fifth embodiment are approximately the same as those the second embodiment described above. The difference from the second embodiment resides in that the base station controller determines a final communication mode by determining whether or not data to be transmitted is real time data (priority data).

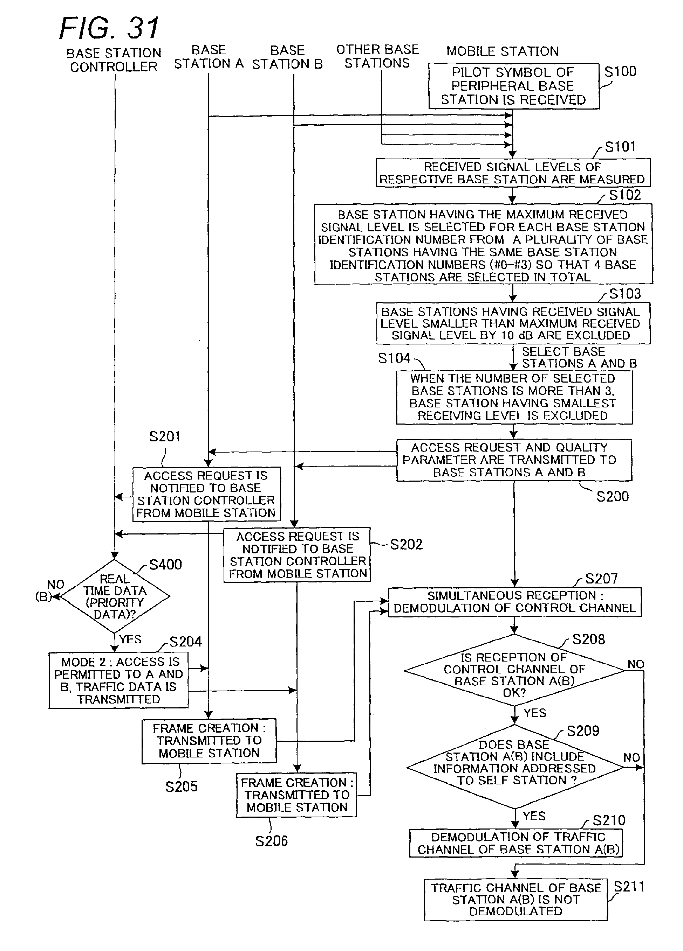

Fig. 31 is a flowchart showing a procedure in which after the base station selection means of the mobile station receiver selects base station candidates and determines a final base stations, the base station selection means of the base station controller selects the second communication mode.

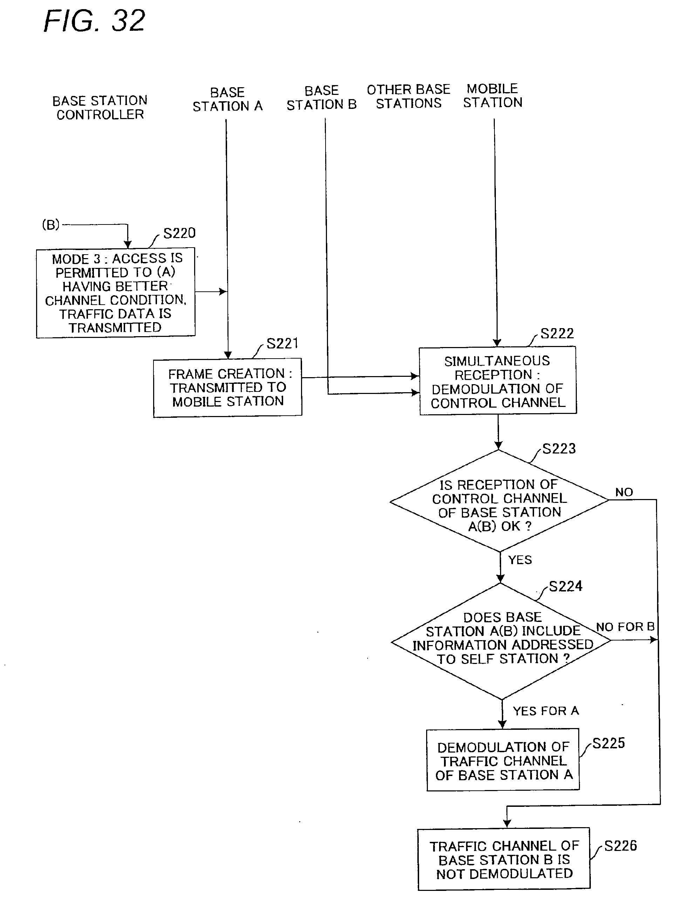

Further, Fig. 32 is a flowchart showing a procedure when the third communication mode is selected by the base station selection means of the base station controller.

A determination processing for determining whether or not the data to be transmitted is the real time data (priority data) is carried out by the base station controller at step S400 shown in Fig. 31. When it is determined at step S400 that the data is the real time data (step S400; Yes), the flow goes to a communication mode determination processing at step S204, whereas when the data is a not the real data (step S400; No), the flow goes to step 220 of Fig. 32 shown in (B).

<Explanation of Sixth and Seventh Embodiments>

The sixth and seventh embodiments are examples of the base station selection control method in which after the mobile station receiver measures the receiving levels of the respective base stations and selects base station candidates having the maximum receiving level, the base station controller selects a final base station, and the contents of processing are approximately the same as those of the third and fourth embodiments described above. The difference from the third and fourth embodiments resides in that the base station controller determines whether or not the data to be transmitted is the real time data (priority data) and determines a base station (step S330 and step S340).

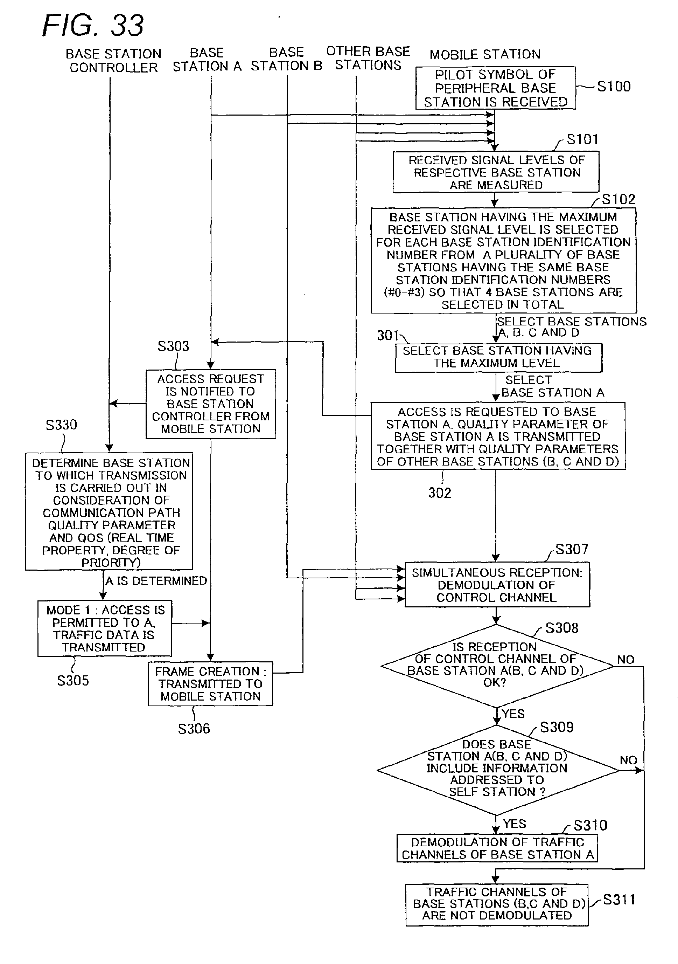

Fig. 33 is a flowchart showing a procedure when the base station selection means of the mobile station receiver selects base station candidates having the maximum receiving level and the base station selection means of the base station controller selects a final base station and the first communication mode.

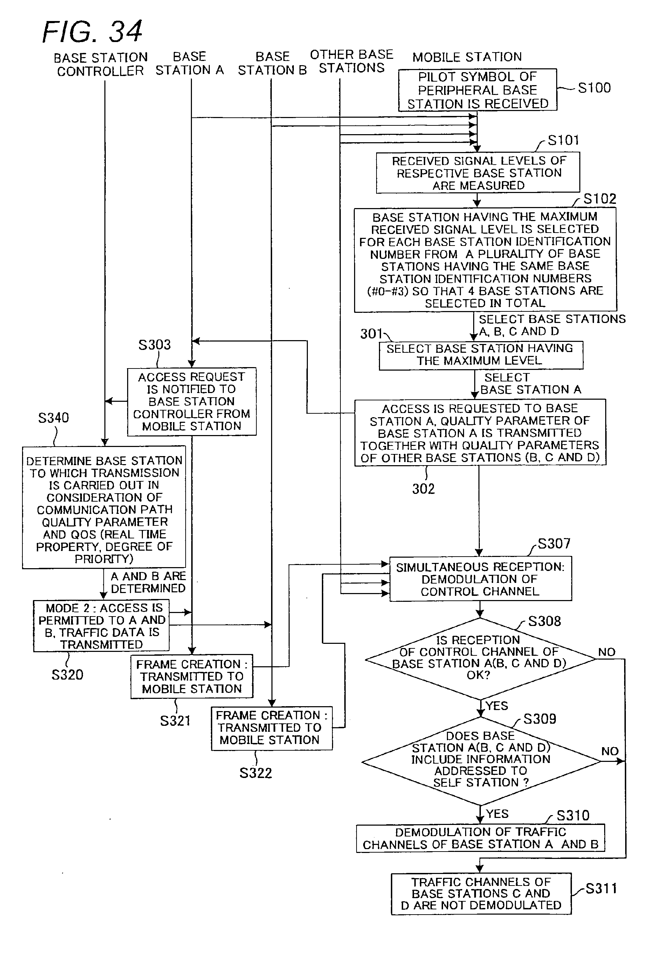

Further, Fig. 34 is a flowchart showing a procedure when the base station selection means of the mobile station receiver selects base station candidate having the maximum receiving level, and the base station selection means of the base station controller selects a final station and the second communication mode.

<Explanation of Eighth and Ninth Embodiments>

The eighth and ninth embodiments are examples of the base station selection control method in which after the mobile station receiver measures the receiving levels of the respective base stations and selects base station candidates having the maximum receiving level, the base station controller selects a final base station, and the contents of the embodiments are approximately the same as those of the sixth and seventh embodiments described above. The difference from the sixth and seventh embodiments resides in the following points.

The base station controller determines a final communication mode by determining whether or not the data to be transmitted is the real time data (priority data), and a selected base station creates a frame and transmits traffic data to the mobile station. In this case, the mobile station requests an access to a base station having the best communication path state, demodulates the control channel data of the base station, and demodulates the traffic channel data of a base station having information addressed to the self station (steps S351 and step S352).

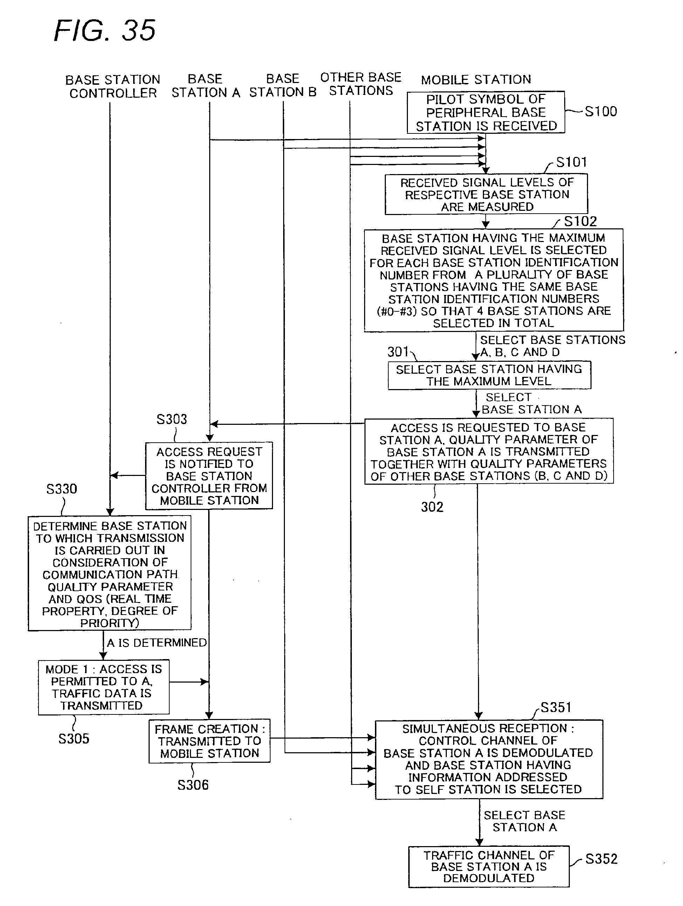

Fig. 35 is a flowchart showing a procedure when the base station selection means of the mobile station receiver selects base station candidates having the maximum receiving level, and the base station selection means of the base station controller selects a final station and the first communication mode.

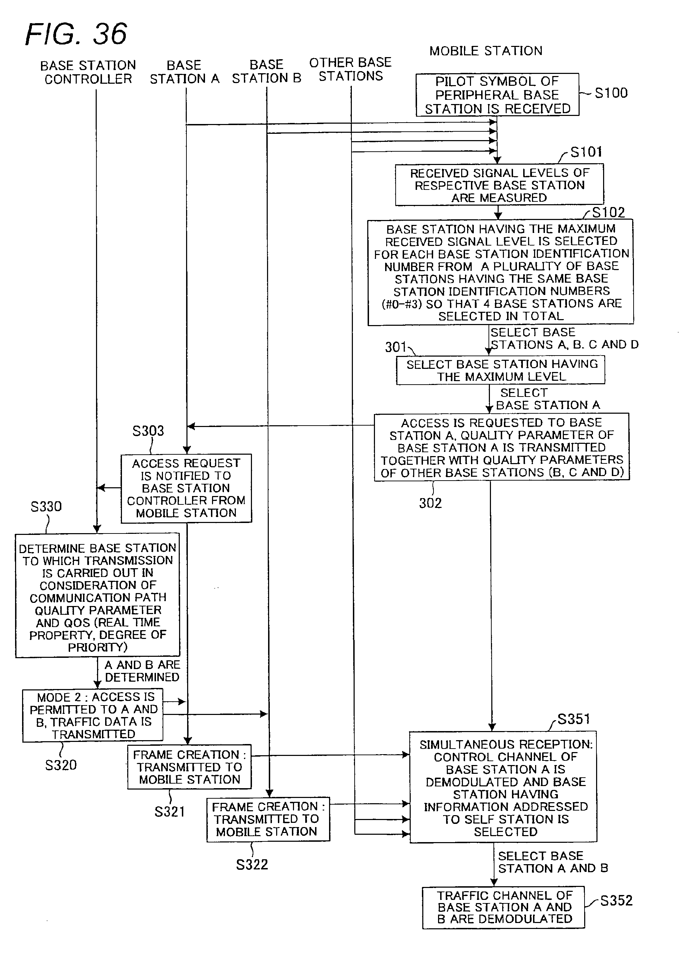

Further, Fig. 36 is a flowchart showing a procedure when the base station selection means of the mobile station receiver selects base station candidates having the maximum receiving level, and the base station selection means of the base station controller selects a final station and the second communication mode.

As described above, it is possible to automatically select an appropriate base station and an appropriate communication mode according to a communication environment state.

A method of issuing a request for setting a physical channel (access request) from the mobile station side and finally determining a base station, which transmits downlink data, by the base station controller has been described above. However, there are a case in which data is downloaded by accessing to a server on the Internet from a mobile station and a case in which data is transmitted to a mobile station from, for example, a mail server and the like on the Internet depending on an application level. There is also a case in which mobile stations belonging to wireless access network transmit and receive data therebetween. Further, although the present description does not describe a method of setting a physical channel on an uplink and a call request to a mobile station, they can be solved by combining the present invention with existing technologies.

When a mobile station is called from a server on the Internet and from other mobile station through a wireless network, it is also possible that the base station controller transmits a call signal through a base station to which a mobile station finally accesses or a plurality of adjacent base stations, and a mobile station, which receives the call signal, sets a radio communication channel according to the above step S100 and subsequent steps.

It is needless to say that the cellular mobile communication system according to the present invention is not limited to the above embodiments and may be variously modified within the scope which does not depart from the gist of the present invention.

INDUSTRIAL APPLICABILITY

The cellular mobile communication system, the base station transmission device and the mobile station receiving device in the cellular mobile communication system, and the base station selection control method of the cellular mobile communication system of the present invention set the communication mode for carrying out a transmission while enhancing communication quality by reducing a communication speed without dividing a communication data amount. As a result, it is possible to increase the operation rate of a base station as well as to increase a communication speed even in a bad communication environment condition, and thus the present invention can be widely applied to a mobile communication system which is requested to increase a communication speed and the like.

**Claims**

1. A cellular mobile communication system in which a mobile station can approximately simultaneously receive radio signals from a plurality of base stations in the vicinity of the mobile station, **characterized by** comprising:

   a base station transmitter having a first communication mode for transmitting predetermined communication data amount at an approximately maximum communication speed and a second communication mode for transmitting communication data obtained by dividing the predetermined communication data amount at a predetermined ratio while enhancing communication quality in place of lowering a communication speed;
   a mobile station receiver capable of receiving transmission data transmitted by the first communication mode and the second communication mode; and
   a base station controller having communication means for carrying out a communication to the outside and carrying out the radio resource control of the overall system including how much data amount is to be distributed to any base stations of the plurality of the base stations when the transmission data obtained by the communication means is transmitted to the mobile station,
   wherein the first communication mode is a mode for carrying out a communication between a transmitter of one base station of the plurality of base stations and the mobile station receiver, whereas the second communication mode is a mode used when a communication environment condition is not good as compared with the communication environment condition in which the first communication mode is used and is a mode used when the communication data, which are transmitted from a plurality of base stations in the vicinity of the mobile stations selected by the base station controller and divided by the base station controller, are approximately simultaneously received by the mobile station receiver and a communication is carried out while securing a predetermined communication speed as compared with the above approximately maximum communication speed.

2.  The cellular mobile communication system according to claim 1, **characterized in that**:

the base station transmitter further has a third communication mode as a mode for carrying out a communication between the transmitter of one base station of the plurality of base stations and the mobile station receiver likewise the first communication mode while enhancing communication quality in place of lowering a communication speed likewise the second communication mode without dividing the predetermined communication data amount and transmits transmission data to the mobile station receiver by the third communication mode; and the mobile station receiver receives the transmission data transmitted by the third communication mode.

3.  The cellular mobile communication system according to claim 1 or 2, **characterized in that**:

the mobile station comprises base station selection means for automatically selecting a plurality of base stations in the vicinity of the mobile station,
wherein the base station selection means measures the receiving levels of radio signals from a plurality of base stations, respectively, selects a predetermined number of base stations based on the measured receiving levels, and transmits the receiving levels or the parameters showing communication path quality corresponding to the receiving levels to the base station controller through one or a plurality of base stations of the selected base stations.

4.  The cellular mobile communication system according to claim 3, **characterized in that**:

the base station controller comprises a base station selection means capable of automatically selecting a plurality of base stations in the vicinity of the mobile station,
wherein the base station selection means receives selection information including the receiving levels or the parameters showing the communication path quality corresponding to the receiving levels from the mobile station through a base station and selects a base station based on the selection information.

5.  The cellular mobile communication system according to claim 3 or claim 4, **characterized in that**:

after the base station controller selects the base station, the base station controller determines whether or not the communication condition between the base station transmitter and the mobile station receiver is good, and when the base station controller determines that the communication condition is good, the base station controller selects the first communication mode so that a communication is carried out between the base station and the mobile station in the first communication mode;
whereas when the base station controller determines that the communication condition is not good, the base station controller selects the third communication mode according to the communication traffic amount in a cell and communication service quality provided with respective mobile station so that a communication is carried out between the selected base station and the mobile station.

6.  The cellular mobile communication system according to any one of claim 1 to claim 5, **characterized in that** the first communication mode is a communication mode for carrying out a high speed data communication using a wideband signal including an OFDM signal, and the second or third communication mode is a communication mode for carrying out a communication by a signal which is a wideband signal including a diffusion OFDM signal and has a high interference resistance.

7.  The cellular mobile communication system according to any one of claim 1 to claim 5, **characterized in that** the first communication mode is a communication mode for carrying out a high speed data communication using a wideband signal including an OFDM signal having a high modulation multivalue number or a high coding ratio, and the second or third communication mode is a communication mode for carrying out a communication by a signal which is a wideband signal including an OFDM signal having a low modulation multivalue number or a low coding ratio and is a signal having a high interference resistance.

8. The cellular mobile communication system according to claim 6, **characterized in that** when the diffusion OFDM signal is used in the second or the third communication mode, an interference resistance property is more increased by allocating orthogonal subcarriers having frequencies spaced apart from each other a predetermined interval to a plurality of the same data, respectively and carrying out a frequency diversity reception by transmitting the diffusion OFDM signal and receiving signals passing through communication paths having different characteristics.

9. The cellular mobile communication system according to any one of claim 1 to claim 8, **characterized in that** the plurality of base stations have identification numbers for permitting the signals of respective base stations to be received at the same time while being distinguished, respectively, base stations located in the vicinity of respective base stations are grouped so that they do not have the same base station identification number, and the mobile station receiver approximately simultaneously receives a plurality of base stations having the different base station identification numbers.

10. A cellular mobile communication system comprising a plurality of base stations, a mobile station reception device capable of approximately simultaneously receiving radio signals from a plurality of base station in the vicinity of respective base stations, and a base station controller, **characterized in that**:

   each of the plurality of base stations comprises transmission means for receiving an access request transmitted from the mobile station and transmitting the access request to the base station controller; and
   the base station controller comprises communication resource determination means for determining howmuch data amount is to be distributed to any base stations of the plurality of base stations which receive the access request.

11. The cellular mobile communication system according to claim 10, **characterized in that** the plurality of base stations, which are grouped so that they do not belong to the same group to which adjacent base stations belong, have base station identification numbers corresponding to the group thereof.

12. A base station transmission device in a cellular mobile communication system mobile station for approximately simultaneously receiving radio signals from a plurality of base stations in the vicinity of a mobile station, **characterized by** comprising:

   a pilot channel signal creation unit for creating a pilot channel signal for carrying out a channel estimation including the measurement of the receiving levels of the respective base stations;
   a traffic channel signal creation unit for creating a traffic channel signal for transmitting traffic data;
   a control channel signal creation unit for creating a control information signal including the destination information of the traffic data; and
   synthesization means for creating a synthesized signal by synthesizing the control channel signal created by the control channel signal creation unit and the traffic channel signal created by the traffic channel creation unit, wherein a transmission efficiency is enhanced by creating a transmission signal by multiplexing the pilot channel signal created by the pilot channel signal creation unit and the synthesized signal created by the synthesization means; and
   the transmission signal is transmitted by switching a first communication mode for transmitting a predetermined communication data amount at an approximately maximum communication speed from one base station of the plurality of base stations, a second communication mode for transmitting communication data obtained by dividing the predetermined communication data amount at a predetermined ratio from the plurality of base stations while enhancing communication quality in place of lowering a communication speed, or a third communication mode for transmitting the predetermined communication data amount from one base station of the plurality of base stations without dividing the predetermined communication data amount likewise the first communication mode while enhancing communication quality in place of lowering a communication speed likewise the second communication mode according to a communication environment state.

13. The base station transmission device in a cellular mobile communication system according to claim 12, **characterized in that** the plurality of base stations have identification numbers for permitting the signals of respective base stations to be received at the same time while being distinguished, respectively, base stations located in the vicinity of respective base stations are grouped so that they do not have the same base station identification number, and the mobile station receiver approximately simultaneously receives a plurality of base stations having the different base station identification numbers.

**14.** The base station transmission device in a cellular mobile communication system according to claim 13, **characterized in that** the pilot channel signal creation unit comprises means for multiplying a pilot channel scramble code which is different to each of the plurality of base stations and a pilot pattern for distinguishing a base station having the different base station identification number described above.

**15.** The base station transmission device in a cellular mobile communication system according to claim 13 or claim 14, **characterized in that** the control channel signal creation unit comprises means for multiplying the control channel scramble code created using an orthogonal code, which corresponds to the scramble code common to the plurality of base stations and to the base station identification number by the control channel symbol in which continuous symbols larger than an orthogonal code length corresponding to the base station identification number have the same value, wherein the control channel signal of a different base station identification number is created such that it is made to a signal having an orthogonal relation.

**16.** The base station transmission device in a cellular mobile communication system according to any one of claim 12 to claim 15, **characterized in that** the traffic channel signal creation unit comprises means for multiplying a traffic channel scramble code different to each of the plurality of the base stations by the traffic channel symbol which have the value of the traffic channel symbol which changes corresponding to traffic data in the first communication mode or in which a plurality of symbols are disposed continuously or at predetermined intervals according to a communication environment state to secure communication quality in the second or third communication mode.

**17.** The base station transmission device in a cellular mobile communication system according to claim 13, **characterized** that when a pilot channel signal as an OFDM signal is created, a time axis component in the frame of the OFDM signal is shown by i, and a subcarrier component is shown by j, the pilot channel signal creation unit creates a predetermined number of pilot signals so that estimation of an accurate channel gain and measurement of accurate receiving power can be carried out by multiplying a scramble code $x^{(1)}$ inherent to the base station having a base station number (1) by a pilot pattern $w_i^{(n(1))}$ corresponding to the base station identification number $n^{(1)}$, to which the base stations are added for each group, while shifting the times of them.

**18.** The base station transmission device in a cellular mobile communication system according to claim 13 or claim 17, **characterized in that**:

when a time axis component in the frame of the diffusion OFDM signal is shown by i, and a subcarrier component is shown by j, the control channel signal creation unit, which creates a control channel signal as an diffusion OFDM signal, creates a control channel signal as a diffusion OFDM signal obtained by subjecting a control channel symbol $c^{(1)}$ to diffusion processing using a scramble code $y_j$ as a control channel common code, an orthogonal code $w_i^{(n(1))}$ according to a base station identification number n(1) for permitting the signals of respective base stations to be distinguished and simultaneously received, and a scramble code $x_j^{(1)}$ inherent to the base station; and
the mobile station receiver obtains the control information by separating the control channel signal from the plurality of the base stations having a different base station identification number.

**19.** The base station transmission device in a cellular mobile communication system according to any one of claims 13, 17 or 18, **characterized in that** when a traffic channel signal as an OFDM signal or a diffusion OFDM signal is received, a time axis component in the frame of the OFDM signal or the diffusion OFDM signal is shown by i, and a subcarrier component is shown by j, the traffic channel creation unit carries out creation of a traffic channel signal $(x_j^{(1)} \times d^{(1)})$ as the OFDM signal which is obtained by multiplying traffic channel data $d^{(1)}$ by the scramble code $x_j^{(1)}$ inherent to the base station in the first communication mode and creation of a traffic channel signal as the diffusion OFDM signal which is obtained by subjecting the traffic channel data, in which the traffic channel data $d^{(1)}$ is separated to a plurality of groups, to a frequency diffusion processing using the scramble code $X_j^{(1)}$ inherent to the base station in the second or the third communication mode.

**20.** The base station transmission device in a cellular mobile communication system according to claim 18 or claim 19, **characterized in that** the scramble code $y_j$ as the control channel common code is a scramble code different from the scramble code $X_j^{(1)}$ inherent to the base station.

**21.** The base station transmission device in a cellular mobile communication system according to any one of claim 12 to claim 20, **characterized by** further comprising a control unit for creating control channel data, wherein the control unit is input with communication mode information from a base station controller for carrying out a selection processing for selecting a base station and a communication mode, creates a communication mode switch signal, and controls the traffic channel signal creation unit.

22. A mobile station reception device in a cellular mobile communication system for approximately simultaneously receiving radio signals from a plurality of base stations in the vicinity of a mobile station, **characterized by** comprising:

a pilot channel signal processing unit for extracting pilot information including the receiving level measurement and the channel estimation of the base station from a pilot channel signal created using a scramble code which is different depending on a base station and a pilot symbol pattern which is different depending on the identification number of the base station;
a traffic channel signal processing unit for creating traffic channel data by processing a traffic channel signal;
a control channel signal processing unit for processing control information for receiving control information signal including the destination information of the traffic data and determining whether or not destination information addressed to the mobile station is included; and
an integration control unit having base station selection means for creating a communication mode switch control signal input to the traffic channel signal processing unit and selecting a predetermined number of base stations, wherein the transmission signal is transmitted by switching a first communication mode for transmitting a predetermined communication data amount at an approximately maximum communication speed from one base station of the plurality of base stations, a second communication mode for transmitting communication data obtained by dividing the predetermined communication data amount at a predetermined ratio from the plurality of base stations while enhancing communication quality in place of lowering a communication speed, or a third communication mode for transmitting the predetermined communication data amount from one base station of the plurality of base stations without dividing the predetermined communication data amount likewise the first communication mode while enhancing communication quality in place of lowering a communication speed likewise the second communication mode according to a communication environment state.

23. The mobile station reception device in a cellular mobile communication system according to claim 22, **characterized in that** the pilot channel signal processing unit estimates a channel gain between a plurality of base stations having a different base station identification number by receiving the pilot created by the pilot channel signal creation unit according to claim 14 or claim 17 and carrying out a communication path estimation using a pilot pattern corresponding to the base station identification number.

24. The mobile station reception device in a cellular mobile communication system according to claim 22, **characterized in that** the control channel signal processing unit obtains the control data from the plurality of base stations by receiving the control channel signal created by the control channel signal creation unit according to claim 15 or claim 18, carrying out a signal processing using an orthogonal code corresponding to the scramble code common to the plurality of base stations and the orthogonal code corresponding to a plurality of base station identification numbers to thereby separate the control channel signals from the plurality of base stations having a different base station identification number.

25. The mobile station reception device in a cellular mobile communication system according to claim 22, **characterized in that** the traffic channel signal processing unit reproduces the traffic channel data transmitted from the plurality of base stations by receiving the signals approximately simultaneously transmitted from a plurality of base stations in the second communication mode, carrying out weighing using a weight for reducing interference between the signals of the other base stations transmitted approximately simultaneously, and demodulating the signals.

26. The mobile station reception device in a cellular mobile communication system according to claim 22, **characterized in that** the traffic channel signal processing unit receives the signals approximately simultaneously transmitted from a plurality of base stations in the second communication mode and outputs the certainty of respective traffic channel data symbols or bits by comparing the combinations of the traffic channel data transmitted from respective base stations with respect to the signal points at which the signals of a plurality of base stations are synthesized.

27. The mobile station reception device in a cellular mobile communication system according to any one of claim 22 to claim 26, **characterized by** further comprising:

a control channel interference removing unit for creating a control channel signal replica from the control data obtained by the control channel signal processing unit and removing the replica from a received signal, wherein the traffic channel signal processing unit is input with the output from the control channel interference removing unit.

28. The mobile station reception device in a cellular mobile communication system according to claim 22, **characterized in that** when a pilot channel signal as an OFDM signal is received, a time axis component in the frame of a diffusion OFDM signal is shown by i, and a subcarrier component is shown by j, the pilot channel signal processing unit calculates the estimated value h(l', j) of a channel gain of a base station 1' to be estimated by multiplying the complex conjugate of a pilot symbol of a base station , which is obtained by multiplying a scramble code $x_j^{(1)}$ inherent to the base station having a base station number (1) by a pilot pattern $w_i^{(n(1))}$ corresponding to the base station identification number n(1), to which the base stations are added for each group, and averaging the product in time.

29. The mobile station reception device in a cellular mobile communication system according to claim 22, **characterized in that** when a control channel signal as a diffusion OFDM signal is received, a time axis component in the frame of the diffusion OFDM signal is shown by i, and a subcarrier component is shown by j, the control channel signal processing unit obtains the control channel symbol $c^{(1)}$ by multiplying the respective complex conjugates of a scramble code $y_j$, an orthogonal code $w_i^{(n(1))}$, and a scramble code $x_j^{(1)}$ inherent to the base station by a control channel signal as a diffusion OFDM signal which is obtained by subjecting a control channel symbol $c^{(1)}$ to diffusion processing using a scramble code $y_j$ as a control channel common code, an orthogonal code $w_i^{(n(1))}$ according to a base station identification number n(1) for permitting the signals of respective base stations to be distinguished and simultaneously received, and a scramble code $x_j^{(1)}$ inherent to the base station, and by separating the control channel signal from the plurality of the base stations having a different base station identification number.

30. The base station reception device in a cellular mobile communication system according to claim 22, **characterized in that** when a pilot channel signal as an OFDM signal or a diffusion OFDM signal is received, a time axis component in the frame of the OFDM signal or the diffusion OFDM signal is shown by i, and a subcarrier component is shown by j, the traffic channel signal processing unit reproduces the traffic channel symbol $d^{(1)}$ by multiplying the complex conjugate of a scramble code $x_j^{(1)}$ inherent to the base station a traffic channel signal $(x_j^{(1)} \times d^{(1)})$ as the OFDM signal which is obtained by multiplying a traffic channel symbol $d^{(1)}$ by the scramble code $x_j^{(1)}$ inherent to the base station in the first communication mode or to a traffic channel signal as the diffusion OFDM signal which is obtained by subjecting the traffic channel symbol, in which the traffic channel symbol $d^{(1)}$ is separated to a plurality of groups, to a frequency diffusion processing using the scramble code $x_j^{(1)}$ inherent to base station in the second or the third communication mode, and further, carrying out an inverse diffusion processing in the second or third communication mode.

31. A base station selection control method of a cellular mobile communication system comprising a plurality of base stations, a mobile station reception device capable of approximately simultaneously receiving radio signals from a plurality of adjacent base stations, and a base station controller, the method comprising:

a reception control process of the mobile station reception device when appropriate base stations are selected from the plurality of base stations and further transmission data is received from the base stations which are determined under the control of the base station controller; and
a base station selection process of the base station controller having a step of selecting a final base station to be connected corresponding to the traffic amounts and the communication path quality of respective base stations when the mobile station requests an access to the base station controller through one base station or a plurality of base stations according to the reception control process.

32. The base station selection control method of a cellular mobile communication system according to claim 31, **characterized in that** the base station selection process of the base station controller comprises a step of selecting a base station to be connected corresponding to a real time property, a degree of priority, and communication path quality when the mobile station requests an access to the base station controller through one base station or a plurality of base stations according to the reception control process.

33. The base station selection control method of a cellular mobile communication system according to claim 31 or claim 32, **characterized in that** the reception control process of the receiving device of the mobile station comprises:

a step of measuring a communication path state between the plurality of base stations and the mobile station from received signals in which the transmission signals of a plurality of base stations are mixed;
a step of selecting one base station or a plurality of base stations based on a result of the step of measuring the communication path state;

a step of transmitting an access request to all of or a part of the base stations of the selected base stations;
a step of demodulating the control channel signals of all of or a part of the base stations of the selected base stations and determining whether or not the traffic information addressed to a self station is included; and
a step of demodulating, when the traffic information addressed to the self station is included, the traffic channel signal of the self station and extracting the traffic information.

34. The base station selection control method of a cellular mobile communication systemaccording to claim 33, **characterized in that**, in the plurality of base stations, which are grouped so that they do not belong to the same group to which adjacent base stations belong and which have the base station identification number corresponding to the group, the step of measuring the communication path state is a step of measuring the received signal levels of the base stations having the maximum received signal level of the base stations having the same identification number.

35. The base station selection control method of a cellular mobile communication system according to claim 33, **characterized in that**, in the plurality of base stations, which are grouped so that they do not belong to the same group to which adjacent base stations belong and which have the base station identification number corresponding to the group, the step of measuring the communication path state is a step of measuring the timings of the received signals of the base stations having a fastest reception timing of the base stations having the same identification number.

36. The base station selection control method of a cellular mobile communication system according to claim 34, **characterized in that** the step of selecting one base station or a plurality of base stations is a step of selecting a predetermined number of the base stations having a received signal level larger than X-Y when the maximum value of the plurality of received signal levels is shown by X and a predetermined threshold value Y is set to X.

37. The base station selection control method of a cellular mobile communication system according to claim 34, **characterized in that** the step of selecting one base station or a plurality of base stations is such that a plurality of base stations having the maximum received signal level of the plurality of received signal levels are selected and a predetermined number of base stations are selected from the plurality of selected base stations in the order of the selected base stations having a larger received signal level.

38. The base station selection control method of a cellular mobile communication system according to claim 34, **characterized in that** the step of selecting one base station or a plurality of base stations is such that the transmission losses of the plurality of received signal levels are calculated therefrom, respectively and a predetermined number of base stations having a transmission loss smaller than X+Y are selectedwhen a threshold value Y is set to theminimumvalue X of the calculated transmission losses.

39. The base station selection control method of a cellular mobile communication system according to claim 34, **characterized in that** the step of selecting one base station or a plurality of base stations is such that the transmission losses of the plurality of received signal levels are calculated therefrom, respectively and a predetermined number of base stations are selected from the plurality of selected base stations in the order of the selected base stations having a smaller transmission loss of the received signals.

40. The base station selection control method of a cellular mobile communication system according to claim 35, **characterized in that** the step of selecting one base station or a plurality of base stations is such that a threshold value Y is set to a time X having a fastest timing of the plurality of reception timings and a predetermined number of base stations having a time of reception timing faster than X+Y is selected.

41. The base station selection control method of a cellular mobile communication system according to claim 35, **characterized in that** the step of selecting one base station or a plurality of base stations is such that a predetermined number of base stations are selected from a faster reception timing of the plurality of reception timings.

42. The base station selection control method of a cellular mobile communication system according to claim 35, **characterized in that** the step of selecting one base station or a plurality of base stations is such that the transmission delay times of the plurality of reception timings are calculated from the plurality of reception timings, respectively, a threshold value Y is set to the minimum transmission delay time X, and a predetermined number of base stations having a transmission delay time smaller than X+Y are selected.

43. The base station selection control method of a cellular mobile communication system according to claim 35, **characterized in that** the step of selecting one base station or a plurality of base stations is such that the transmission delay times of the plurality of reception timings are calculated from the plurality of reception timings and a predetermined number of base stations are selected in the order of the base stations having a smaller transmission delay.

44. The base station selection control method of a cellular mobile communication system according to claim 33 to claim 43,
**characterized in that**:

the step of transmitting the access request is a step of transmitting access requests to the respective base stations selected at the step of selecting the one base station or the plurality of base stations; and
the step of determining whether or not the traffic information addressed to the self destination is included determines whether or not the traffic information addressed to the self destination is included by extracting control information by demodulating the control channel signals of all the base stations selected at the step of selecting the one base station or the plurality of base stations.

45. The base station selection control method of a cellular mobile communication system according to claim 33 to claim 43, **characterized in that** the step of transmitting the access request is a step of transmitting an access request to the base station having the best communication path state of the base stations selected by the step of selecting the one base station or the plurality of base stations; and
the step of determining whether or not the traffic information addressed to the self destination is included determines that the traffic information addressed to the self destination is included with the traffic channel of which base station by extracting control information by demodulating the control channel signal of the base station transmitted at the step of transmitting the access request.

46. The base station selection control method of a cellular mobile communication system according to claim 33 to claim 43, **characterized in that**:

the step of transmitting the access request is a step of transmitting an access request to the base station having the best communication path state of the base stations selected by the step of selecting the one base station or the plurality of base stations; and
the step of determining whether or not the traffic information addressed to the self destination is included determines whether or not the traffic information addressed to the self destination is included by extracting control information by demodulating the control channel signals of all the base stations selected at the step of selecting the one base station or the plurality of base stations, respectively.

47. The base station selection control method of a cellular mobile communication system according to claim 33 to claim 46, **characterized by** further comprising step of receiving a call signal from one or a plurality of base stations in the vicinity of a mobile station.

*FIG. 1*

## FIG. 2

## FIG. 3

FIG. 4

GI

OFDM SYMBOL

$T_{GI}$

## FIG. 5

BASE
STATION A

Nc SUBCARRIER

| PILOT SIGNAL | TRAFFIC CHANNEL SIGNAL + CONTROL SIGNAL |

Np SYMBOL          Nd SYMBOL

BASE
STATION B

Nc SUBCARRIER

| PILOT SIGNAL | TRAFFIC CHANNEL SIGNAL + CONTROL SIGNAL |

Np SYMBOL          Nd SYMBOL

BASE
STATION C

Nc SUBCARRIER

| PILOT SIGNAL | TRAFFIC CHANNEL SIGNAL + CONTROL SIGNAL |

Np SYMBOL          Nd SYMBOL

FIG. 6

EP 1 916 783 A1

## FIG. 7

EP 1 916 783 A1

*FIG. 8*

EP 1 916 783 A1

# FIG. 9

## FIG. 10

TIMING INFORMATION

39

40

REMOVE GI

504

41

PILOT CHANNEL SIGNAL PROCESSING UNIT

505

CHANNEL ESTIMATION

46

INTEGRAL CONTROL UNIT

ESTIMATED CHANNEL INFORMATION

42

CONTROL CHANNEL SIGNAL PROCESSING UNIT

ESTIMATED CHANNEL INFORMATION

CONTROL CHANNEL INFORMATION

44

DEMOD

DEINTERLEAVER

FEC DECODER

CONTROL CHANNEL DATA

45

43

TRAFFIC CHANNEL SIGNAL PROCESSING UNIT

DEMOD

DEINTERLEAVER

FEC DECODER

TRAFFIC CHANNEL DATA

EP 1 916 783 A1

EP 1 916 783 A1

FIG. 11

## FIG. 12

EP 1 916 783 A1

# FIG. 13

EP 1 916 783 A1

FIG. 14

| | | | |
|---|---|---|---|
| $w_0^{(0)} \cdot x_{N_c-1}^{(0)}$ | $w_1^{(0)} \cdot x_{N_c-1}^{(0)}$ | $w_2^{(0)} \cdot x_{N_c-1}^{(0)}$ | $w_3^{(0)} \cdot x_{N_c-1}^{(0)}$ |
| $w_0^{(0)} \cdot x_{N_c-2}^{(0)}$ | $w_1^{(0)} \cdot x_{N_c-2}^{(0)}$ | $w_2^{(0)} \cdot x_{N_c-2}^{(0)}$ | $w_3^{(0)} \cdot x_{N_c-2}^{(0)}$ |
| $\vdots$ | $\vdots$ | $\vdots$ | $\vdots$ |
| $w_0^{(0)} \cdot x_2^{(0)}$ | $w_1^{(0)} \cdot x_2^{(0)}$ | $w_2^{(0)} \cdot x_2^{(0)}$ | $w_3^{(0)} \cdot x_2^{(0)}$ |
| $w_0^{(0)} \cdot x_1^{(0)}$ | $w_1^{(0)} \cdot x_1^{(0)}$ | $w_2^{(0)} \cdot x_1^{(0)}$ | $w_3^{(0)} \cdot x_1^{(0)}$ |
| $w_0^{(0)} \cdot x_0^{(0)}$ | $w_1^{(0)} \cdot x_0^{(0)}$ | $w_2^{(0)} \cdot x_0^{(0)}$ | $w_3^{(0)} \cdot x_0^{(0)}$ |

## FIG. 15

| | | | |
|---|---|---|---|
| $w_0^{(1)} \cdot x_{N_c-1}^{(1)}$ | $w_1^{(1)} \cdot x_{N_c-1}^{(1)}$ | $w_2^{(1)} \cdot x_{N_c-1}^{(1)}$ | $w_3^{(1)} \cdot x_{N_c-1}^{(1)}$ |
| $w_0^{(1)} \cdot x_{N_c-2}^{(1)}$ | $w_1^{(1)} \cdot x_{N_c-2}^{(1)}$ | $w_2^{(1)} \cdot x_{N_c-2}^{(1)}$ | $w_3^{(1)} \cdot x_{N_c-2}^{(1)}$ |
| $\vdots$ | $\vdots$ | $\vdots$ | $\vdots$ |
| $w_0^{(1)} \cdot x_2^{(1)}$ | $w_1^{(1)} \cdot x_2^{(1)}$ | $w_2^{(1)} \cdot x_2^{(1)}$ | $w_3^{(1)} \cdot x_2^{(1)}$ |
| $w_0^{(1)} \cdot x_1^{(1)}$ | $w_1^{(1)} \cdot x_1^{(1)}$ | $w_2^{(1)} \cdot x_1^{(1)}$ | $w_3^{(1)} \cdot x_1^{(1)}$ |
| $w_0^{(1)} \cdot x_0^{(1)}$ | $w_1^{(1)} \cdot x_0^{(1)}$ | $w_2^{(1)} \cdot x_0^{(1)}$ | $w_3^{(1)} \cdot x_0^{(1)}$ |

FIG. 16

| | | | |
|---|---|---|---|
| $w_0^{(2)} \cdot x_{N_c-1}^{(2)}$ | $w_1^{(2)} \cdot x_{N_c-1}^{(2)}$ | $w_2^{(2)} \cdot x_{N_c-1}^{(2)}$ | $w_3^{(2)} \cdot x_{N_c-1}^{(2)}$ |
| $w_0^{(2)} \cdot x_{N_c-2}^{(2)}$ | $w_1^{(2)} \cdot x_{N_c-2}^{(2)}$ | $w_2^{(2)} \cdot x_{N_c-2}^{(2)}$ | $w_3^{(2)} \cdot x_{N_c-2}^{(2)}$ |
| $\vdots$ | $\vdots$ | $\vdots$ | $\vdots$ |
| $w_0^{(2)} \cdot x_2^{(2)}$ | $w_1^{(2)} \cdot x_2^{(2)}$ | $w_2^{(2)} \cdot x_2^{(2)}$ | $w_3^{(2)} \cdot x_2^{(2)}$ |
| $w_0^{(2)} \cdot x_1^{(2)}$ | $w_1^{(2)} \cdot x_1^{(2)}$ | $w_2^{(2)} \cdot x_1^{(2)}$ | $w_3^{(2)} \cdot x_1^{(2)}$ |
| $w_0^{(2)} \cdot x_0^{(2)}$ | $w_1^{(2)} \cdot x_0^{(2)}$ | $w_2^{(2)} \cdot x_0^{(2)}$ | $w_3^{(2)} \cdot x_0^{(2)}$ |

# FIG. 17

| | | | |
|---|---|---|---|
| $y_{N_c-1} \cdot w_3^{(0)} \cdot x_{N_c-4}^{(0)} \cdot c^{(0)}(0, N_c-4)$ | $y_{N_c-1} \cdot w_3^{(0)} \cdot x_{N_c-4}^{(0)} \cdot c^{(0)}(1, N_c-4)$ | $\cdots$ | $y_{N_c-1} \cdot w_3^{(0)} \cdot x_{N_c-4}^{(0)} \cdot c^{(0)}(N_d-1, N_c-4)$ |
| $y_{N_c-2} \cdot w_2^{(0)} \cdot x_{N_c-4}^{(0)} \cdot c^{(0)}(0, N_c-4)$ | $y_{N_c-2} \cdot w_2^{(0)} \cdot x_{N_c-4}^{(0)} \cdot c^{(0)}(1, N_c-4)$ | $\cdots$ | $y_{N_c-2} \cdot w_2^{(0)} \cdot x_{N_c-4}^{(0)} \cdot c^{(0)}(N_d-1, N_c-4)$ |
| $\vdots$ | $\vdots$ | $\ddots$ | $\vdots$ |
| $y_5 \cdot w_1^{(0)} \cdot x_4^{(0)} \cdot c^{(0)}(0,4)$ | $y_5 \cdot w_1^{(0)} \cdot x_4^{(0)} \cdot c^{(0)}(1,4)$ | $\cdots$ | $y_5 \cdot w_1^{(0)} \cdot x_4^{(0)} \cdot c^{(0)}(N_d-1,4)$ |
| $y_4 \cdot w_0^{(0)} \cdot x_4^{(0)} \cdot c^{(0)}(0,4)$ | $y_4 \cdot w_0^{(0)} \cdot x_4^{(0)} \cdot c^{(0)}(1,4)$ | $\cdots$ | $y_4 \cdot w_0^{(0)} \cdot x_4^{(0)} \cdot c^{(0)}(N_d-1,4)$ |
| $y_3 \cdot w_3^{(0)} \cdot x_0^{(0)} \cdot c^{(0)}(0,0)$ | $y_3 \cdot w_3^{(0)} \cdot x_0^{(0)} \cdot c^{(0)}(1,0)$ | $\cdots$ | $y_3 \cdot w_3^{(0)} \cdot x_0^{(0)} \cdot c^{(0)}(N_d-1,0)$ |
| $y_2 \cdot w_2^{(0)} \cdot x_0^{(0)} \cdot c^{(0)}(0,0)$ | $y_2 \cdot w_2^{(0)} \cdot x_0^{(0)} \cdot c^{(0)}(1,0)$ | $\cdots$ | $y_2 \cdot w_2^{(0)} \cdot x_0^{(0)} \cdot c^{(0)}(N_d-1,0)$ |
| $y_1 \cdot w_1^{(0)} \cdot x_0^{(0)} \cdot c^{(0)}(0,0)$ | $y_1 \cdot w_1^{(0)} \cdot x_0^{(0)} \cdot c^{(0)}(1,0)$ | $\cdots$ | $y_1 \cdot w_1^{(0)} \cdot x_0^{(0)} \cdot c^{(0)}(N_d-1,0)$ |
| $y_0 \cdot w_0^{(0)} \cdot x_0^{(0)} \cdot c^{(0)}(0,0)$ | $y_0 \cdot w_0^{(0)} \cdot x_0^{(0)} \cdot c^{(0)}(1,0)$ | $\cdots$ | $y_0 \cdot w_0^{(0)} \cdot x_0^{(0)} \cdot c^{(0)}(N_d-1,0)$ |

FIG. 18

EP 1 916 783 A1

| | | | |
|---|---|---|---|
| $y_{N_c-1} \cdot w_3^{(1)} \cdot x_{N_c-4}^{(1)} \cdot c^{(1)}(0, N_c-4)$ | $y_{N_c-1} \cdot w_3^{(1)} \cdot x_{N_c-4}^{(1)} \cdot c^{(1)}(1, N_c-4)$ | $\cdots$ | $y_{N_c-1} \cdot w_3^{(1)} \cdot x_{N_c-4}^{(1)} \cdot c^{(1)}(N_d-1, N_c-4)$ |
| $y_{N_c-2} \cdot w_2^{(1)} \cdot x_{N_c-4}^{(1)} \cdot c^{(1)}(0, N_c-4)$ | $y_{N_c-2} \cdot w_2^{(1)} \cdot x_{N_c-4}^{(1)} \cdot c^{(1)}(1, N_c-4)$ | $\cdots$ | $y_{N_c-2} \cdot w_2^{(1)} \cdot x_{N_c-4}^{(1)} \cdot c^{(1)}(N_d-1, N_c-4)$ |
| $\vdots$ | $\vdots$ | $\ddots$ | $\vdots$ |
| $y_5 \cdot w_1^{(1)} \cdot x_4^{(1)} \cdot c^{(1)}(0,4)$ | $y_5 \cdot w_1^{(1)} \cdot x_4^{(1)} \cdot c^{(1)}(1,4)$ | $\cdots$ | $y_5 \cdot w_1^{(1)} \cdot x_4^{(1)} \cdot c^{(1)}(N_d-1,4)$ |
| $y_4 \cdot w_0^{(1)} \cdot x_4^{(1)} \cdot c^{(1)}(0,4)$ | $y_4 \cdot w_0^{(1)} \cdot x_4^{(1)} \cdot c^{(1)}(1,4)$ | $\cdots$ | $y_4 \cdot w_0^{(1)} \cdot x_4^{(1)} \cdot c^{(1)}(N_d-1,4)$ |
| $y_3 \cdot w_3^{(1)} \cdot x_0^{(1)} \cdot c^{(1)}(0,0)$ | $y_3 \cdot w_3^{(1)} \cdot x_0^{(1)} \cdot c^{(1)}(1,0)$ | $\cdots$ | $y_3 \cdot w_3^{(1)} \cdot x_0^{(1)} \cdot c^{(1)}(N_d-1,0)$ |
| $y_2 \cdot w_2^{(1)} \cdot x_0^{(1)} \cdot c^{(1)}(0,0)$ | $y_2 \cdot w_2^{(1)} \cdot x_0^{(1)} \cdot c^{(1)}(1,0)$ | $\cdots$ | $y_2 \cdot w_2^{(1)} \cdot x_0^{(1)} \cdot c^{(1)}(N_d-1,0)$ |
| $y_1 \cdot w_1^{(1)} \cdot x_0^{(1)} \cdot c^{(1)}(0,0)$ | $y_1 \cdot w_1^{(1)} \cdot x_0^{(1)} \cdot c^{(1)}(1,0)$ | $\cdots$ | $y_1 \cdot w_1^{(1)} \cdot x_0^{(1)} \cdot c^{(1)}(N_d-1,0)$ |
| $y_0 \cdot w_0^{(1)} \cdot x_0^{(1)} \cdot c^{(1)}(0,0)$ | $y_0 \cdot w_0^{(1)} \cdot x_0^{(1)} \cdot c^{(1)}(1,0)$ | $\cdots$ | $y_0 \cdot w_0^{(1)} \cdot x_0^{(1)} \cdot c^{(1)}(N_d-1,0)$ |

## FIG. 19

| | | | |
|---|---|---|---|
| $y_{N_c-1} \cdot w_3^{(2)} \cdot x_{N_c-4}^{(2)} \cdot c^{(2)}(0, N_c-4)$ | $y_{N_c-1} \cdot w_3^{(2)} \cdot x_{N_c-4}^{(2)} \cdot c^{(2)}(1, N_c-4)$ | $\cdots$ | $y_{N_c-1} \cdot w_3^{(2)} \cdot x_{N_c-4}^{(2)} \cdot c^{(2)}(N_d-1, N_c-4)$ |
| $y_{N_c-2} \cdot w_2^{(2)} \cdot x_{N_c-4}^{(2)} \cdot c^{(2)}(0, N_c-4)$ | $y_{N_c-2} \cdot w_2^{(2)} \cdot x_{N_c-4}^{(2)} \cdot c^{(2)}(1, N_c-4)$ | $\cdots$ | $y_{N_c-2} \cdot w_2^{(2)} \cdot x_{N_c-4}^{(2)} \cdot c^{(2)}(N_d-1, N_c-4)$ |
| $\vdots$ | $\vdots$ | $\ddots$ | $\vdots$ |
| $y_5 \cdot w_1^{(2)} \cdot x_4^{(2)} \cdot c^{(2)}(0,4)$ | $y_5 \cdot w_1^{(2)} \cdot x_4^{(2)} \cdot c^{(2)}(1,4)$ | $\cdots$ | $y_5 \cdot w_1^{(2)} \cdot x_4^{(2)} \cdot c^{(2)}(N_d-1,4)$ |
| $y_4 \cdot w_0^{(2)} \cdot x_4^{(2)} \cdot c^{(2)}(0,4)$ | $y_4 \cdot w_0^{(2)} \cdot x_4^{(2)} \cdot c^{(2)}(1,4)$ | $\cdots$ | $y_4 \cdot w_0^{(2)} \cdot x_4^{(2)} \cdot c^{(2)}(N_d-1,4)$ |
| $y_3 \cdot w_3^{(2)} \cdot x_0^{(2)} \cdot c^{(2)}(0,0)$ | $y_3 \cdot w_3^{(2)} \cdot x_0^{(2)} \cdot c^{(2)}(1,0)$ | $\cdots$ | $y_3 \cdot w_3^{(2)} \cdot x_0^{(2)} \cdot c^{(2)}(N_d-1,0)$ |
| $y_2 \cdot w_2^{(2)} \cdot x_0^{(2)} \cdot c^{(2)}(0,0)$ | $y_2 \cdot w_2^{(2)} \cdot x_0^{(2)} \cdot c^{(2)}(1,0)$ | $\cdots$ | $y_2 \cdot w_2^{(2)} \cdot x_0^{(2)} \cdot c^{(2)}(N_d-1,0)$ |
| $y_1 \cdot w_1^{(2)} \cdot x_0^{(2)} \cdot c^{(2)}(0,0)$ | $y_1 \cdot w_1^{(2)} \cdot x_0^{(2)} \cdot c^{(2)}(1,0)$ | $\cdots$ | $y_1 \cdot w_1^{(2)} \cdot x_0^{(2)} \cdot c^{(2)}(N_d-1,0)$ |
| $y_0 \cdot w_0^{(2)} \cdot x_0^{(2)} \cdot c^{(2)}(0,0)$ | $y_0 \cdot w_0^{(2)} \cdot x_0^{(2)} \cdot c^{(2)}(1,0)$ | $\cdots$ | $y_0 \cdot w_0^{(2)} \cdot x_0^{(2)} \cdot c^{(2)}(N_d-1,0)$ |

EP 1 916 783 A1

## FIG. 20

| | | | |
|---|---|---|---|
| $x^{(0)}_{N_c-1} \cdot d^{(0)}(0, N_c-1)$ | $x^{(0)}_{N_c-1} \cdot d^{(0)}(1, N_c-1)$ | $\cdots$ | $x^{(0)}_{N_c-1} \cdot d^{(0)}(N_d-1, N_c-1)$ |
| $x^{(0)}_{N_c-2} \cdot d^{(0)}(0, N_c-2)$ | $x^{(0)}_{N_c-2} \cdot d^{(0)}(1, N_c-2)$ | $\cdots$ | $x^{(0)}_{N_c-2} \cdot d^{(0)}(N_d-1, N_c-2)$ |
| $\vdots$ | $\vdots$ | $\ddots$ | $\vdots$ |
| $x^{(0)}_4 \cdot d^{(0)}(0, 4)$ | $x^{(0)}_4 \cdot d^{(0)}(1, 4)$ | $\cdots$ | $x^{(0)}_4 \cdot d^{(0)}(N_d-1, 4)$ |
| $x^{(0)}_3 \cdot d^{(0)}(0, 3)$ | $x^{(0)}_3 \cdot d^{(0)}(1, 3)$ | $\cdots$ | $x^{(0)}_3 \cdot d^{(0)}(N_d-1, 3)$ |
| $x^{(0)}_2 \cdot d^{(0)}(0, 2)$ | $x^{(0)}_2 \cdot d^{(0)}(1, 2)$ | $\cdots$ | $x^{(0)}_2 \cdot d^{(0)}(N_d-1, 2)$ |
| $x^{(0)}_1 \cdot d^{(0)}(0, 1)$ | $x^{(0)}_1 \cdot d^{(0)}(1, 1)$ | $\cdots$ | $x^{(0)}_1 \cdot d^{(0)}(N_d-1, 1)$ |
| $x^{(0)}_0 \cdot d^{(0)}(0, 0)$ | $x^{(0)}_0 \cdot d^{(0)}(1, 0)$ | $\cdots$ | $x^{(0)}_0 \cdot d^{(0)}(N_d-1, 0)$ |

FIG. 21

| | | | |
|---|---|---|---|
| $x^{(1)}_{N_c-1} \cdot d^{(1)}(0, N_c-1)$ | $x^{(1)}_{N_c-1} \cdot d^{(1)}(1, N_c-1)$ | $\cdots$ | $x^{(1)}_{N_c-1} \cdot d^{(1)}(N_d-1, N_c-1)$ |
| $x^{(1)}_{N_c-2} \cdot d^{(1)}(0, N_c-2)$ | $x^{(1)}_{N_c-2} \cdot d^{(1)}(1, N_c-2)$ | $\cdots$ | $x^{(1)}_{N_c-2} \cdot d^{(1)}(N_d-1, N_c-2)$ |
| $\vdots$ | $\vdots$ | $\ddots$ | $\vdots$ |
| $x^{(1)}_4 \cdot d^{(1)}(0, 4)$ | $x^{(1)}_4 \cdot d^{(1)}(1, 4)$ | $\cdots$ | $x^{(1)}_4 \cdot d^{(1)}(N_d-1, 4)$ |
| $x^{(1)}_3 \cdot d^{(1)}(0, 3)$ | $x^{(1)}_3 \cdot d^{(1)}(1, 3)$ | $\cdots$ | $x^{(1)}_3 \cdot d^{(1)}(N_d-1, 3)$ |
| $x^{(1)}_2 \cdot d^{(1)}(0, 2)$ | $x^{(1)}_2 \cdot d^{(1)}(1, 2)$ | $\cdots$ | $x^{(1)}_2 \cdot d^{(1)}(N_d-1, 2)$ |
| $x^{(1)}_1 \cdot d^{(1)}(0, 1)$ | $x^{(1)}_1 \cdot d^{(1)}(1, 1)$ | $\cdots$ | $x^{(1)}_1 \cdot d^{(1)}(N_d-1, 1)$ |
| $x^{(1)}_0 \cdot d^{(1)}(0, 0)$ | $x^{(1)}_0 \cdot d^{(1)}(1, 0)$ | $\cdots$ | $x^{(1)}_0 \cdot d^{(1)}(N_d-1, 0)$ |

## FIG. 22

| | | | |
|---|---|---|---|
| $x_{N_c-1}^{(2)} \cdot d^{(2)}(0, N_c-1)$ | $x_{N_c-1}^{(2)} \cdot d^{(2)}(1, N_c-1)$ | $\cdots$ | $x_{N_c-1}^{(2)} \cdot d^{(2)}(N_d-1, N_c-1)$ |
| $x_{N_c-2}^{(2)} \cdot d^{(2)}(0, N_c-2)$ | $x_{N_c-2}^{(2)} \cdot d^{(2)}(1, N_c-2)$ | $\cdots$ | $x_{N_c-2}^{(2)} \cdot d^{(2)}(N_d-1, N_c-2)$ |
| $\vdots$ | $\vdots$ | $\ddots$ | $\vdots$ |
| $x_4^{(2)} \cdot d^{(2)}(0, 4)$ | $x_4^{(2)} \cdot d^{(2)}(1, 4)$ | $\cdots$ | $x_4^{(2)} \cdot d^{(2)}(N_d-1, 4)$ |
| $x_3^{(2)} \cdot d^{(2)}(0, 3)$ | $x_3^{(2)} \cdot d^{(2)}(1, 3)$ | $\cdots$ | $x_3^{(2)} \cdot d^{(2)}(N_d-1, 3)$ |
| $x_2^{(2)} \cdot d^{(2)}(0, 2)$ | $x_2^{(2)} \cdot d^{(2)}(1, 2)$ | $\cdots$ | $x_2^{(2)} \cdot d^{(2)}(N_d-1, 2)$ |
| $x_1^{(2)} \cdot d^{(2)}(0, 1)$ | $x_1^{(2)} \cdot d^{(2)}(1, 1)$ | $\cdots$ | $x_1^{(2)} \cdot d^{(2)}(N_d-1, 1)$ |
| $x_0^{(2)} \cdot d^{(2)}(0, 0)$ | $x_0^{(2)} \cdot d^{(2)}(1, 0)$ | $\cdots$ | $x_0^{(2)} \cdot d^{(2)}(N_d-1, 0)$ |

## FIG. 23

| | | | |
|---|---|---|---|
| $x_{N_c-1}^{(0)} \cdot d^{(0)}(0, N_c/3 -1)$ | $x_{N_c-1}^{(0)} \cdot d^{(0)}(1, N_c/3 -1)$ | $\cdots$ | $x_{N_c-1}^{(0)} \cdot d^{(0)}(N_d-1, N_c/3 -1)$ |
| $x_{N_c-2}^{(0)} \cdot d^{(0)}(0, N_c/3 -2)$ | $x_{N_c-2}^{(0)} \cdot d^{(0)}(1, N_c/3 -2)$ | $\cdots$ | $x_{N_c-2}^{(0)} \cdot d^{(0)}(N_d-1, N_c/3 -2)$ |
| $\vdots$ | $\vdots$ | $\ddots$ | $\vdots$ |
| $x_{2N_c/3}^{(0)} \cdot d^{(0)}(0, 0)$ | $x_{2N_c/3}^{(0)} \cdot d^{(0)}(1, 0)$ | $\cdots$ | $x_{2N_c/3}^{(0)} \cdot d^{(0)}(N_d-1, 0)$ |
| $x_{2N_c/3-1}^{(0)} \cdot d^{(0)}(0, N_c/3-1)$ | $x_{2N_c/3-1}^{(0)} \cdot d^{(0)}(1, N_c/3-1)$ | $\cdots$ | $x_{2N_c/3-1}^{(0)} \cdot d^{(0)}(N_d-1, N_c/3-1)$ |
| $\vdots$ | $\vdots$ | $\ddots$ | $\vdots$ |
| $x_{N_c/3}^{(0)} \cdot d^{(0)}(0, 0)$ | $x_{N_c/3}^{(0)} \cdot d^{(0)}(1, 0)$ | $\cdots$ | $x_{N_c/3}^{(0)} \cdot d^{(0)}(N_d-1, 0)$ |
| $x_{N_c/3-1}^{(0)} \cdot d^{(0)}(0, N_c/3-1)$ | $x_{N_c/3-1}^{(0)} \cdot d^{(0)}(1, N_c/3-1)$ | $\cdots$ | $x_{N_c/3-1}^{(0)} \cdot d^{(0)}(N_d-1, N_c/3-1)$ |
| $\vdots$ | $\vdots$ | $\ddots$ | $\vdots$ |
| $x_2^{(0)} \cdot d^{(0)}(0, 2)$ | $x_2^{(0)} \cdot d^{(0)}(1, 2)$ | $\cdots$ | $x_2^{(0)} \cdot d^{(0)}(N_d-1, 2)$ |
| $x_1^{(0)} \cdot d^{(0)}(0, 1)$ | $x_1^{(0)} \cdot d^{(0)}(1, 1)$ | $\cdots$ | $x_1^{(0)} \cdot d^{(0)}(N_d-1, 1)$ |
| $x_0^{(0)} \cdot d^{(0)}(0, 0)$ | $x_0^{(0)} \cdot d^{(0)}(1, 0)$ | $\cdots$ | $x_0^{(0)} \cdot d^{(0)}(N_d-1, 0)$ |

## FIG. 24

| | | | |
|---|---|---|---|
| $x_{N_c-1}^{(1)} \cdot d^{(1)}(0, N_c/3 - 1)$ | $x_{N_c-1}^{(1)} \cdot d^{(1)}(1, N_c/3 - 1)$ | $\cdots$ | $x_{N_c-1}^{(1)} \cdot d^{(1)}(N_d - 1, N_c/3 - 1)$ |
| $x_{N_c-2}^{(1)} \cdot d^{(1)}(0, N_c/3 - 2)$ | $x_{N_c-2}^{(1)} \cdot d^{(1)}(1, N_c/3 - 2)$ | $\cdots$ | $x_{N_c-2}^{(1)} \cdot d^{(1)}(N_d - 1, N_c/3 - 2)$ |
| $\vdots$ | $\vdots$ | $\ddots$ | $\vdots$ |
| $x_{2N_c/3}^{(1)} \cdot d^{(1)}(0, 0)$ | $x_{2N_c/3}^{(1)} \cdot d^{(1)}(1, 0)$ | $\cdots$ | $x_{2N_c/3}^{(1)} \cdot d^{(1)}(N_d - 1, 0)$ |
| $x_{2N_c/3-1}^{(1)} \cdot d^{(1)}(0, N_c/3-1)$ | $x_{2N_c/3-1}^{(1)} \cdot d^{(1)}(1, N_c/3-1)$ | $\cdots$ | $x_{2N_c/3-1}^{(1)} \cdot d^{(1)}(N_d - 1, N_c/3-1)$ |
| $\vdots$ | $\vdots$ | $\ddots$ | $\vdots$ |
| $x_{N_c/3}^{(1)} \cdot d^{(1)}(0, 0)$ | $x_{N_c/3}^{(1)} \cdot d^{(1)}(1, 0)$ | $\cdots$ | $x_{N_c/3}^{(1)} \cdot d^{(1)}(N_d - 1, 0)$ |
| $x_{N_c/3-1}^{(1)} \cdot d^{(1)}(0, N_c/3-1)$ | $x_{N_c/3-1}^{(1)} \cdot d^{(1)}(1, N_c/3-1)$ | $\cdots$ | $x_{N_c/3-1}^{(1)} \cdot d^{(1)}(N_d - 1, N_c/3-1)$ |
| $\vdots$ | $\vdots$ | $\ddots$ | $\vdots$ |
| $x_2^{(1)} \cdot d^{(1)}(0, 2)$ | $x_2^{(1)} \cdot d^{(1)}(1, 2)$ | $\cdots$ | $x_2^{(1)} \cdot d^{(1)}(N_d - 1, 2)$ |
| $x_1^{(1)} \cdot d^{(1)}(0, 1)$ | $x_1^{(1)} \cdot d^{(1)}(1, 1)$ | $\cdots$ | $x_1^{(1)} \cdot d^{(1)}(N_d - 1, 1)$ |
| $x_0^{(1)} \cdot d^{(1)}(0, 0)$ | $x_0^{(1)} \cdot d^{(1)}(1, 0)$ | $\cdots$ | $x_0^{(1)} \cdot d^{(1)}(N_d - 1, 0)$ |

## FIG. 25

| | | | |
|---|---|---|---|
| $x_{N_c-1}^{(2)} \cdot d^{(2)}(0, N_c/3 -1)$ | $x_{N_c-1}^{(2)} \cdot d^{(2)}(1, N_c/3 -1)$ | $\cdots$ | $x_{N_c-1}^{(2)} \cdot d^{(2)}(N_d-1, N_c/3 -1)$ |
| $x_{N_c-2}^{(2)} \cdot d^{(2)}(0, N_c/3 -2)$ | $x_{N_c-2}^{(2)} \cdot d^{(2)}(1, N_c/3 -2)$ | $\cdots$ | $x_{N_c-2}^{(2)} \cdot d^{(2)}(N_d-1, N_c/3 -2)$ |
| $\vdots$ | $\vdots$ | $\ddots$ | $\vdots$ |
| $x_{2N_c/3}^{(2)} \cdot d^{(2)}(0, 0)$ | $x_{2N_c/3}^{(2)} \cdot d^{(2)}(1, 0)$ | $\cdots$ | $x_{2N_c/3}^{(2)} \cdot d^{(2)}(N_d-1, 0)$ |
| $x_{2N_c/3-1}^{(2)} \cdot d^{(2)}(0, N_c/3-1)$ | $x_{2N_c/3-1}^{(2)} \cdot d^{(2)}(1, N_c/3-1)$ | $\cdots$ | $x_{2N_c/3-1}^{(2)} \cdot d^{(2)}(N_d-1, N_c/3-1)$ |
| $\vdots$ | $\vdots$ | $\ddots$ | $\vdots$ |
| $x_{N_c/3}^{(2)} \cdot d^{(2)}(0, 0)$ | $x_{N_c/3}^{(2)} \cdot d^{(2)}(1, 0)$ | $\cdots$ | $x_{N_c/3}^{(2)} \cdot d^{(2)}(N_d-1, 0)$ |
| $x_{N_c/3-1}^{(2)} \cdot d^{(2)}(0, N_c/3-1)$ | $x_{N_c/3-1}^{(2)} \cdot d^{(2)}(1, N_c/3-1)$ | $\cdots$ | $x_{N_c/3-1}^{(2)} \cdot d^{(2)}(N_d-1, N_c/3-1)$ |
| $\vdots$ | $\vdots$ | $\ddots$ | $\vdots$ |
| $x_2^{(0)} \cdot d^{(0)}(0, 2)$ | $x_2^{(0)} \cdot d^{(0)}(1, 2)$ | $\cdots$ | $x_2^{(2)} \cdot d^{(2)}(N_d-1, 2)$ |
| $x_1^{(0)} \cdot d^{(0)}(0, 1)$ | $x_1^{(0)} \cdot d^{(0)}(1, 1)$ | $\cdots$ | $x_1^{(2)} \cdot d^{(2)}(N_d-1, 1)$ |
| $x_0^{(0)} \cdot d^{(0)}(0, 0)$ | $x_0^{(0)} \cdot d^{(0)}(1, 0)$ | $\cdots$ | $x_0^{(2)} \cdot d^{(2)}(N_d-1, 0)$ |

## FIG. 26

BASE STATION CONTROLLER | BASE STATION A | BASE STATION B | OTHER BASE STATIONS | MOBILE STATION

PILOT SYMBOL OF PERIPHERAL BASE STATION IS RECEIVED — S100

RECEIVED SIGNAL LEVELS OF RESPECTIVE BASE STATION ARE MEASURED — S101

BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL — S102

BASE STATIONS HAVING RECEIVED SIGNAL LEVEL SMALLER THAN MAXIMUM RECEIVED SIGNAL LEVEL BY 10 dB ARE EXCLUDED — S103

WHEN THE NUMBER OF SELECTED BASE STATIONS IS MORE THAN 3, BASE STATION HAVING SMALLEST RECEIVING LEVEL IS EXCLUDED — S104

ACCESS IS REQUESTED TO BASE STATION A, AND QUALITY PARAMETER IS TRANSMITTED — S105

ACCESS REQUEST IS NOTIFIED TO BASE STATION CONTROLLER FROM MOBILE STATION — S106

S107 — MODE 1 : ACCESS IS PERMITTED TO A, TRAFFIC DATA IS TRANSMITTED

FRAME CREATION : TRANSMITTED TO MOBILE STATION — S108

RECEPTION: DEMODULATION OF CONTROL CHANNEL — S109

IS RECEPTION OF CONTROL CHANNEL OF BASE STATION A OK? — S110 — NO

YES

DOES BASE STATION A INCLUDE INFORMATION ADDRESSED TO SELF STATION ? — S111 — NO

YES

DEMODULATION OF TRAFFIC CHANNEL OF BASE STATION A — S112

TRAFFIC CHANNEL OF BASE STATION A IS NOT DEMODULATED — S113

## FIG. 27

BASE STATION CONTROLLER | BASE STATION A | BASE STATION B | OTHER BASE STATIONS | MOBILE STATION

**S100** — PILOT SYMBOL OF PERIPHERAL BASE STATION IS RECEIVED

**S101** — RECEIVED SIGNAL LEVELS OF RESPECTIVE BASE STATION ARE MEASURED

**S102** — BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL

**S103** — BASE STATIONS HAVING RECEIVED SIGNAL LEVEL SMALLER THAN MAXIMUM RECEIVED SIGNAL LEVEL BY 10 dB ARE EXCLUDED

SELECT BASE STATIONS A AND B

**S104** — WHEN THE NUMBER OF SELECTED BASE STATIONS IS MORE THAN 3, BASE STATION HAVING SMALLEST RECEIVING LEVEL IS EXCLUDED

ACCESS REQUEST AND QUALITY PARAMETER ARE TRANSMITTED TO BASE STATIONS A AND B — **S200**

**S201** — ACCESS REQUEST IS NOTIFIED TO BASE STATION CONTROLLER FROM MOBILE STATION

ACCESS REQUEST IS NOTIFIED TO BASE STATION CONTROLLER FROM MOBILE STATION — **S202**

**S203** — DOES TRAFFIC HAVE ALLOWANCE ?
NO (A)
YES **S204**

MODE 2: ACCESS IS PERMITTED TO A AND B, TRAFFIC DATA IS TRANSMITTED

FRAME CREATION: TRANSMITTED TO MOBILE STATION — **S205**

FRAME CREATION : TRANSMITTED TO MOBILE STATION — **S206**

**S207** — SIMULTANEOUS RECEPTION : DEMODULATION OF CONTROL CHANNEL

**S208** — IS RECEPTION OF CONTROL CHANNEL OF BASE STATION A(B) OK?
NO
YES

**S209** — DOES BASE STATION A(B) INCLUDE INFORMATION ADDRESSED TO SELF STATION ?
NO
YES

**S210** — DEMODULATION OF TRAFFIC CHANNEL OF BASE STATION A(B)

**S211** — TRAFFIC CHANNEL OF BASE STATION A(B) IS NOT DEMODULATED

## FIG. 28

BASE STATION CONTROLLER | BASE STATION A | BASE STATION B | OTHER BASE STATIONS | MOBILE STATION

(A) ──────── S220

```
MODE 3 : ACCESS IS
PERMITTED TO (A)
HAVING BETTER
CHANNEL CONDITION,
TRAFFIC DATA IS
TRANSMITTED
```

S221

```
FRAME CREATION :
TRANSMITTED TO
MOBILE STATION
```

S222

```
SIMULTANEOUS
RECEPTION :
DEMODULATION OF
CONTROL CHANNEL
```

S223

```
IS RECEPTION OF
CONTROL CHANNEL
OF BASE STATION
A(B) OK ?
```
NO

YES

S224

```
DOES BASE
STATION A(B) INCLUDE
INFORMATION ADDRESSED
TO SELF STATION ?
```
NO FOR B

YES FOR A

```
DEMODULATION OF
TRAFFIC CHANNEL
OF BASE STATION A
```
S225

```
TRAFFIC CHANNEL OF
BASE STATION B IS
NOT DEMODULATED
```
S226

## FIG. 29

| BASE STATION CONTROLLER | BASE STATION A | BASE STATION B | OTHER BASE STATIONS | MOBILE STATION |

**~S100** PILOT SYMBOL OF PERIPHERAL BASE STATION IS RECEIVED

**S101** RECEIVED SIGNAL LEVELS OF RESPECTIVE BASE STATION ARE MEASURED

**S102** BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0~#3) SO THAT 4 BASE STATIONS ARE SELECTED IN TOTAL

SELECT BASE STATIONS A, B. C AND D

**301** SELECT BASE STATION HAVING THE MAXIMUM LEVEL

SELECT BASE STATION A

**S303** ACCESS REQUEST IS NOTIFIED TO BASE STATION CONTROLLER FROM MOBILE STATION

ACCESS IS REQUESTED TO BASE STATION A, QUALITY PARAMETER OF BASE STATION A IS TRANSMITTED TOGETHER WITH QUALITY PARAMETERS OF OTHER BASE STATIONS (B, C AND D)

**302**

**S304** DETERMINE BASE STATION TO WHICH TRANSMISSION IS CARRIED OUT IN CONSIDERATION OF TRAFFICS AND COMMUNICATION PATH QUALITY PARAMETERS OF A PLURALITY OF BASE STATIONS

A IS DETERMINED

**S307** SIMULTANEOUS RECEPTION: DEMODULATION OF CONTROL CHANNEL

MODE 1 : ACCESS IS PERMITTED TO A, TRAFFIC DATA IS TRANSMITTED

**S305**

FRAME CREATION: TRANSMITTED TO MOBILE STATION

**S306**

**S308** IS RECEPTION OF CONTROL CHANNEL OF BASE STATION A(B, C AND D) OK? — NO

YES

**S309** DOES BASE STATION A(B, C AND D) INCLUDE INFORMATION ADDRESSED TO SELF STATION ? — NO

YES **S310** DEMODULATION OF TRAFFIC CHANNELS OF BASE STATION A

**S311** TRAFFIC CHANNELS OF BASE STATIONS (B,C AND D) ARE NOT DEMODULATED

## FIG. 30

BASE STATION
CONTROLLER

BASE
STATION A

BASE
STATION B

OTHER BASE
STATIONS

MOBILE STATION

PILOT SYMBOL OF
PERIPHERAL BASE
STATION IS RECEIVED —S100

RECEIVED SIGNAL LEVELS OF
RESPECTIVE BASE STATION
ARE MEASURED ⌐S101

BASE STATION HAVING THE MAXIMUM
RECEIVED SIGNAL LEVEL IS SELECTED
FOR EACH BASE STATION IDENTIFICATION
NUMBER FROM A PLURALITY OF BASE
STATIONS HAVING THE SAME BASE
STATION IDENTIFICATION NUMBERS
(#0-#3) SO THAT 4 BASE STATIONS ARE
SELECTED IN TOTAL ⌐S102

SELECT BASE STATIONS
A, B, C AND D

301⌐ SELECT BASE STATION HAVING
THE MAXIMUM LEVEL

SELECT
BASE STATION A

S303

ACCESS REQUEST
IS NOTIFIED TO
BASE STATION
CONTROLLER FROM
MOBILE STATION

ACCESS IS REQUESTED TO BASE
STATION A, QUALITY PARAMETER OF
BASE STATION A IS TRANSMITTED
TOGETHER WITH QUALITY PARAMETERS
OF OTHER BASE STATIONS (B, C AND D)

302

S304

DETERMINE BASE
STATION TO WHICH
TRANSMISSION
IS CARRIED OUT IN
CONSIDERATION OF
TRAFFICS AND
COMMUNICATION PATH
QUALITY PARAMETERS
OF A PLURALITY OF
BASE STATIONS

A AND B ARE
DETERMINED

MODE 2 : ACCESS IS
PERMITTED TO A AND
B, TRAFFIC DATA IS
TRANSMITTED

S320

FRAME CREATION :
TRANSMITTED TO
MOBILE STATION

S321

FRAME CREATION :
TRANSMITTED TO
MOBILE STATION

S322

SIMULTANEOUS RECEPTION :
DEMODULATION OF
CONTROL CHANNEL ⌐S307

S308
IS RECEPTION
OF CONTROL CHANNEL OF
BASE STATION A(B, C AND D)
OK?

NO

YES

S309
DOES BASE
STATION A(B, C AND D)
INCLUDE INFORMATION
ADDRESSED TO
SELF STATION ?

NO

YES

S310
DEMODULATION OF TRAFFIC
CHANNELS OF BASE STATION A AND B

TRAFFIC CHANNELS OF
BASE STATIONS C AND
D ARE NOT DEMODULATED ⌐S311

## FIG. 31

BASE STATION CONTROLLER | BASE STATION A | BASE STATION B | OTHER BASE STATIONS | MOBILE STATION

PILOT SYMBOL OF PERIPHERAL BASE STATION IS RECEIVED — S100

RECEIVED SIGNAL LEVELS OF RESPECTIVE BASE STATION ARE MEASURED — S101

BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL — S102

BASE STATIONS HAVING RECEIVED SIGNAL LEVEL SMALLER THAN MAXIMUM RECEIVED SIGNAL LEVEL BY 10 dB ARE EXCLUDED — S103

S104 — SELECT BASE STATIONS A AND B

WHEN THE NUMBER OF SELECTED BASE STATIONS IS MORE THAN 3, BASE STATION HAVING SMALLEST RECEIVING LEVEL IS EXCLUDED

ACCESS REQUEST AND QUALITY PARAMETER ARE TRANSMITTED TO BASE STATIONS A AND B — S200

S201 — ACCESS REQUEST IS NOTIFIED TO BASE STATION CONTROLLER FROM MOBILE STATION

ACCESS REQUEST IS NOTIFIED TO BASE STATION CONTROLLER FROM MOBILE STATION — S202

S400 — REAL TIME DATA (PRIORITY DATA)? — NO (B)

YES

MODE 2 : ACCESS IS PERMITTED TO A AND B, TRAFFIC DATA IS TRANSMITTED — S204

FRAME CREATION : TRANSMITTED TO MOBILE STATION — S205

FRAME CREATION : TRANSMITTED TO MOBILE STATION — S206

SIMULTANEOUS RECEPTION : DEMODULATION OF CONTROL CHANNEL — S207

IS RECEPTION OF CONTROL CHANNEL OF BASE STATION A(B) OK? — S208 — NO

YES

DOES BASE STATION A(B) INCLUDE INFORMATION ADDRESSED TO SELF STATION ? — S209 — NO

YES

DEMODULATION OF TRAFFIC CHANNEL OF BASE STATION A(B) — S210

TRAFFIC CHANNEL OF BASE STATION A(B) IS NOT DEMODULATED — S211

## FIG. 32

| BASE STATION CONTROLLER | BASE STATION A | BASE STATION B | OTHER BASE STATIONS | MOBILE STATION |

(B) — S220

MODE 3 : ACCESS IS PERMITTED TO (A) HAVING BETTER CHANNEL CONDITION, TRAFFIC DATA IS TRANSMITTED

S221

FRAME CREATION : TRANSMITTED TO MOBILE STATION

S222

SIMULTANEOUS RECEPTION : DEMODULATION OF CONTROL CHANNEL

S223

IS RECEPTION OF CONTROL CHANNEL OF BASE STATION A(B) OK ? — NO

YES

S224

DOES BASE STATION A(B) INCLUDE INFORMATION ADDRESSED TO SELF STATION ? — NO FOR B

YES FOR A

S225

DEMODULATION OF TRAFFIC CHANNEL OF BASE STATION A

S226

TRAFFIC CHANNEL OF BASE STATION B IS NOT DEMODULATED

# FIG. 33

BASE STATION CONTROLLER    BASE STATION A    BASE STATION B    OTHER BASE STATIONS    MOBILE STATION

PILOT SYMBOL OF PERIPHERAL BASE STATION IS RECEIVED —S100

S101
RECEIVED SIGNAL LEVELS OF RESPECTIVE BASE STATION ARE MEASURED

S102
BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL

SELECT BASE STATIONS A, B. C AND D

301
SELECT BASE STATION HAVING THE MAXIMUM LEVEL

SELECT BASE STATION A

S303
ACCESS REQUEST IS NOTIFIED TO BASE STATION CONTROLLER FROM MOBILE STATION

ACCESS IS REQUESTED TO BASE STATION A, QUALITY PARAMETER OF BASE STATION A IS TRANSMITTED TOGETHER WITH QUALITY PARAMETERS OF OTHER BASE STATIONS (B, C AND D)

302

S330
DETERMINE BASE STATION TO WHICH TRANSMISSION IS CARRIED OUT IN CONSIDERATION OF COMMUNICATION PATH QUALITY PARAMETER AND QOS (REAL TIME PROPERTY, DEGREE OF PRIORITY)

A IS DETERMINED

S307
SIMULTANEOUS RECEPTION: DEMODULATION OF CONTROL CHANNEL

MODE 1 : ACCESS IS PERMITTED TO A, TRAFFIC DATA IS TRANSMITTED

S305

FRAME CREATION : TRANSMITTED TO MOBILE STATION

S306

S308
IS RECEPTION OF CONTROL CHANNEL OF BASE STATION A(B, C AND D) OK?    NO

YES

S309
DOES BASE STATION A(B, C AND D) INCLUDE INFORMATION ADDRESSED TO SELF STATION ?    NO

YES    S310
DEMODULATION OF TRAFFIC CHANNELS OF BASE STATION A

TRAFFIC CHANNELS OF BASE STATIONS (B,C AND D) ARE NOT DEMODULATED —S311

66

## FIG. 34

| BASE STATION CONTROLLER | BASE STATION A | BASE STATION B | OTHER BASE STATIONS | MOBILE STATION |

**MOBILE STATION**

S100 — PILOT SYMBOL OF PERIPHERAL BASE STATION IS RECEIVED

S101 — RECEIVED SIGNAL LEVELS OF RESPECTIVE BASE STATION ARE MEASURED

S102 — BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL

SELECT BASE STATIONS A, B, C AND D

301 — SELECT BASE STATION HAVING THE MAXIMUM LEVEL

SELECT BASE STATION A

S303

ACCESS REQUEST IS NOTIFIED TO BASE STATION CONTROLLER FROM MOBILE STATION

302 — ACCESS IS REQUESTED TO BASE STATION A, QUALITY PARAMETER OF BASE STATION A IS TRANSMITTED TOGETHER WITH QUALITY PARAMETERS OF OTHER BASE STATIONS (B, C AND D)

S340 — DETERMINE BASE STATION TO WHICH TRANSMISSION IS CARRIED OUT IN CONSIDERATION OF COMMUNICATION PATH QUALITY PARAMETER AND QOS (REAL TIME PROPERTY, DEGREE OF PRIORITY)

A AND B ARE DETERMINED

S320 — MODE 2 : ACCESS IS PERMITTED TO A AND B, TRAFFIC DATA IS TRANSMITTED

S321 — FRAME CREATION : TRANSMITTED TO MOBILE STATION

S322 — FRAME CREATION : TRANSMITTED TO MOBILE STATION

S307 — SIMULTANEOUS RECEPTION : DEMODULATION OF CONTROL CHANNEL

S308 — IS RECEPTION OF CONTROL CHANNEL OF BASE STATION A(B, C AND D) OK? — NO

YES

S309 — DOES BASE STATION A(B, C AND D) INCLUDE INFORMATION ADDRESSED TO SELF STATION ? — NO

YES

S310 — DEMODULATION OF TRAFFIC CHANNELS OF BASE STATION A AND B

S311 — TRAFFIC CHANNELS OF BASE STATIONS C AND D ARE NOT DEMODULATED

# FIG. 35

BASE STATION CONTROLLER    BASE STATION A    BASE STATION B    OTHER BASE STATIONS    MOBILE STATION

PILOT SYMBOL OF PERIPHERAL BASE STATION IS RECEIVED  ~S100

S101

RECEIVED SIGNAL LEVELS OF RESPECTIVE BASE STATION ARE MEASURED

S102

BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL

SELECT BASE STATIONS A, B, C AND D

301

SELECT BASE STATION HAVING THE MAXIMUM LEVEL

SELECT BASE STATION A

ACCESS IS REQUESTED TO BASE STATION A, QUALITY PARAMETER OF BASE STATION A IS TRANSMITTED TOGETHER WITH QUALITY PARAMETERS OF OTHER BASE STATIONS (B, C AND D)

S303

ACCESS REQUEST IS NOTIFIED TO BASE STATION CONTROLLER FROM MOBILE STATION

302

S330

DETERMINE BASE STATION TO WHICH TRANSMISSION IS CARRIED OUT IN CONSIDERATION OF COMMUNICATION PATH QUALITY PARAMETER AND QOS (REAL TIME PROPERTY, DEGREE OF PRIORITY)

A IS DETERMINED

MODE 1 : ACCESS IS PERMITTED TO A, TRAFFIC DATA IS TRANSMITTED

S305

FRAME CREATION : TRANSMITTED TO MOBILE STATION

S306

S351

SIMULTANEOUS RECEPTION : CONTROL CHANNEL OF BASE STATION A IS DEMODULATED AND BASE STATION HAVING INFORMATION ADDRESSED TO SELF STATION IS SELECTED

SELECT BASE STATION A

TRAFFIC CHANNEL OF BASE STATION A IS DEMODULATED  ~S352

## FIG. 36

BASE STATION CONTROLLER | BASE STATION A | BASE STATION B | OTHER BASE STATIONS | MOBILE STATION

PILOT SYMBOL OF PERIPHERAL BASE STATION IS RECEIVED — S100

RECEIVED SIGNAL LEVELS OF RESPECTIVE BASE STATION ARE MEASURED ⌐S101

BASE STATION HAVING THE MAXIMUM RECEIVED SIGNAL LEVEL IS SELECTED FOR EACH BASE STATION IDENTIFICATION NUMBER FROM A PLURALITY OF BASE STATIONS HAVING THE SAME BASE STATION IDENTIFICATION NUMBERS (#0-#3) SO THAT 4 BASE STATIONS ARE SELECTED IN TOTAL ⌐S102

SELECT BASE STATIONS A, B. C AND D

301— SELECT BASE STATION HAVING THE MAXIMUM LEVEL

SELECT BASE STATION A

S303 — ACCESS IS REQUESTED TO BASE STATION A, QUALITY PARAMETER OF BASE STATION A IS TRANSMITTED TOGETHER WITH QUALITY PARAMETERS OF OTHER BASE STATIONS (B, C AND D)

302

ACCESS REQUEST IS NOTIFIED TO BASE STATION CONTROLLER FROM MOBILE STATION

S330 — DETERMINE BASE STATION TO WHICH TRANSMISSION IS CARRIED OUT IN CONSIDERATION OF COMMUNICATION PATH QUALITY PARAMETER AND QOS (REAL TIME PROPERTY, DEGREE OF PRIORITY)

A AND B ARE DETERMINED

MODE 2 : ACCESS IS PERMITTED TO A AND B, TRAFFIC DATA IS TRANSMITTED

S320

FRAME CREATION : TRANSMITTED TO MOBILE STATION

S321

FRAME CREATION : TRANSMITTED TO MOBILE STATION

S322

SIMULTANEOUS RECEPTION: CONTROL CHANNEL OF BASE STATION A IS DEMODULATED AND BASE STATION HAVING INFORMATION ADDRESSED TO SELF STATION IS SELECTED ⌐S351

SELECT BASE STATION A AND B

TRAFFIC CHANNEL OF BASE STATION A AND B ARE DEMODULATED ⌐S352

## FIG. 37

500        501        502

1
2

TRANSMISSION
SYMBOL

S/P    •    IFFT    •    P/S
•            •
Nf                          503

•                           ADD GI

Nc

(a) TRANSMITTER

505

TIMING
DETECTION

506        507        508

504

REMOVE GI    S/P    •    FFT    •    P/S
•        •
•

(b) RECEIVER

## FIG. 38

GI

OFDM SYMBOL

COPY

## FIG. 39

FREQUENCY (SUBCARRIER)

TIME (SYMBOL)

## FIG. 40

FREQUENCY (SUBCARRIER)

FREQUENCY (SUBCARRIER)

$SF_{time}=2$

$SF_{freq}=4$

TIME (SYMBOL)

(a)

$SF_{freq}=2$

TIME (SYMBOL)

(b)

## FIG. 41

(a) TRANSMITTER

(b) RECEIVER

**INTERNATIONAL SEARCH REPORT**

| | International application No. |
|---|---|
| | PCT/JP2006/315169 |

A.  CLASSIFICATION OF SUBJECT MATTER
*H04B7/26*(2006.01)i, *H04B1/707*(2006.01)i, *H04J11/00*(2006.01)i, *H04Q7/22*
(2006.01)i, *H04Q7/28*(2006.01)i, *H04Q7/38*(2006.01)i

According to International Patent Classification (IPC) or to both national classification and IPC

B.  FIELDS SEARCHED

Minimum documentation searched (classification system followed by classification symbols)
H04B7/26, H04B1/707, H04J11/00, H04Q7/00-7/38

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2005-6358 A  (NTT Docomo Inc.),<br>06 January, 2005 (06.01.05),<br>Full text<br>& WO 2001/048952 A1     & EP 1162766 A1<br>& CN 1341301 A           & US 2003/0036361 A1 | 10,11<br>1-9,12-47 |
| X<br>A | JP 2001-36964 A  (Hitachi, Ltd.),<br>09 February, 2001 (09.02.01),<br>Full text<br>& US 6975604 B1 | 10,11<br>1-9,12-47 |
| X<br>Y<br>A | JP 2003-32725 A  (NTT Docomo Inc.),<br>31 January, 2003 (31.01.03),<br>Par. Nos. [0007] to [0014]<br>& EP 1278389 A1       & CA 2393853 A1<br>& US 2003/0017838 A1   & KR 3009193 A<br>& CN 1398059 A | 31<br>32<br>33-47 |

[X]  Further documents are listed in the continuation of Box C.     [ ]  See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>08 November, 2006 (08.11.06) | Date of mailing of the international search report<br>14 November, 2006 (14.11.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/315169 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-112347 A  (Toshiba Corp.),<br>12 April, 2002 (12.04.02),<br>Abstract<br>(Family: none) | 32 |
| A | JP 2002-112302 A  (NEC Corp.),<br>12 April, 2002 (12.04.02),<br>Full text<br>(Family: none) | 33 |
| A | JP 2001-36939 A  (NEC Corp.),<br>09 February, 2001 (09.02.01),<br>Full text<br>& WO 2001/008433 A1      & AU 200063134 A<br>& EP 1204284 A1        & KR 2002012635 A<br>& CN 1373975 A         & BR 200013044 A | 1-47 |
| A | JP 2005-39722 A  (Nippon Telegraph And<br>Telephone Corp.),<br>10 February, 2005 (10.02.05),<br>Par. Nos. [0025], [0026]<br>(Family: none) | 1-9,12-30 |

Form PCT/ISA/210 (continuation of second sheet) (April 2005)

## INTERNATIONAL SEARCH REPORT

International application No.

PCT/JP2006/315169

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    The inventions of claims 1-9, 12-30 relate to a first mode for communication
between one base station and a mobile station and a second mode used when
a communication environment is not preferable, for communication with a
plurality of base stations.
    The inventions of claims 10, 11 relate to communication resource decision
means for deciding how much data is to be delivered to which of the base
stations whose controllers have received an access request.

    (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**INTERNATIONAL SEARCH REPORT**

International application No.

PCT/JP2006/315169

Continuation of Box No.III of continuation of first sheet(2)

The inventions of claims 31-47 relate to selection of the final base station to be connected according to a traffic amount of each base station and a communication path quality when a mobile station has sent an access request to a base station controller via one ore more base stations.

Accordingly, the inventions of claims 1-47 do not satisfy the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004158901 A

### Non-patent literature cited in the description

- **NAGATE et al.** An Examination of Common Control Channel Synchronization in SCS-MC-CDMA System. *General Assembly of The Institute of Electronics, Information and Communication Engineers,* 2004, vol. B-5-81
- **KISIYAMA et al.** Result of Outdoor Experiment of Adaptive Modulation/ Demodulation/Channel Coding in Downlink VSF-OFCDM Broadband Wireless Access. *General Assembly of The Institute of Electronics, Information and Communication Engineers,* 2004, vol. B-5-94
- **KEVIN L. BAUM.** Synchronous Coherent Othogonal Frequency Division Multiplexing System, Method, Software and Device. *VTC'99,* 1998, 2222-2226